# EUROPEAN PATENT APPLICATION

(11) **EP 0 837 400 A2**
(43) Date of publication of application: **22.04.1998**
(21) Application number: 97101549.0
(22) Date of filing: 31.01.1997
(51) Int. Cl.: G06F 17/22

(54) **Structured data and document processing apparatus and method**

(30) Priority: 18.10.1996 JP 297425/96
(71) Applicant: FUJI XEROX CO., LTD., Minato-ku, Tokyo (JP)
(72) Inventor: Hayashi, Koichi, Ashigarakami-gun, Kanagawa (JP)
(74) Representative: Hoffmann, Eckart, Dipl.-Ing.

(57) **Abstract**

A structured data or document processing system allows for recovery of an old document or collaborative writing without difficulties, even if authors edits a document at will without any limitation of editing. The system comprises a logical unit storing device 2 for storing a logical unit, which is either a content unit representing a portion of contents of a structured document represented as a tree structure or a reference unit representing the structure which directly descends from the reference unit in the structured document; a logical unit group storing device 3 for storing a logical unit group, which is a set of every logical unit which directly descends from one particular reference unit in the tree structure; the reference unit referencing a group set, which is a set of logical unit groups each of which is directly descending to the reference unit; a document editing device 5 for editing the structured document; a logical unit group creating device 6 for creating a new logical unit group in accordance with the editing of the structured document by the document editing device 5; and a reference associating device 7 for associating the logical unit group created by the logical unit group creating device 6 with the appropriate group set.

Another system for processing structured data represented as a graph structure composed of at least one node and link, comprises a node storing device 20 for storing information of the node of the structured data; a link storing device 20 for storing link information representing the relation of adjacency between two nodes of the structured data; a link association storing device 21 for storing at least one link set, which is a set of every link which is started from a particular node and is related to a particular editing process, and information of positioning relation among every link in each link set; a current structure constructing device 20 for constructing current structured data to be processed by selecting one link set from a set of link sets each of which has a link whose starting node is the same; an editing device 22 for editing the link included in the current structured data constructed by the current structure constructing device 20; and a registration device 24 for creating a link set including the link edited by the editing device 22, and for registering the created link set into the link association storing device 21.

## Description

This invention relates to a data processing apparatus and method for creating, editing and storing structured data forming a tree structure, and more particularly, a data processing apparatus and method to enable recovery of old versions of data or smooth collaborative writing, even if each author is allowed to edit data at will without any limitation on the data editing.

Further, this invention relates to a document processing apparatus and method for creating, editing and storing documents of electronic data, and more particularly, a document processing apparatus and method to enable recovery of old versions of a document or smooth collaborative writing, even if each author is allowed to edit documents at will without any limitation on the document editing.

Commonly, when a set of document information represented as a file or the like, is repeatedly updated, an art which guarantees to retrieve the old state of a document satisfying a certain condition is called version management. The state of the old document is called a version. The version management enables recovery of the old states of a document and further supports collaborative writing carried out by a plurality of authors.

Conventionally, the version management is carried out for a unit, which is a set of information represented as a file or the like. When a plurality of authors collaborate in editing a file, the collaboration is managed under such restrictions as preventing the plurality of authors from writing to the same file at the same time.

When writing an extremely large size document, or when a document is being written by a plurality of authors, however, it is convenient to treat logical portions like chapters or sections as editing units of the document. Therefore, there are inventions which enable a plurality of authors to collaborate in writing, by defining the structure of a document, managing versions of every portion of the document independently, and setting an agreement to determine an assignment of each author, or setting a limitation to prohibit a plurality of authors from editing the same portion at the same time.

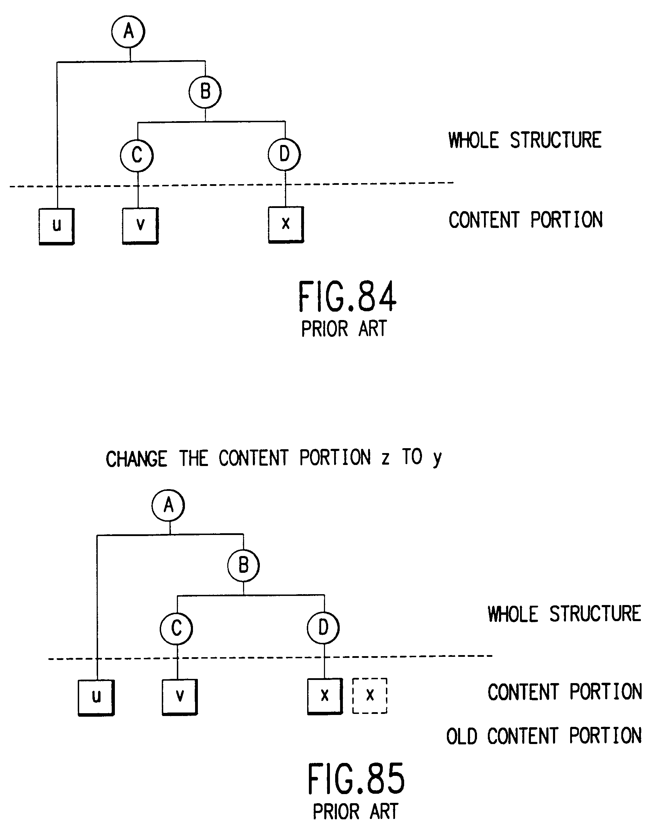

The conventional version management for a structured document is explained in detail by referring to Figs. 84 through 89.

The structure of a document is represented by an ordered tree structure, which includes nodes, each of which represents a partial unit such as a chapter or a section, and links, each of which represents a super-subordinate relationship between two nodes. Each leaf node of the tree includes content (data presented in the partial unit such as chapter or a section). That is to say, in the example of the document structure in Fig. 84, node A represents a root of the document, node B represents a chapter, nodes C and D represent sections, and leaf nodes (u), (v) and (x) represent content portions, each of which includes data content such as text.

Since a partial unit such as a chapter or a section is defined as a part relatively located in the whole structure of the document, if the whole structure of the document is changed, the unit of the version management becomes uncertain. For this reason, the conventional version management of the document structure fixes the whole structure of the document and provides the version management of the content portion.

Further, when the editing process, such as creating a new content portion and replacing the existing content portion by the created one, is carried out, as shown in Fig. 85, the existing content portion (x) is replaced by the new content portion (y), and the old content portion (x) is stored and managed with the position of the tree where it existed. To recover the old state of the document (the state before editing), the new content portion (y) is simply replaced by the old content portion (x) again. In this manner, the original objective of version recovery is accomplished.

For the reason of version unit uncertainty described above, the change of the whole structure of the document is not managed by the above-described version management. That is to say, if the whole structure of the document is changed, it is impossible to recover the old version document by the simple replacement of the old content portion with the new one as described above.

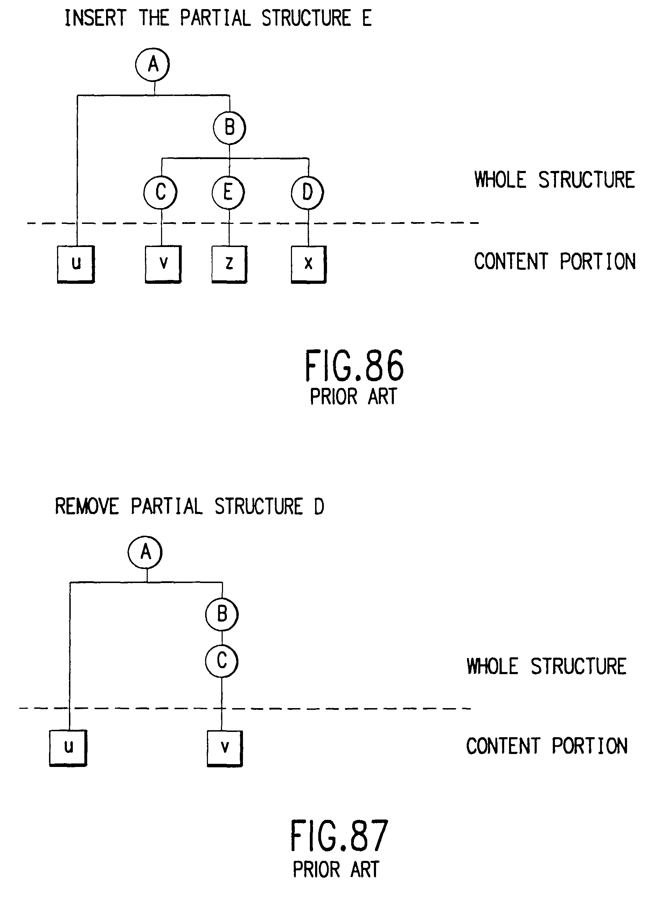

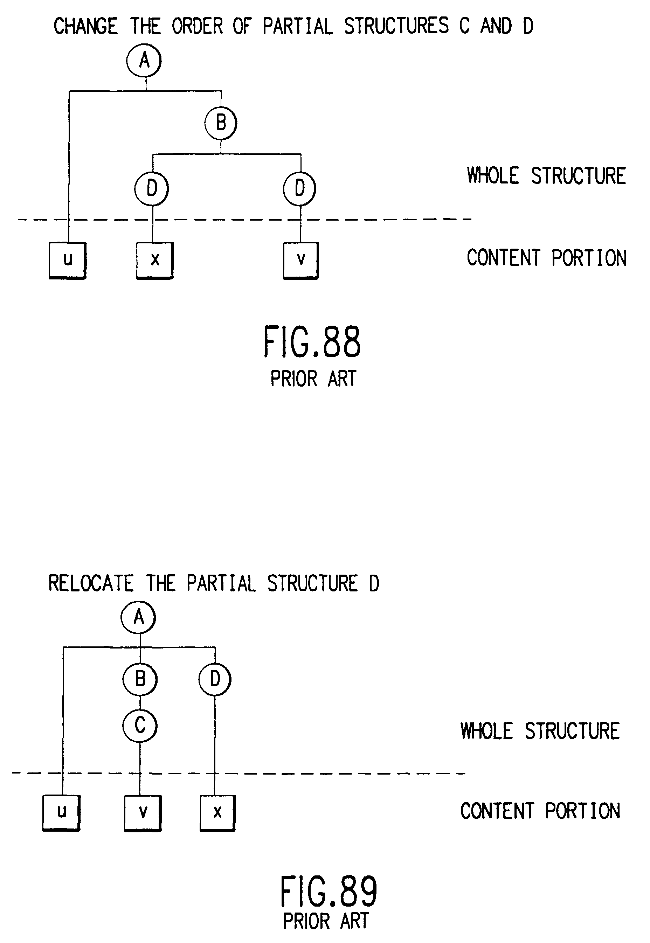

For instance, in the cases of editing illustrated in Figs. 84 through 89, the old state of the document is not recovered by the simple replacement of the content portions, because the whole structure of each document is changed. Fig. 86 shows a case of adding the content portion (z) as a new partial unit to the original document shown in Fig. 85 and of adding the partial structure (node) E corresponding to the added content portion (z) to the document structure. Fig. 87 shows a case of deleting the partial structure (node) D related to the content portion (x). Fig. 88 shows a case of alternating the order of the partial structure (node) C and the partial structure (node) D. Fig. 89 shows a case of moving the position of the partial structure (node) D corresponding to the content portion (x).

Japanese Patent Laid-Open No. Hei 6-35914 discloses a document preparation system to support collaboration in writing shared documents by using the version management of the content portions as illustrated with Fig. 85.

In this document preparation system, when a plurality of authors edits a content in the same node, a plurality of new version nodes, each of which corresponds to the content portion edited by the each author, are created. Each of the created content portions is managed by relating to the version node. Further, an access right is provided for each of the version nodes. When an author edits a content portion of the document structure, the content portion of the version node whose access right matches with the author is displayed and enabled to be edited by the author.

Japanese Patent Laid-Open No. Hei 7-44563 and Hei 6-131343 disclose a compound document processing system, which handles the compound document structure from which necessary document structures can be selected. The compound document structure of the document is represented by introducing compound nodes to the tree structure, which consist of nodes and links. When a plurality of partial structures including different contents can subordinate to the same super-ordinate structure, the shared node is compound and connected to these logical structures. Further, the attributes to identify the partial structures are appended to the compound node, and the tree structure corresponding to the required document structure can be selected from the plurality of the tree structures in accordance with the attributes.

This compound document processing system represents a document structure in a more manageable form than a system that simply divides the document structure into the whole structure and content portions. Further, the tree structure corresponding to the required document structure can be selected from the plurality of the tree structures, if necessary.

An art of version management is used in various fields other than editing of document data, such as software development and CAD databases. Management of versions of composite data structure, where each of the components further has versions, is a significant issue for an art of version management of composite data structure.

The following conventional arts are known regarding this kind of version management of composite data structure.

R.Katz, 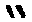 Toward a Unified Framework for Version Modeling in Engineering Databases*"*, ACM Computing Surveys, vol.22, no. 4, 1990, which all-inclusively describes the version management technique of the CAD database having a complicated structure, shows arts which call versions of whole structure configurations and manages them separately from versions of the components. This reference shows many kinds of arts of version management. The objective of version management of these arts is recovery of old states of structures. For instance, this reference shows two methods to recover old states, that is, a method using a derivation tree and method using layers.

The method using a derivation tree manages the history of change as a derivation tree which indicates the association which version derives from which version, and recovers an old version by selecting the associated node of the derivation tree. Since this method enables to store only differences of a version from the directly preceding version by using a derivation tree, memory capacities which the version management requires can be decreased. Sten Minör and Boris Magnusson, 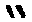 A Model for Semi-(a) Synchronous Collaborative Editing*"*, proceedings of ECSCW*'*92, pp.219-231, 1993, shows an example that applies version management using a derivative tree to document editing.

The method using layers stores parts which are generated or updated when a change occurs, as a set called a layer, and recovers an old version by piling up the layers in appropriate order. When a pile of plural layers includes plural versions of a particular part, this method selects the version in latter layer. This method can select, therefore, a version of parts constructing the whole structure at the required time. Goldstein, 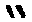 Layered Networks as a Tool for Software Development*"*, proceedings of 7th International Conference on Artificial Intelligence, pp.913-919, 1981, shows an example that applies a method using layers to version management of software.

Cellary, 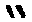 Consistency of Versions in Object-Oriented Databases*"*, proceedings of International VLDB conference, pp.432-441, 1990, which describes version management of object oriented database, shows a method to ease recovery of the whole structure of the designated version by associating parts belonging to a particular whole structure with a version name.

Osterbye, 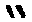 Structural and Cognitive Problems in Providing Version Control for Hypertext*"*, proceedings of ACM Conference on Hypertext (ECHT*'*92), pp33-42, 1992, which describes version management of hypertexts, shows a method to make a configuration by selecting an appropriate one which satisfies a condition, such as a date of creation, from versions of each node included in a hypertext.

Thus, the conventional version management can recover old versions of a document, if the whole structure of the document is fixed. However, in practical document editing, as shown in Figs. 86 through 89, it is not the case that the whole structure of the document is changed as well as the content portion.

Further, in the process of practical document editing, as shown in the following examples (1) through (3), after the editing of the document, there are many cases where the document before editing needs to be recovered.
(1) Retrieval of a document of a specific date
   For instance, to retrieve an old document which is already deleted, recovery of the old version of the document which was edited at the designated date is occasionally needed.
(2) Retrieval of a document used for the specific purpose.
   For instance, recovery of a version of a document, such as an interim report, which is temporarily collected and distributed in the document writing process is occasionally needed.
(3) Retrieval of a document updated by a specific person
   For instance, in the case of a plurality of authors collaborating in writing a document, to check content of the document, recovery of a version before or after a specific author updated, is occasionally needed.

Further, instead of recovering an old version, the user sometimes needs to extract a structure of document which has not been before. Generally, it is difficult to prepare structures for various requirements which will occur, since it is not possible to predict how work proceed in future. Therefore, even if plural authors begin collaborative writing of a document after they precisely determine a process of constructing the document, it is not rare that the work proceeds as planned. To get documents that satisfy the requirements, these must be reconstructed from the previous versions of documents according to unpredictable situations.

For instance, when plural authors collaboratively write a report of investigation, if one of the authors needs a document which includes the latest information written by the other author in an old logical structure created for a different objective instead of the latest logical structure, the document cannot be obtained by a recovering a structure in the past, but constructing a new structure from old parts to suit the new objective.

In conventional version management, however, the old document can be recovered on the assumption that the whole structure of the document is fixed. Thus, it is impossible to execute the recovery process as described above in the practical document processing operation.

In the prior art, by designating the versions of both the whole structure of the document and content portions, it is possible to recover the old structure of the document, even where both the whole structure and content portions of the document are changed at will. However, because the user must understand the complete record of the updating of the whole structure of the document and is forced to perform burdensome and complicated operations, it is not practical.

Furthermore, in the practical document writing process, because there are many cases where a change to a content portion assigned to one author causes changes to content portions assigned to other authors, it is desired that each author can change all content portions consistently. In other words, it could be necessary in the practical document writing process that a plurality of authors edits the same content portion at the same time, or one author changes the whole structure of the document without permission of the other authors.

As described above, it is desired that every old document of every author can be recovered, even though a plurality of the authors edits a document at will. In conventional version management, however, because the old document is recovered on the assumption that the whole structure of the document is fixed, restrictions on editing are always imposed on each author and make the writing process complicated.

In the compound document processing systems described above (Hei 7-44563 and Hei 6-131343), it is possible to recover every old document of every author by designating the attributes which are appended to the nodes. However, the user must be responsible for which and how nodes are compound or how these nodes are identified. Thus, the user is forced to execute extremely complicated operations.

Furthermore, to support collaborative writing or to recover the version of a certain time, the compound document processing system provides the functions necessary to manage a plurality of documents which have partly different contents and are written by a plurality of authors. Actually, to support collaborative writing or to recover the required version, however, complicated rules about the timing to compound nodes or the attribute to be appended to the compound node are needed. Thus, for practical use, extremely complicated operations and knowledge are required and the compound document processing system is not enough to support the recovery of version and collaborative writing.

Further, since conventional version management is the technique to choose one of the structures which existed in the past, it cannot be used for constructing a structure which suits an unpredictable new situation in accordance with the user*'*s instruction. For instance, the method using a derivation tree extracts only an old structure which is represented as a node of the derivation tree. Since the method of Cellary gives a name to a version existed in the past, it can extract only an old version existed in the past.

Although the method using layers may create a new structure which has not been before by changing an order of layers, the user cannot tell whether the required structure can be extracted, or how the layers should be ordered to extract the required structure. Accordingly, the user cannot instruct to extract an appropriate structure which suits a new situation. Although the method of Osterbye also may extract a new structure if an appropriate condition is set, it is not clarified what condition should be set to a necessary structure. Accordingly, the user cannot extract an appropriate structure which suits a new situation.

The present invention has been made in view of the above conventional circumstances. It is therefore an aspect of the invention to provide a structured data or document processing system which realizes recovery of an old document or a collaborative writing without difficulties, even if authors edit a document at will without any limitation of editing.

It is a further aspect of the invention to provide a structured data or document processing system which recovers a requested old version of a structured document without difficulties, even if the whole structure of the document is changed.

It is still a further aspect of the invention to provide a structured data or document processing system which recovers an appropriate old version of a document by a user's simple designating operation.

It is a further aspect of the invention to provide a structured data or document processing system which creates an appropriate document or data which suits an unpredictable new situation by an easy designating operation based on the documents which were created in the past.

These and other aspects, features and advantages are accomplished by the invention disclosed herein. The system comprises logical unit storing means for storing a logical unit, which is either a content unit representing a portion of contents of a structured document represented as a tree structure or a reference unit representing a structure which directly descends from the reference unit in the structured document; logical unit group storing means for storing a logical unit group, which is a set of every logical unit which directly descends from a particular reference unit in the tree structure; a reference unit referencing a group set, which is a set of logical unit groups each of which directly descends from the reference unit; document editing means for editing the structured document; logical unit group creating means for creating a new logical unit group in accordance with editing of the structured document by the document editing means; and reference associating means for associating the logical unit group created by the logical unit group creating means with the appropriate group set.

Another document processing system of this invention comprises logical unit storing means for storing a logical unit, which is either a content unit representing a portion of contents of a structured document represented as a tree structure, or a reference unit representing a structure which directly descends from the reference unit in the structured document; logical unit group storing means for storing a logical unit group, which is a set of every logical unit which directly descends from a particular reference unit in the tree structure; a reference unit referencing a group set, which is a set of logical unit groups each of which directly descends from the reference unit; selection information associating means for associating the logical unit group with selection information used for selecting the logical unit group; selection condition designating means for designating a selection condition including the selection information associated with the logical unit group; logical unit group selecting means for selecting the logical unit group from the logical unit group storing means in accordance with the selection condition designated by the selection condition designating means and the selection information associated with the logical unit group by a logical unit group associating means; document constructing means for constructing the document in accordance with the logical unit group selected by the logical unit group selecting means.

Further, a data processing system of this invention, for processing structured data represented as a graph structure composed of at least one node and link, comprises node storing means for storing information of the node of the structured data; link storing means for storing link information representing the relation of adjacency between two nodes of the structured data; link association storing means for storing at least one link set, which is a set of every link which is started from a particular node and is related to a particular editing process, and information of positioning relation among every link in each link set; current structure constructing means for constructing current structured data to be processed by selecting one link set from a set of link sets each of which has a link whose starting node is the same; editing means for editing the link included in the current structured data constructed by the current structure constructing means; and registration means for creating a link set including the link edited by the editing means, and for registering the created link set into the link association storing means.

In a preferred embodiment, the editing means inserts a new node to the current structured data and the registration means further registers information of the inserted new node to the node storing means.

In a preferred embodiment, selection information associating means associates selection information regarding the editing process with the link set created by the registration means.

In a preferred embodiment, the selection information associating means associates version information as the selection information with the link set created by the registration means and a link set included in the current structured data.

In a preferred embodiment, condition input means inputs a selection condition including the selection information associated with the link set; link set extracting means extracts at least one link set associated with the selection information which satisfies the selection condition inputted by the condition input means; and the current structure constructing means constructs the structured data to be processed in accordance with the link set extracted by the link set extracting means.

In a preferred embodiment, when the link set extracting means extracts a plurality of link sets, each of which includes a link whose starting node is a particular node, the link set extracting means further selects one link set from the extracted plurality of link sets each of which has the link whose starting node is the particular node, in accordance with a defined selection rule; and the current structure constructing means constructs the current structured data in accordance with the selected link set.

In a preferred embodiment, the link set extraction means selects the link set associated with specific user information as the selection information in accordance with the defined selection rule.

In a preferred embodiment, the link set extraction means selects the link set associated with a latest update date information as the selection information in accordance with the defined selection rule.

In a preferred embodiment, the link set extraction means selects the link set associated with specific version information as the selection information in accordance with the defined selection rule.

In a preferred embodiment, link set display means displays information to identify each of the link sets stored in the link association storing means; selection receiving means receives a selection command to specify one of the link sets displayed by the link set display means; reconstructing means instructs the current structure constructing means to reconstruct the current structured data in accordance with the link set specified by the selection command.

In a preferred embodiment, history storing means stores a history, which is a list of selection information stored at every time that the selection information associating means associates the selection information with the link set; and history display means displays the history stored by the history storing means.

Selection information can be, for instance, version information, an update date or user information of a document.
Fig. 1 is a block diagram illustrating the document processing apparatus of an embodiment according to the present invention;
Fig. 2 illustrates an organization of stream sets;
Fig. 3 illustrates an example of a document structure;
Fig. 4 illustrates an example of the document structure whose content portion is altered;
Fig. 5 illustrates an example of the document structure to which a partial structure is inserted;
Fig. 6 illustrates an example of the document structure from which a partial structure is removed;
Fig. 7 illustrates an example of the document structure in which the order of the partial structures is changed;
Fig. 8 illustrates an example of the document structure in which a partial structure is relocated;
Fig. 9 illustrates the mechanism of the stream selection;
Fig. 10 is an example of sessions of document editing;
Fig. 11 is the document editor invoked in session 1;
Figs. 12A and 12B are the document editors used for the editing operation in session 1;
Fig. 13 is an example of the document structure created in session 1;
Fig. 14 is the tool of the storing process in session 1;
Fig. 15 is an example of the document structure stored in the memory in session 1;
Fig. 16A is the document folder in session 2;
Fig. 16B is the extraction condition setting tool in session 2;
Figs. 17A and 17B are the document editors used for the editing operation in session 2;
Fig. 18 is an example of the document structure created in session 2;
Fig. 19 is an example of the document structure stored in the memory in session 2;
Figs. 20A and 20B are the document editors used for the editing operation in session 3;
Fig. 21 is an example of the document structure created in session 3;
Fig. 22 is an example of the document structure stored in the memory in session 3;
Fig. 23 is the extraction condition setting tool invoked in session 4;
Fig. 24 is the document editor used for the editing operation in session 4;
Fig. 25 is the document structure created in session 4;
Fig. 26 is the tool of storing process in session 4;
Fig. 27 is an example of the document structure stored in the memory in session 4;
Figs. 28A and 28B are the document editors used for the editing operation in session 5;
Fig. 29 is an example of the document structure created in session 5;
Fig. 30 is an example of the document structure stored in the memory in session 5;
Figs. 31A and 31B are extraction condition setting tools invoked in session 6;
Figs. 32A and 32B are the document editors used for the reference operation in session 6;
Figs. 33A and 33B are examples of the document structure created in session 6;
Fig. 34 is the document editor used for the editing operation in session 7;
Fig. 35 is the tool of storing process in session 7;
Fig. 36 is an example of the document structure stored in the memory in session 7;
Fig. 37 is a flowchart illustrating an example of the procedure of the document extraction and display process;
Fig. 38 is a flowchart illustrating an example of the procedure of the lower level structure extraction and display process;
Fig. 39 is a flowchart illustrating an example of the procedure of the stream display process;
Fig. 40 is a flowchart illustrating an example of the procedure of the stream selection process;
Fig. 41 is a flowchart illustrating an example of the procedure of the document re-selecting and display process;
Fig. 42 is a flowchart illustrating an example of the procedure of the document storing process;
Fig. 43 is an example of the other forms of display of the document structure;
Fig. 44 is another example of the other forms of display of the document structure;
Figs. 45A, 45B and 45C illustrate variations of the data structure regarding the structured data processing of the present invention;
Figs. 46A, 46B and 46C illustrate variations of the data structure regarding the structured data processing of the present invention;
Figs. 47A, 47B and 47C illustrate variations of the data structure regarding the structured data processing of the present invention;
Fig. 48 is a block diagram illustrating the structured data processing apparatus according to the present invention;
Fig. 49 is an example of a window displayed by the extraction designating means;
Fig. 50 is an example of a window displayed by the history display means;
Fig. 51 is an example of a window displayed by the editing means;
Fig. 52 is an example of the editing history;
Fig. 53 is an example of the derivation tree structure;
Figs. 54A, 54B and 54C are examples of the document data structures currently edited;
Figs. 55, 56 and 57 are examples of the data structures of the hyper structure;
Figs. 58A and 58B are examples of the new document data to be generated;
Fig. 59 is an example of a window displayed by the history display means;
Fig. 60 is an example of a window displayed by the extraction designating means;
Fig. 61 is an example of a window displayed by the editing means;
Fig. 62 is an example of a window displayed by the extraction designating means;
Fig. 63 is an example of a window displayed by the editing means;
Fig. 64 is an example of a window displayed by the extraction designating means;
Fig. 65 is an example of a window displayed by the editing means;
Fig. 66 is an example of a window displayed by the extraction designating means;
Fig. 67 is an example of a window displayed by the editing means;
Fig. 68 is an example of a window displayed by the extraction designating means;
Fig. 69 is an example of a window displayed by the editing means;
Fig. 70 is an example of a window displayed by the extraction designating means;
Fig. 71 is an example of a window displayed by the editing means;
Fig. 72 is an example of a window displayed by the extraction designating means;
Fig. 73 is an example of a window displayed by the editing means;
Fig. 74 is an example of a window displayed by the editing means;
Fig. 75A is an example of the data structure of a current structure;
Figs. 75B and 75C are examples of the, data structures of a hyper structure;
Fig. 76 is an example of the drawing editing process according to the present invention;
Figs. 77A through 77F are examples of data structures in of the drawing editing;
Figs. 78A is an example of the data structure of a hyper structure;
Fig. 78B illustrates an example of a selection condition;
Figs. 79A, 79B and 79C are examples of extracted drawing data structures;
Fig. 80 is an example of the drawing editing process according to the present invention;
Fig. 81 is another example of the drawing editing process according to the present invention;
Fig. 82 is an example of a history of searching hypertexts;
Fig. 83 illustrates an extraction process of hypertexts;
Fig. 84 illustrates the document structure according to the prior art;
Fig. 85 illustrates the document structure whose content portion is changed according to the prior art;
Fig. 86 illustrates the document structure into which a partial structure is inserted according to the prior art;
Fig. 87 illustrates the document structure from which a partial structure is deleted according to the prior art;
Fig. 88 illustrates the document structure in which the order of the partial structures is changed according to the prior art;
Fig. 89 illustrates the document structure in which a partial structure is relocated according to the prior art.

Additional aspects and advantages of the invention will be set forth, in part, in the description that follows and, in part, will be obvious from the description, or may be learned by practice of the invention. The aspects and advantages of the invention may be realized and attained by means of the instrumentalities and combinations particularly pointed out in the appended claims. It will be understood that each of the features described herein can be taken separately or jointly.

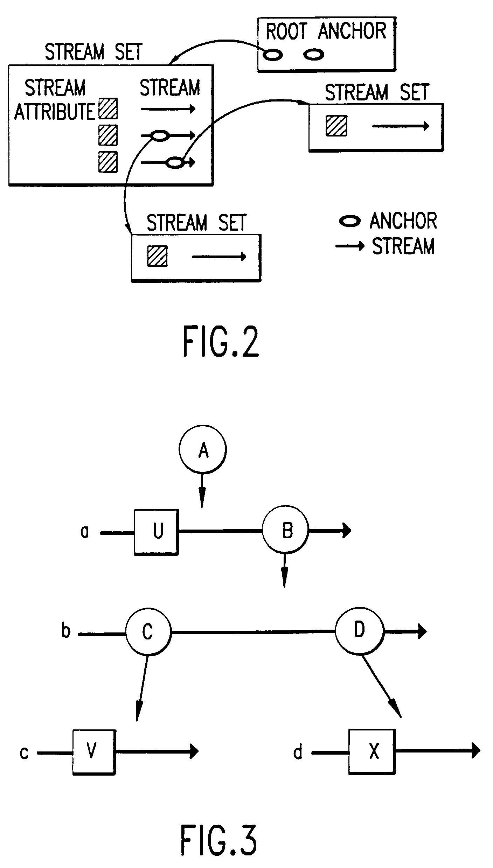

At the beginning of the explanation of a first embodiment of a document processing apparatus and method according to the present invention, a structure of a structured document and version management in this embodiment are explained with reference to Figs. 3 through 8.

In this embodiment, a content unit, which is a part of a structured document of tree structure, is called a content portion. A reference unit, which indicates a relative position of partial structures within a lower level of the structured document, is called an anchor. A unit including at least one content portion or an anchor is called a logical unit. A group of the logical units, which are positioned in a particular level of the tree structure, is called a stream. Selection information, which is used to select a group of the logical unit, is called a stream attribute.

This embodiment adopts the structured document represented as a tree structure composed of streams, and treats a stream as a unit of the version management, to deal with the whole structure and a partial structure of the document in the same manner. That is to say, this embodiment can carry out any editing operation of creating, changing or recovering document structures by combining primitive operations in association with general functions of manipulating the structure of a document and operations of creating appropriate content portions or appropriate streams. The primitive operation explained here includes, for instance, changing of a document content portion, insertion of a document content portion or a partial structure of the document, deletion of a document content portion or a partial structure of the document, changing of the order of document content portions or partial structures of the document.

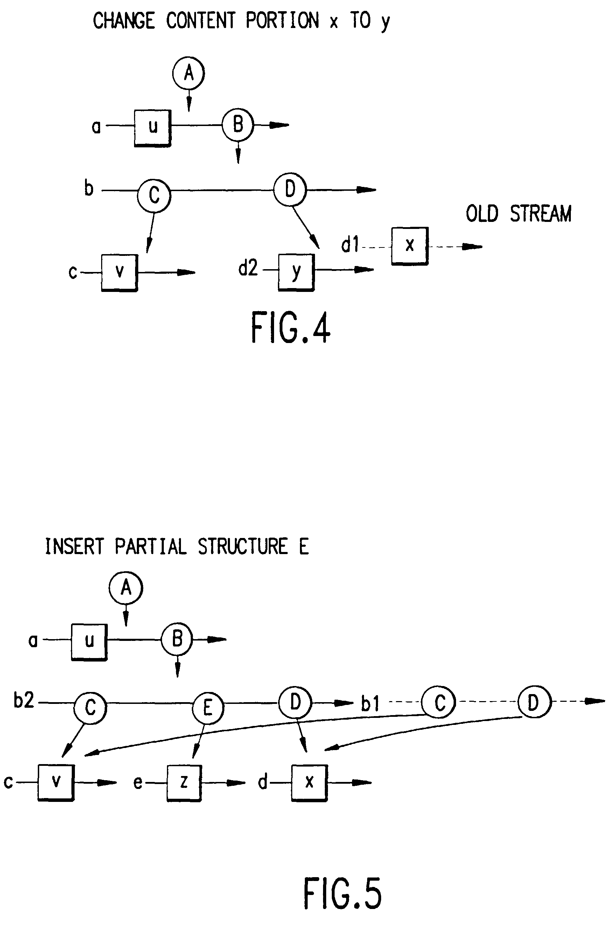

In the example of the document structure of Fig. 3, when selecting node A as the anchor indicating the root of the document, stream a including anchor B and content portion (u) is a chapter, stream b including anchors C and D is a section, and streams c and d including content portions (v) and (x), respectively, are paragraphs. When an editing process such as creating a new content portion and replacing an existing content portion is carried out, the content portions and the whole structure of the document are changed by stream unit manipulations as shown in Figs. 4 through 8.

Fig. 4 illustrates a case of changing the content portion of the original document shown in Fig. 3. This change creates stream d2 including new content portion (y), replaces existing stream d1 including content portion (x) by the stream d2, and stores and manages the old stream d1 and the new stream d2 as members of the set referenced by the anchor D.

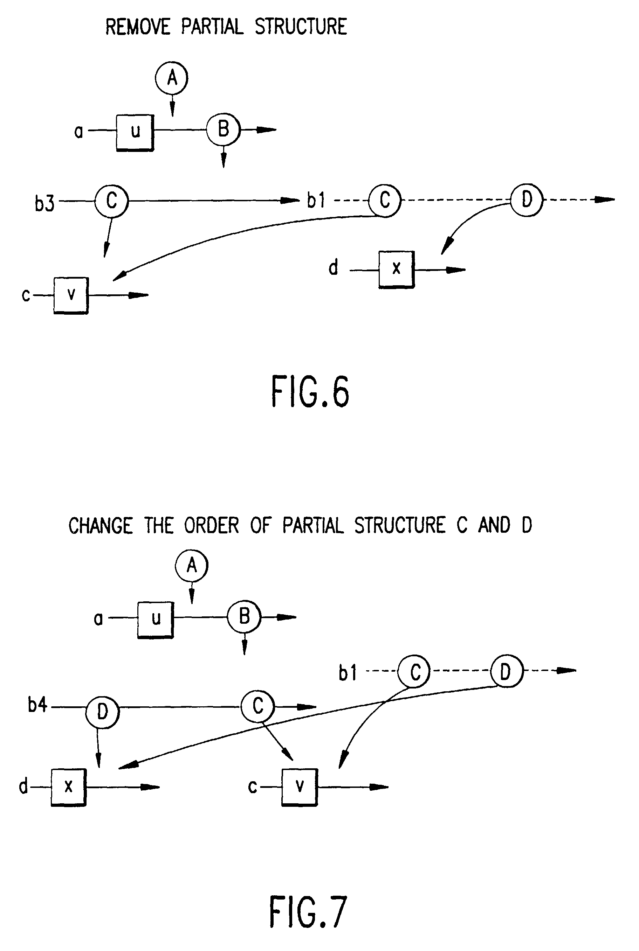

Fig. 5 illustrates a case of inserting a new partial structure into the original document shown in Fig. 3. This insertion creates new stream b2 which adds anchor E to existing stream b1 which includes anchors C and D, creates new stream e including content portion (z), replaces the existing stream b1 by the new stream b2, and makes the anchors C, D and E included in the new stream b2 to reference streams c, d and e, respectively. In this case, streams b1 and b2 which are in a particular level and are referred by a particular anchor B are stored and managed as members of a set referenced by the anchor B.

Fig. 6 illustrates a case of removing existing partial structure D from the original document shown in Fig. 3. This removal creates new stream b3 including only anchor C by deleting anchor D from existing stream b1 which includes anchors C and D, replaces the existing stream b1 by the new stream b3, stores and manages the old stream b1 and the new stream b3 as members of a set referenced by anchor B, makes the anchor C in the new stream b3 reference stream c and stores and manages stream d as the stream referenced by the anchor D in the old stream b1.

Fig. 7 illustrates a case of changing an order of the partial structures C and D in the original document shown in Fig. 3. This changing of the order creates new stream b4 including anchors D and C (in this order) by changing the order of the anchors C and D which existing stream b1 includes, replaces the existing stream b1 by the new stream b4, and stores and manages the old stream b1 and the new stream b4 as members of a set referenced by anchor B.

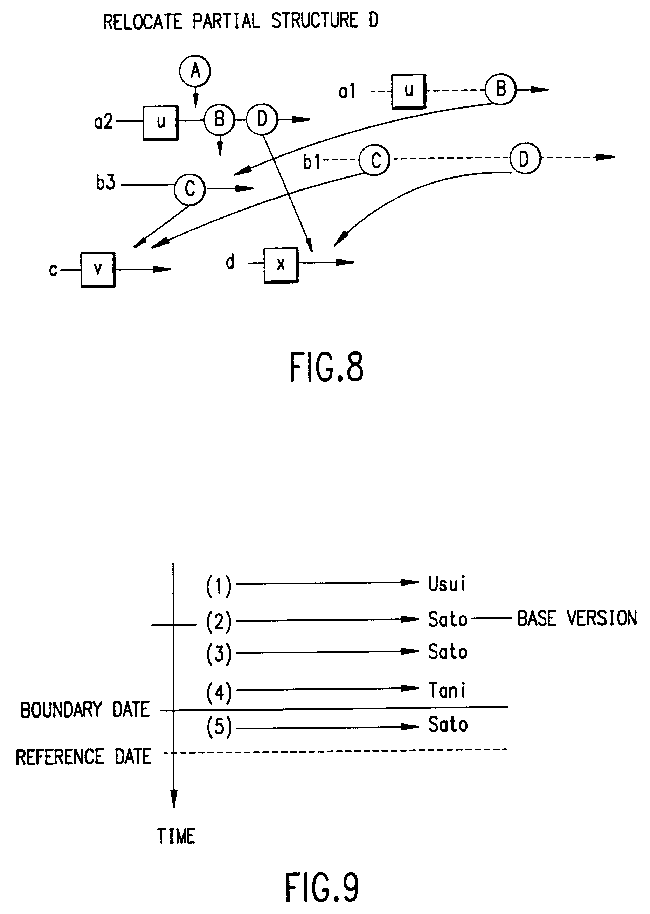

Fig. 8 illustrates a case of relocating partial structure D in the original document shown in Fig. 3. This relocation creates new stream b3 including anchor C by removing anchor D from existing stream b1 which includes anchors C and D, replaces the existing stream b1 with the new stream b3, creates new stream a2 by adding anchor D to existing stream a1 including content portion (u) and anchor B, replaces the existing stream a1 by the new stream a2, and makes the anchor D keep the reference to stream d. In this case, every stream referenced by anchor A, namely streams a1 and a2, are stored and managed as members of a set referenced by the anchor A. In this case, every stream referenced by anchor B, namely b1 and b3, are stored and managed as members of a set referenced by the anchor B.

As described above, a stream after editing and a stream before editing are stored into a particular set, and an anchor references the set of the streams. Therefore, as described later, an old version of a document before editing can be recovered by selecting a stream which satisfies given conditions from the set referenced by each anchor and assembling the selected streams into a document.

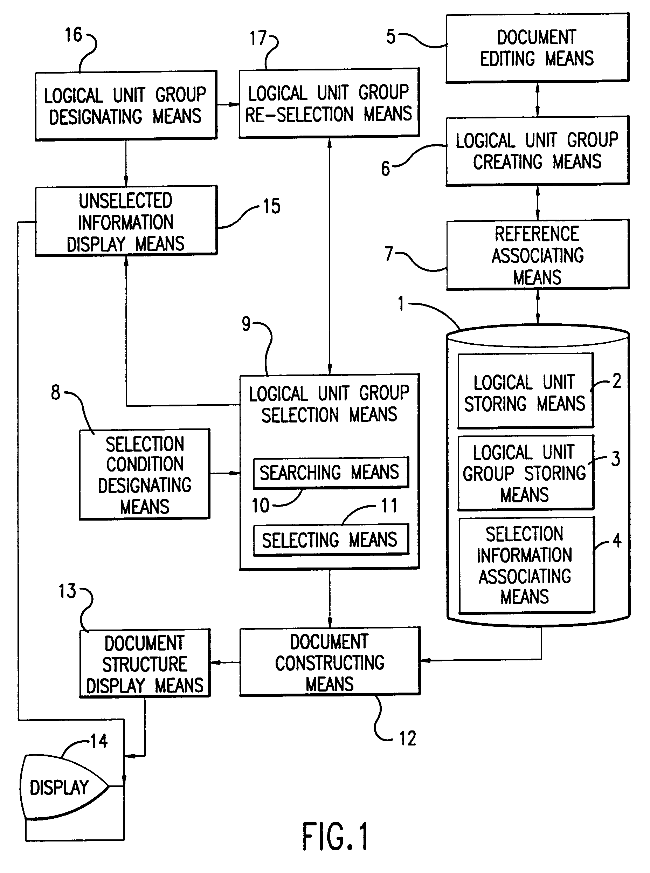

Fig. 1 shows a block diagram of the document processing apparatus in the first embodiment, which carries out document processing as described above.

Memory 1, which is made of such as semi-conductor memory or magnetic memory, includes logical unit storing means 2, logical unit group storing means 3 and selection information associating means 4. These means numbered from 2 to 4 store and manage information which constructs structured documents.

The logical unit storing means 2 stores logical units. Each logical unit is either an anchor or a content portion. The logical unit group storing means 3 stores streams. Each stream consists of logical units.

The selection information associating means 4 associates a stream stored in the logical unit group storing means 3, with stream attributes used when selecting a stream. That is, by designating values of stream attributes, the stream corresponding to the designation can be selected from the logical unit group storing means 3.

In other words, the structured document, as shown in Fig. 2, is stored in the memory 1 in the form of a data structure composed of streams, to each of which is attached the stream attribute. In the following explanation of this embodiment, a stream set is defined as a set including a plurality of streams. The stream set includes a plurality of combinations of the stream and stream attributes, when they are referenced by the same anchor. It implies they lay in the same level of a document structure. A top level node of the document structure is called a root anchor. A tree structure is extracted by traversing the structure composed of the stream sets according to the reference of the anchors, such that the root anchor references a lower level stream set, then the anchor included in the lower level stream set references a further lower level stream set.

Document editing means 5 applies an editing procedure to the structured documents stored in the memory 1 in accordance with a user's commands, and changes content portions and partial structures (streams) as shown in Figs. 4 through 8.

Logical unit group creating means 6 carries out a process of creating a new stream in accordance with the editing process by the document editing means 5. For instance, as shown in Fig. 4, when content portion (x) is replaced by content portion (y), the logical unit group creating means 6 creates a new stream d2 including content portion (y).

The reference associating means 7 carries out a process of adding the new stream created by the logical unit group creating means 6 into a particular set which includes the edited original stream, and stores the added set into the logical unit group storing means 3. For instance, as shown in Fig. 4, when new stream d2 is created as a result of an editing operation on the existing stream d1, the stream d2 is added into the same set (stream set) that includes the stream d1.

Selection condition designating means 8 has input means such as a keyboard or a mouse to be operated by a user. It receives a selection condition including a stream attribute from the user through the input means, and transfers the received selection condition to logical unit group selection means 9. As types of attributes, this embodiment allows version information, updating date information and user information of a document. A selection condition described with these stream attributes is transferred to the logical unit group selection means 9.

The logical unit group selection means 9 carries out a process of selecting a stream which satisfies the selection condition inputted from the selection condition designating means 8, from the logical unit group storing means 3. The logical unit group selection means 9 has searching means 10 and selecting means 11 to carry out the selection process.

The searching means 10 searches the streams stored in the logical unit group storing means 3 for the stream which satisfies the selection condition. The selecting means 11 selects a stream from the streams satisfying the selection condition, which are found by the searching means 10. For instance, when a version, a date and a user of a document are designated as a selection condition, the searching means 10 searches for streams associated with the stream attribute where updating date information is after the updating date corresponding to the designated version and before the designated date, and user information matches with the designated user. The selecting means 11 selects the latest stream from streams satisfying the selection condition, which are found by the searching means 10.

If the searching means 10 fails to find a stream which satisfies all of the condition, the selecting means 11 selects a stream satisfying the version condition.

Document constructing means 12 constructs a document from streams selected by the logical unit group selection means 9. Document structure display means 13 displays the document constructed by the document constructing means 12 on a display 14.

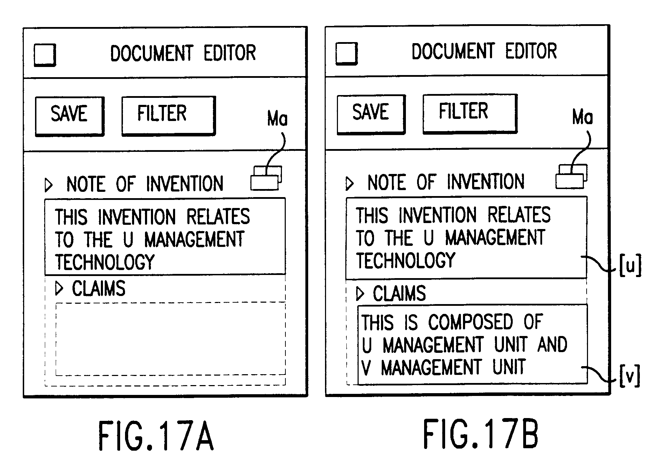

Unselected information display means 15 displays a marker on the display 14. The marker indicates the stream which the document structure display means 13 does not select as a constituent of the document. That is to say, when a stream set which includes the stream selected by the logical unit group selection means 9 includes other streams, a marker, which indicates the other streams, is displayed with the document constructed by the document constructing means 12 on the display 14, as shown in Figs. 17A and B.

Logical unit group designating means 16 has input means such as a keyboard or a mouse to receive a user's input, and designates a marker from the markers displayed by an unselected information display means 15 in accordance with the user's input.

In accordance with the designation of the marker by the logical unit group designating means 16, logical unit group re-selection means 17 makes the logical unit group selection means 9 replace the stream which was formerly selected by the logical unit group selection means 9 with the stream corresponding to the designated marker. That is to say, when a content portion (text) in a stream is displayed as a portion of a document structure accompanying a marker on the display 14, selection of the marker causes display of a content portion (text) of another stream, which is replaced with the former stream. If structural properties of the stream associated with anchors, such as the number or position of anchors is different from that of the stream before the replacement, the whole structure of the displayed document is accordingly changed.

Here, the above-described selecting process in accordance with the selection condition, which is carried out by the logical unit group selection means 9 is explained in detail with reference to Fig. 9.

Fig. 9 shows streams (1) through (5) along the vertical axis indicating dates. Each stream is associated with attributes including user information, which represents a name of a user such as "Usui", "Sato", or "Tani", updating date information and version information. The selection condition to be input includes boundary date information, base version information and user information. The boundary date information and base version are used for determining the scope of documents to be referenced and processed.

This example illustrates the selecting process when the user "Usui" actually references a document at a date shown as the dotted line in the figure.

If nothing is designated as the selection condition, the process selects stream (5), which is the latest at the referring date.

If only user information "%user" (in this case, it means "Usui") is designated, the process selects stream (1), which is the latest stream whose stream attribute is "Usui".

If only user information "Sato" is designated, the process selects stream (5), which is the latest stream whose stream attribute is "Sato".

If only the boundary date shown in the figure is designated, the process selects stream (4), which is the latest stream whose updating date of the stream attributes is before the designated boundary date.

If the boundary date shown in Fig. 9 and "Sato" are designated as boundary date information and user information, the process selects stream (3), which is the latest stream whose user information in the stream attributes is "Sato" and whose updating date is before the boundary date.

If only a base version shown in the figure is designated, the process selects stream (5), which is the latest stream after the base version was defined.

If both of the base version and the boundary date shown in the figure are designated as the selection condition, the process selects stream (4), which is the latest stream after the base version and before the boundary date.

If the base version shown in the figure and "%first" are designated as the base version information and boundary date information, the process selects stream (2), which is the first stream after the base version information was defined.

If the base version shown in the figure and "%user" are designated as the base version information and the user information, the process selects stream (2), which is associated with the base version, because there is no stream whose stream attribute includes "Usui" after the base version was defined.

As described above, the stream which satisfies the selection condition designated by the selection condition designating means 8, is selected in accordance with the stream attribute. Then the document constructing means 12 constructs a document structure of the selected streams.

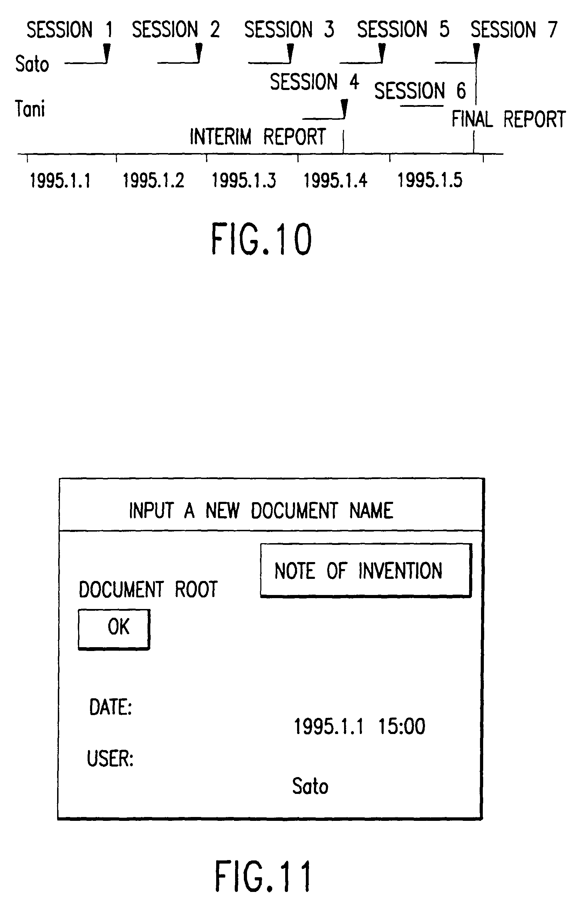

Next, an outline of a document editing process which is carried out by the document processing apparatus of the above-described configuration, is explained by using an example shown in Figs. 10 through 36. The following explanation further clarifies the function of each means described above in detail.

Fig. 10 shows an editing process in which Mr. Sato and Mr. Tani collaborate in writing a document whose name is "Note of invention". Each editing operation from the start to the end is named a session. The editing operation starts with opening a document by using a document editing tool and ends with closing the document.

In Fig. 10, time is on the horizontal axis. Each of sessions 1 through 7 is represented by a horizontal line corresponding to the author "Sato" or "Tani". The black triangle at the end of each line indicates a time that the document is stored. A vertical line started from a triangle indicates that a version name is defined. For instance, in session 4, the document is stored on January 4, 1995, and version name "interim report" is defined.

In this example, no two sessions are carried out at any one time to avoid making the explanation too complicated. But there is no difficulty applying this invention to a case where a plurality of sessions overlap with each other.

Figs. 11 through 15 illustrate session 1. In session 1, the user Mr. Sato creates and stores the new document "Note of invention".

At the beginning, when Mr. Sato invokes the document editor of the document editing means 5 at 15:00 on January 1, 1995, an interface tool shown in Fig. 11 is displayed on the display 14, and prompts the user to input a new document name. With the interface tool, Mr. Sato inputs "Note of invention" as the name of the document root and clicks an "ok" button to instruct the end of the designation. These instructions designate a root anchor, which starts the extracting of a document. The root anchor references a stream set which includes the highest stream of the document structure.

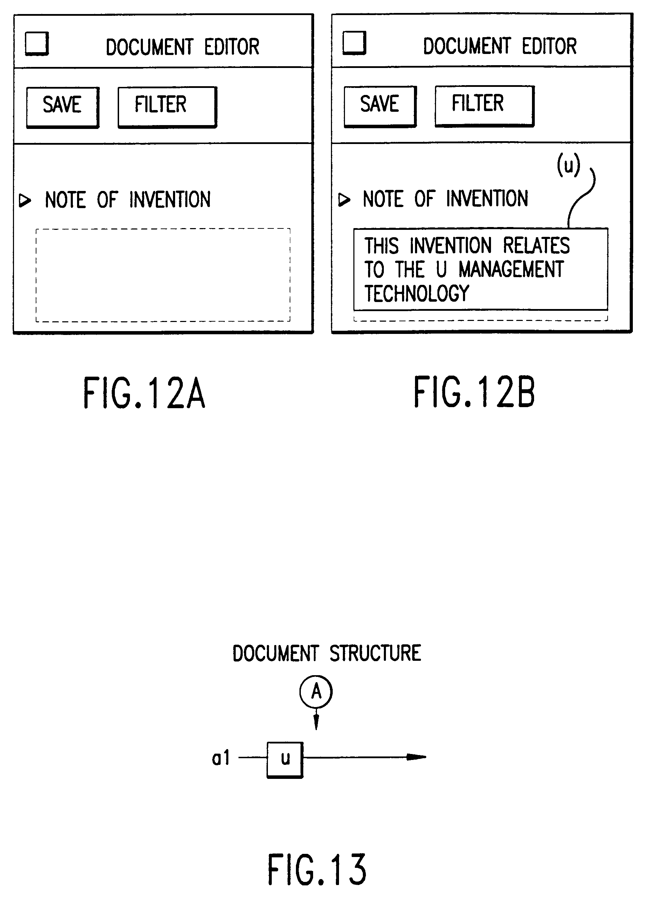

Next, the document editor displays an extracted document structure on the display 14, as shown in Figs. 12A and 12B. The display of the document structure comprises a white triangle marker which represents a position of an anchor, name of the anchor, and content portion of a stream referenced by the anchor. The depth of the indent of the marker, which represents the position of the anchor, represents a depth of a level of the stream in the document structure. Thus, if the anchor references a lower level stream, it is indented further to the right.

When the stream referenced by the anchor whose name is "Note of invention" does not yet include any content portion (contents of the text), the editor displays root anchor name "Note of invention" and the empty stream referenced by the anchor is displayed in the form of a display area enclosed with a dotted line, as shown in Fig. 12A.

Mr. Sato writes text as the content portion (u) of the stream referenced by the root anchor by the editing operation, then the editor displays the contents of the text in the above-described display area as shown in Fig. 12B. As a result of the editing, the logical unit group creating means 6 creates stream a1 which only includes the new content portion (u) and the document structure that the root anchor A references stream a1, is constructed as shown in Fig. 13.

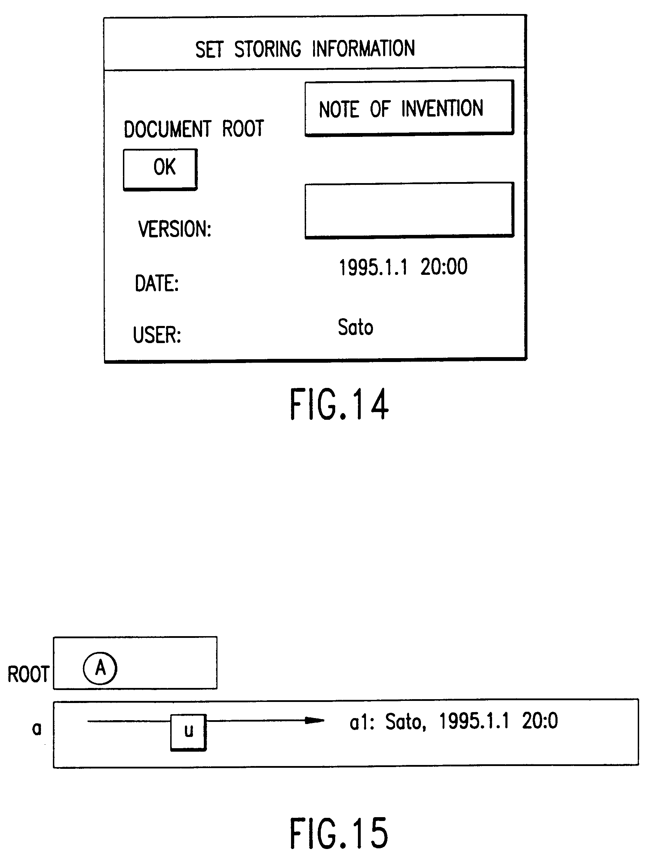

When Mr. Sato stops editing and instructs to store the document by clicking a "save" button on the document editor shown in Fig. 12B at 20:00 on January 1, 1995, an interface tool shown in Fig. 14 is displayed on the display 14 and prompts the user to set storing information. In this example, Mr. Sato clicks the "ok" button without setting additional storing information to instruct to store the created document. This interface tool has displayed the root anchor name "Note of invention" as the document root, which is a piece of storing information.

As a result of the storing process, a document structure shown in Fig. 15 is stored in the memory 1. That is to say, root anchor A, stream set a referenced by the root anchor A, stream a1 included in the stream set a and the content portion (u) included in the stream a1 are created. Further, the selection information associating means 4 associates stream attributes including "Sato", which indicates the user who edits the document, and "1995. 1. 1. 20:00", which is the date of storing (updating) the data, with the stream a1.

Next, in session 2 shown in Fig. 10, Mr. Sato edits the document "Note of invention", which he created in session 1, and stores the edited document to the memory 1.

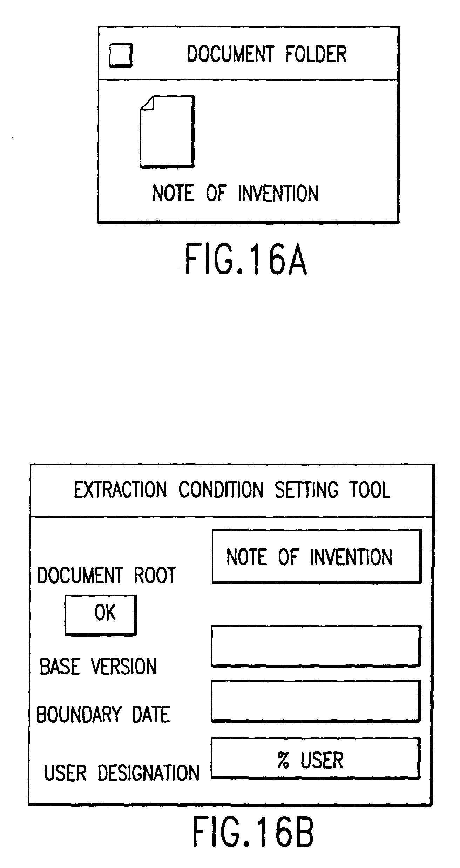

At the beginning, a document folder as shown in Fig. 16A is displayed on the display 14. At 15:00 on January 1, 1995, Mr. Sato selects an icon "Note of invention" in the document folder by double-clicking it, then the document editor of the document editing means 5 is invoked. As a result, an extraction condition setting tool shown in Fig. 16B is displayed on the display 14 and prompts the user to designate an extraction condition. When Mr. Sato inputs "%user", which is the variable representing the current user, as the user information and clicks the "ok" button to terminate the designation process by the selection condition designating means 8, the editing process starts. The symbol "%" in "%user" or "%first" indicates that they are variables whose values are calculated and determined at the beginning of the document extraction.

The above-described designation indicates that the user desires to extract a document including the latest portion (stream) updated by the user himself for the current editing process. As shown in Fig. 17A, the document editor extracts the document structure stored in session 1 from the memory 1, and displays it.

Next, Mr. Sato edits the extracted document. That is, as shown in Fig. 17A, he adds "claims" as an anchor to the stream referenced by the root anchor "Note of invention", and writes text as a content portion (v) of the stream referenced by the anchor "claims". Then the text is displayed in the area referenced by the anchor "claims" as shown in Fig. 17B.

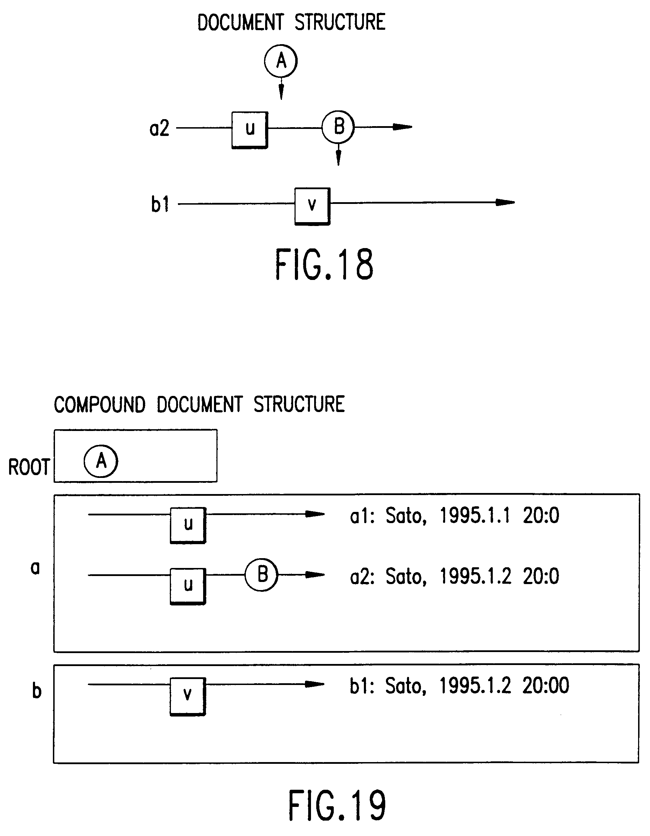

As a result of the editing, as shown in Fig. 18, the logical unit group creating means 6 creates new stream a2, which is referenced by the root anchor A and includes content portion (u), anchor B, and the stream b1, which is referenced by the anchor B and includes content portion (v).

Furthermore, the unselected information display means 15 displays alternative marker Ma on the display of the document editor as shown in Figs. 17A and 17B. This indicates that the stream set referenced by the anchor A includes streams other than the stream displayed on the display as alternatives to construct a document. In this case, streams a1 and a2 are the alternatives for the stream referenced by anchor A. When one of them is displayed, the other is displayed as marker Ma.

Next, Mr. Sato stops editing and instructs to store the document by clicking the button "save" on the display of the document editor shown in Fig. 17B at 20:00 on January 2, 1995. Then the interface tool (as shown in Fig. 14) is displayed on the display 14 and prompts the user to set storing information. When Mr. Sato instructs to store the document in the same manner as session 1, a document structure shown in Fig. 19 is stored to the memory 1.

Thus, the document structure has root anchor A, stream set a referenced by the root anchor A, streams a1 and a2 included in the stream set a, and stream set b referenced by the anchor B. Further, the selection information associating means 4 associates the stream attribute including user information "Sato" and data storing (updating) date information "1995. 1. 1. 20:00" with stream a1, the stream attribute including user information "Sato" and data storing (updating) date information "1995. 1. 2. 20:00" with stream a2, and the stream attribute including the user information "Sato" and data storing (updating) date information "1995. 1. 2. 20:00" with stream b1.

Next, in session 3 shown in Fig. 10, Mr. Sato further edits the document "Note of invention", which he created in session 2, and stores the edited document to the memory 1.

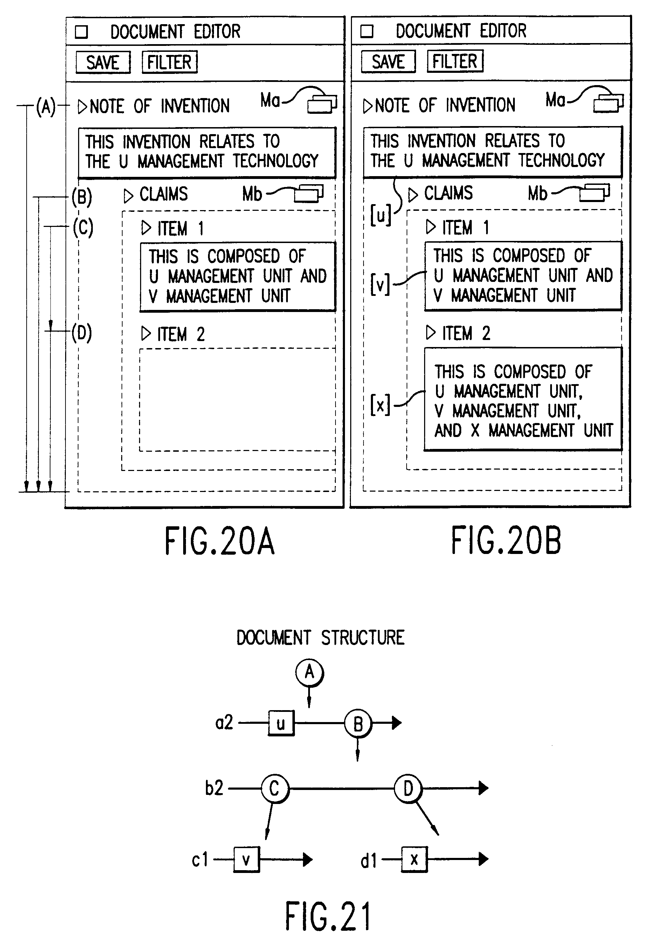

At the beginning, in the same manner as in session 2, Mr. Sato starts editing the document "Note of invention" at 15:00 on January 3, 1995. Then the document editor extracts the document structure which is stored in session 2 from the memory 1, and displays the extracted document as shown in Fig. 20A on the display 14.

In this editing process for the displayed document, as shown in Fig. 20A, Mr. Sato adds "item 2" into the display area of "claims". Then the logical unit group creating means 6 creates a stream which includes anchor C for "item 1" and anchor D for "item 2" and is referenced by anchor B for "claims". When Mr. Sato writes text in "item 2" as shown in Fig. 20B, the logical unit group creating means 6 creates a stream which includes content portion (x) including the written text and is referenced by anchor D.

As described above, as shown in Fig. 21, stream a2 which is referenced by the root anchor A and includes content portion (u) and anchor B, stream b2, which is referenced by the anchor B and includes anchors C and D, stream c1, which is referenced by the anchor C and includes content portion (v), and stream d1, which is referenced by the anchor D and includes content portion (x) are displayed on the display of the document editor.

Further, because the above-described editing process creates a plurality of alternatives for the streams referenced by the anchor B, the marker Mb indicating streams b2 and b1, which is unselected, is displayed as shown in Figs. 20A and 20B.

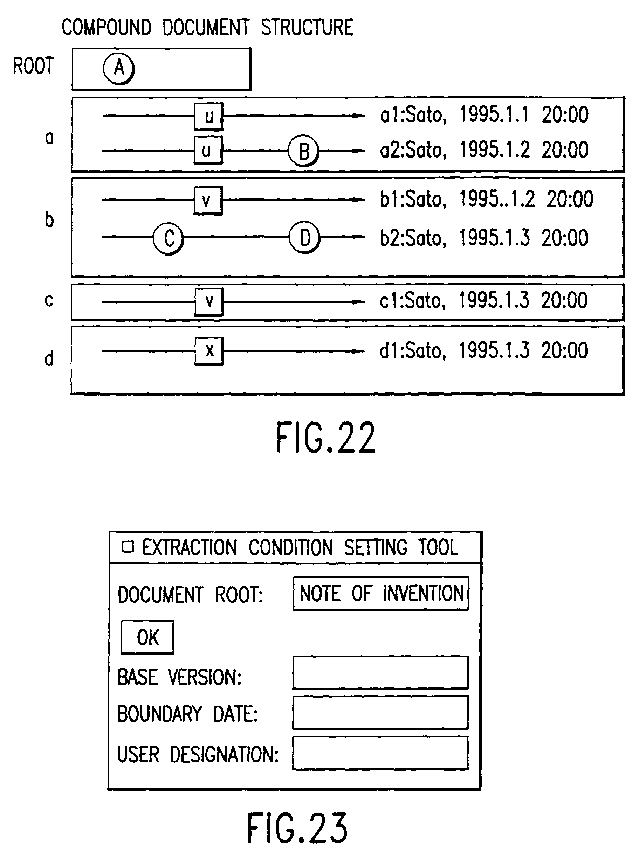

Next, Mr. Sato stops editing and instructs to store the document in the same manner as session 2 at 20:00 on January 3, 1995. Then, a document structure shown in Fig. 22 is stored to the memory 1.

Thus, stream b2, which includes anchors C and D, is added to the stream set b in the document structure shown in Fig. 19. Further stream set c referenced by the anchor C, stream c1 included in the stream set c and having content portion (v), stream set d referenced by the anchor D, and stream d1 included in the stream set d and having content portion (x) are added to the document structure shown in Fig. 19. Furthermore, the selection information associating means 4 associates the stream attribute including the user information "Sato" and the data storing (updating) date information "1995. 1. 3. 20:00" with each of the added streams b2, c1 and d1.

Next, in session 4 shown in Fig. 10, Mr. Tani edits the document "Note of invention", which is created by Mr. Sato in cession 3, and stores the edited document as a version "interim report".

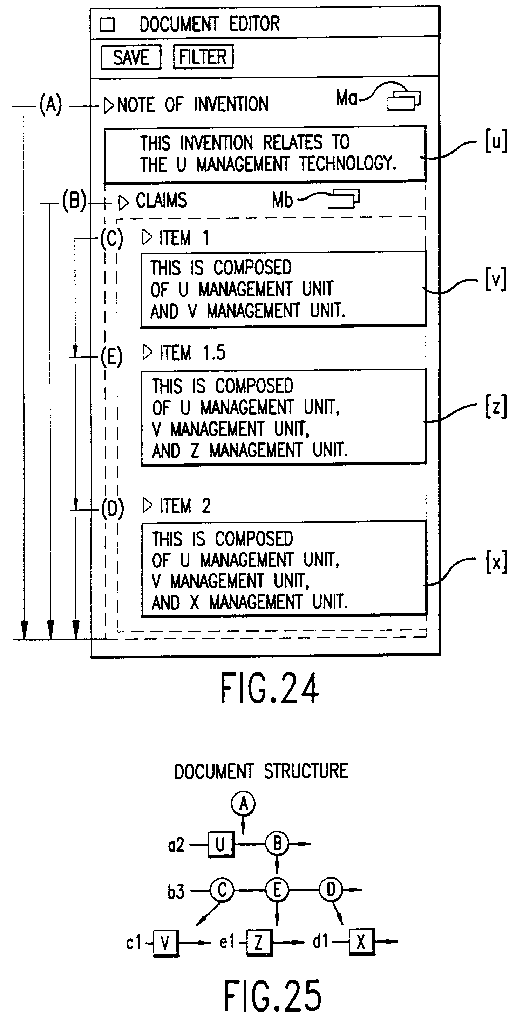

At the beginning, when Mr. Tani starts editing in the same manner as session 2 at 10:00 on January 4, 1995, the extraction condition setting tool as shown in Fig. 23 is displayed on the display 14. Then Mr. Tani designates nothing for the extraction condition and clicks the button "ok" to make the document editor (as shown in Fig. 24) display and carry out the editing operation.

This way, if editing starts without designating conditions, the latest document is extracted from the memory 1 for editing regardless of the user. If Mr. Tani inputs "%user" as the condition to designate the user information through the selection condition designating means 8 same as Mr. Sato did, no document is extracted, because Mr. Tani did not update the document before.

The document editor extracts the document structure stored in session 3, and displays the extracted document structure. As shown in Fig. 24, Mr. Tani edits the document by adding "item 1.5" between "item 1" and "item 2" as a stream referenced by anchor B for "claims".

As a result of the editing, as shown in Fig. 25, the logical unit group creating means 6 creates new stream b3 referenced by the anchor B and including anchors C, D, and E, and new stream e1 referenced by the anchor E and including content portion (z) for "item 1.5".

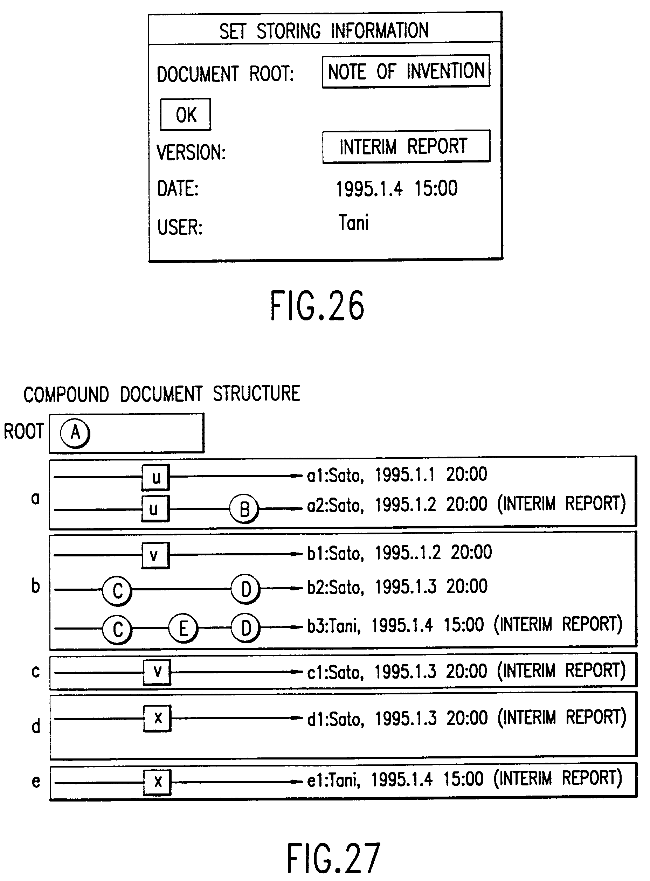

Next, Mr. Tani stops editing and instructs to store the document at 15:00 on January 4, 1995, by clicking the button "save" on the document editor. Then the interface tool shown in Fig. 26 is displayed on the display 14, and prompts the user to designate storing information. Then Mr. Tani designates "interim report" for version information, and clicks the "ok" button to instruct to store a created document.

As a result of the storing, a document structure shown in Fig. 27 is stored in the memory 1. Thus, new stream set b3 including anchors C, D and E is added to the stream set b referenced by the anchor B in the document structure created in session 3. Further, stream set e referenced by the anchor E and new stream e1 included in the stream set e are added to the document structure created in session 3.

Furthermore, the selection information associating means 4 associates a stream attribute including "Tani", which is the information of the user who edited the document, "1995. 1. 4. 15:00", which is a date of storing (updating) the data, and version information "interim report", with each of the streams b3 and e1 created by the editing process. The selection information associating means 4 further associates the version information "interim report" with the streams a2, c1 and d1 which are referred during the Mr. Tani's editing process.

Next, in session 5 shown in Fig. 10, Mr. Sato further edits the document "Note of invention", which he created, and stores the edited document. Before Mr. Sato starts this editing, Mr. Tani added some change to the document structure in session 4. But Mr. Sato can restart editing the document which Mr. Sato edited and stored by designating an appropriate extraction condition.

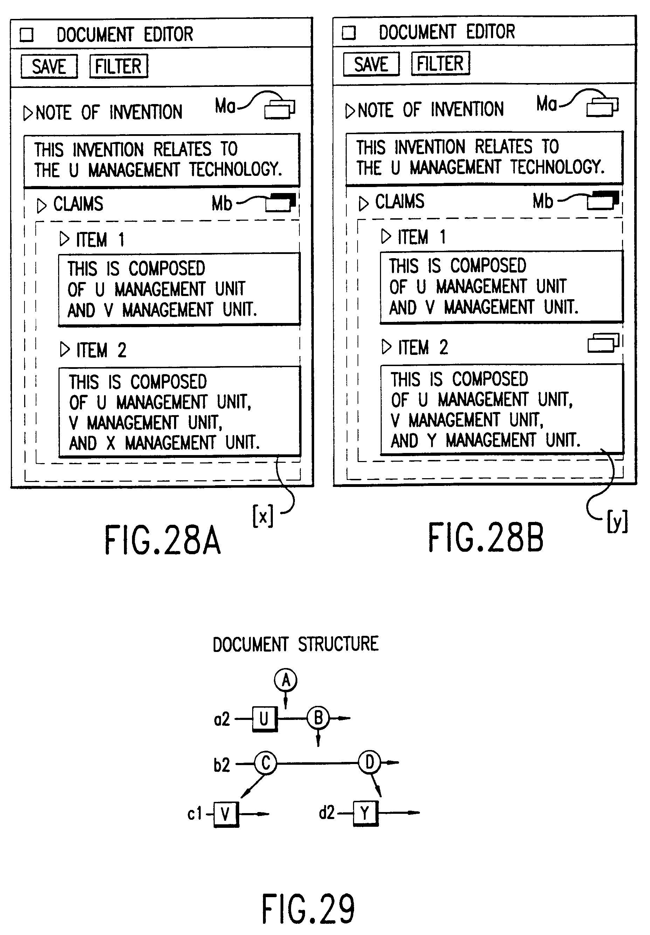

In the same manner as session 2, Mr. Sato invokes the document editor at 15:00 on January 4, 1995. In this time, Mr. Sato inputs "%user" as the extraction condition through the extraction condition setting tool of the selection condition designating means 8. This input causes the logical unit group selection means 9 to select stream b2 created by Mr. Sato instead of stream b3 created by Mr. Tani, as the stream referenced by the anchor B for "claims". Then the document editor displays the document structure which was stored by Mr. Sato in session 3, as shown in Fig. 28A.

Further, in this case, the marker Mb is inverted on the display, which shows that there is a newer stream than the stream which is currently referenced by the anchor B for "claims".

In this editing process of the document, Mr. Sato changes content portion (x) for "item 2" to content portion (y) as shown in Fig. 28B. As a result of this change, as shown in Fig. 29, the logical unit group creating means 6 creates new stream d2 in which the content portion (x) is replaced by the content portion (y), as the stream referenced by anchor D for "item 2".

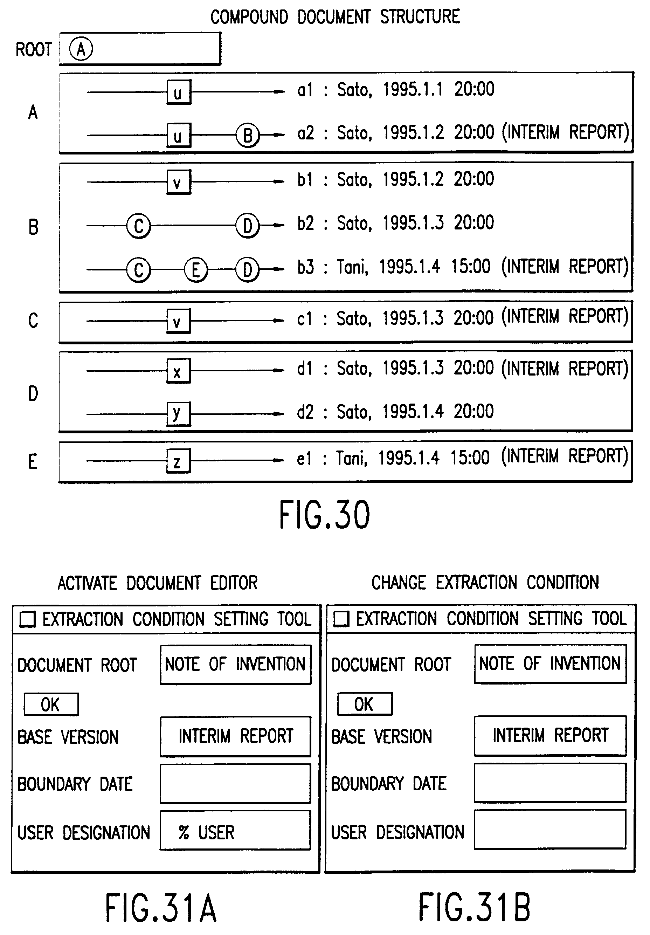

Next, Mr. Sato stores the edited document at 20:00 on January 4, 1995 in the same way as session 1. Then the document structure shown in Fig. 30 is stored in the memory 1. Thus, the new stream d2 including the content portion (y) is added to the stream set d referenced by anchor D in the document structure stored in session 4 and shown in Fig. 27. Further, the selection information associating means 4 associates a stream attribute including "Sato", which represents information of the user who edits, and "1995. 1. 4. 20:00", which represents date of data storing (updating), with stream d2.

Next, in session 6 shown in Fig. 10, Mr. Tani references the document "Note of invention" and version "interim report", which he created and stored. After that, he further references the result of editing by an author other than himself.

At 10:00 on January 5, 1995, Mr. Tani starts editing the document "Note of invention", and invokes the document editor by selecting and double-clicking the icon in the document folder in the same manner as session 2. The extraction condition setting tool shown in Fig. 31A prompts the user to designate an extraction condition of the document. Then, Mr. Tani designates "interim report" and "%user" for version information and user information, respectively. By this designation, a document constructed of structural elements (streams) which match the designated version and are updated by Mr. Tani are extracted from the memory 1 to be the object of editing.

That is to say, in accordance with the condition inputted from the selection condition designating means 8, the logical unit group selection means 9 searches for the stream associated with the attributes including "interim report", and selects the latest stream created by Mr. Tani after the version is defined. Since Mr. Sato edits the document and Mr. Tani does not edit after Mr. Tani designates the version in session 4, not the latest stream d2 created by Mr. Sato but the stream d1 at the time of designation of "interim report" is selected for the stream referenced by anchor D for "item 2".

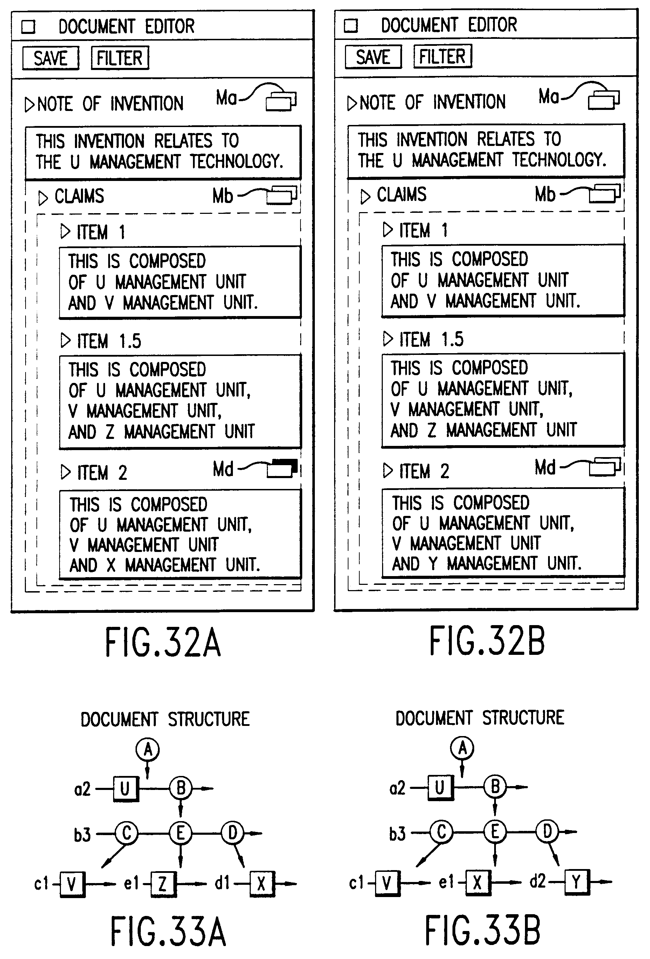

As a result, as shown in Fig. 32A, the document structure associated with "interim report" (Fig. 24) stored by Mr. Tani in session 4 is displayed on the document editor. Further, the display of the alternative marker Md corresponding to anchor D for "item 2" is inverted, that is, it shows that the newer stream created by Mr. Sato exists.

Here, by clicking a button "filter" on the document editor, the extraction condition setting tool can be invoked again. If the user changes the condition by using the invoked tool, the document structure is extracted again in accordance with the new condition. When Mr. Tani deletes "%user" from the condition shown in Fig. 31A, that is, designates the extraction condition shown in Fig. 31B, the newer stream is selected regardless of the user. As a result, the latest stream d2 created by Mr. Sato is selected for the stream referenced by anchor D for "item 2", and the document shown in Fig. 32B is displayed on the document editor.

As described above, when the first condition shown in Fig. 31A is designated, the document structure shown in Fig. 33A is extracted and displayed on the editor. After the changed condition as shown in Fig. 31B is designated, the document structure shown in Fig. 33B is extracted. Therefore, in a document structure shown in Fig. 33A, anchor D references stream d1 including content portion (x), and in a document structure shown in Fig. 33B, anchor D references stream d2 including content portion (y).

In session 6, Mr. Tani stops editing without storing the document, and the document structure stored in the memory 1 is same as the structure shown in Fig. 30.

Next, in session 7 shown in Fig. 10, Mr. Sato creates a document by adding a result of editing done by an author other than himself to the document "Note of invention" created by Mr. Sato, and stores the created document as a version "final report".

In session 7, Mr. Sato invokes the document editor at 15:00 on January 5, 1995, in the same manner as session 2, and starts editing the document "Note of invention".

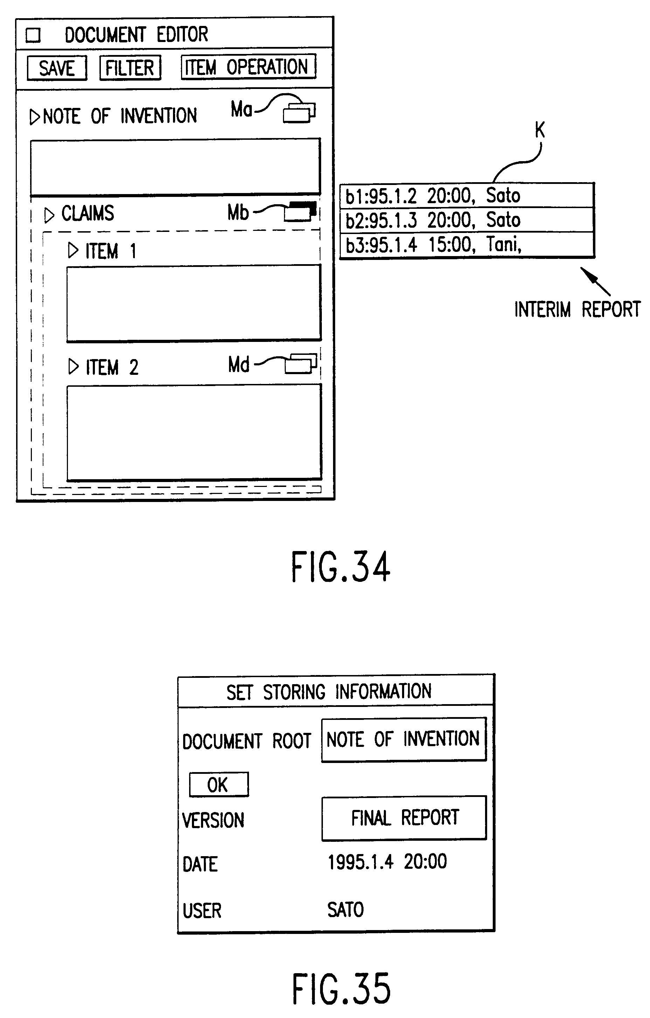

The document editor extracts the document structure stored by Mr. Sato in session 5 from the memory 1 and displays the extracted document structure as shown in Fig. 34.

The document editor displays alternative marker Mb inverted so as to show that a newer alternative exists of a current stream referenced by anchor B for "claims". If the user clicks the alternative marker Mb, alternative streams b1, b2 and b3 are displayed in menu K. If one of the streams is selected from the menu K by the logical unit group designating means 16, the logical unit group re-selection means 17 replaces the current stream with the stream selected in menu K. Further, the lower structure of the replaced stream is reconstructed in accordance with the extraction condition.

Thus, when Mr. Sato selects latest stream b3 from the alternative-menu K, the document created in session 5 is selected as the object of editing.

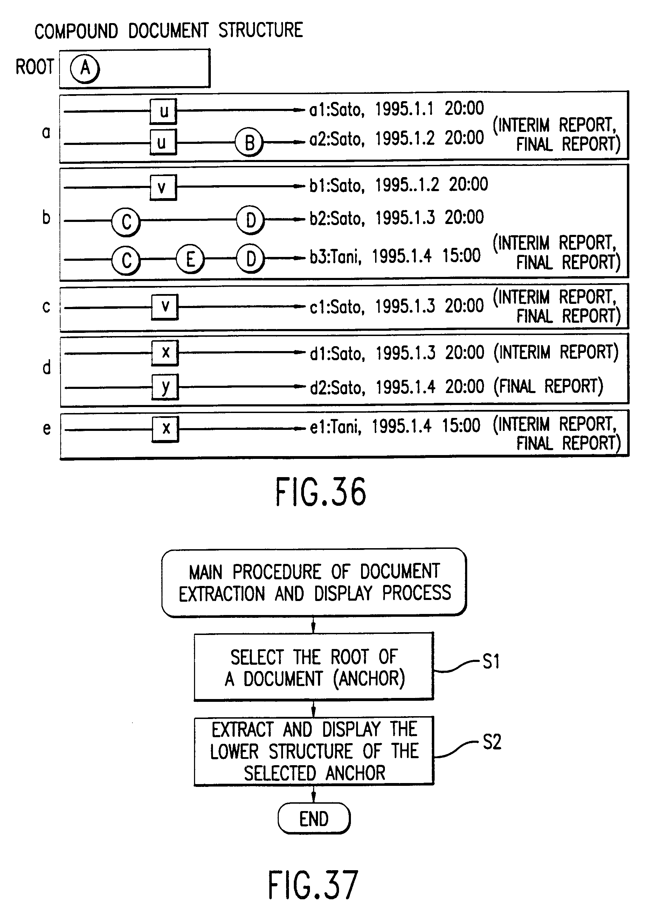

The editing process in session 7 replaces the document structure shown in Fig. 29 by the document structure shown in Fig. 33B on the document editor. When Mr. Sato instructs to store the document at 20:00 on January 5, 1995, an interface tool shown in Fig. 35 is displayed, and prompts the user to designate a condition for storing. When Mr. Sato designates "final report" as version information and instructs to store by using the displayed tool, an edited document structure shown in Fig. 36 is stored in the memory 1. That is to say, the selection information associating means 4 adds the version information "final report" to the attributes of streams a2, b3, c1, d2 and e1, which are extracted at the time of the storing process, in the document structure shown in Fig. 30, which is stored in session 5.

In the following, a processing to extract a document from the memory 1 and to display the extracted document on the display 14 is further explained in detail with reference to flowcharts shown in Figs. 37 through 40.

Fig. 37 shows the main processing to extract and display the document. At the beginning, the logical unit group selection means 9 selects a root anchor from the memory 1 in accordance with the instruction by the user through the selection condition designating means 8 (step S1). Then a structure in a lower position of the selected root anchor is extracted from the memory 1 and a document is displayed on the display 14 in accordance with the extracted structure (step S2).

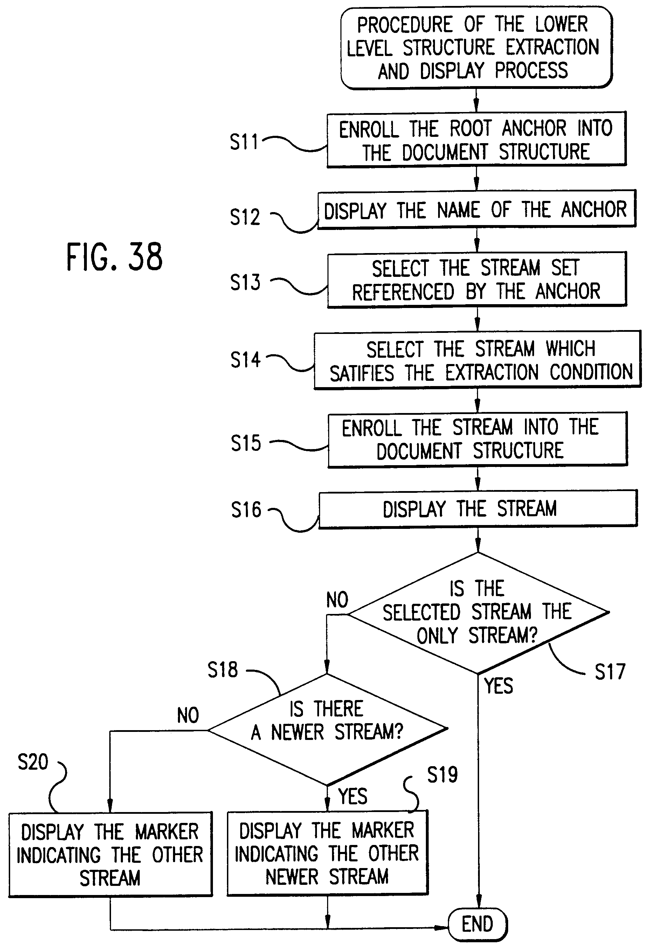

Fig. 38 shows the detailed processing to extract and display the lower level structure in the step 2 in Fig. 37.

At the beginning, the document constructing means 12 enrolls the root anchor into the document structure being constructed (step S11). Then the document structure display means 13 displays the document editor including the name of the root anchor on the screen of the display 14 (step S12).

Next, the logical unit group selection means 9 selects a stream set referenced by the root anchor from the memory 1 (step S13), and selects a stream whose attribute satisfies a condition instructed by a user through the selection condition designating means 8, from the selected stream set (step S14).

Next, the document constructing means 12 enrolls the selected stream into the document structure being constructed (step S15). The document structure display means 13 displays the selected stream (content portion) in the document editor displayed on the screen of the display 14 (step S16).

Next, the unselected information display means 15 checks whether the selected stream is the only stream in the selected stream set (step S17). If there is no other stream in the selected stream set, the processing terminates. If the anchor included in the selected stream references to the stream set in the lower level, the above-described processing is repeated for the referenced stream set and the stream included in it.

Meanwhile, if there is a stream other than the selected stream in the selected stream set, the unselected information display means 15 checks whether the other stream is newer than the selected stream in accordance with the stream attribute (step S18). If it is a newer stream, the unselected information display means 15 displays the inverted alternative marker representing the stream in the document editor on the display 14 (step S19). Meanwhile, if it is not a newer stream, the unselected information display means 15 displays the normal (uninverted) alternative marker representing the stream in the document editor on the display 14 (step S20).

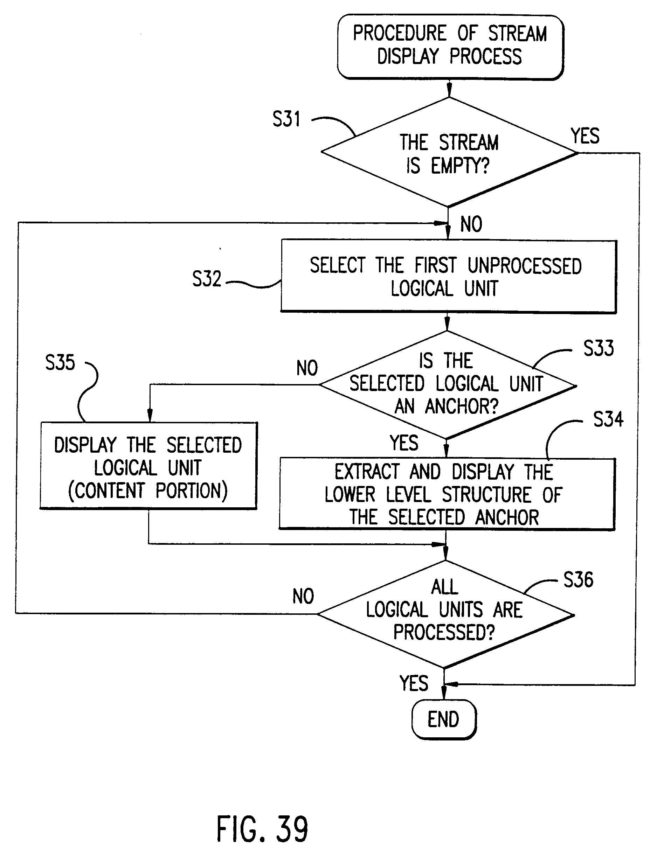

Here, the stream display processing in step S16 is further explained in detail with reference to Fig. 39.

At the beginning, it is checked whether the selected stream is an empty stream, which is a stream including neither a content portion nor an anchor (step S31). If it is an empty stream, the processing terminates. Meanwhile, if the selected stream includes logical units, one of the unprocessed logical units is selected (step S32), and it is checked whether the selected logical unit is an anchor (step S33).

As a result of this determination, if it is an anchor, a lower level structure referenced by the anchor is displayed by the processing shown in Fig. 38 (step S34). Meanwhile, if the logical unit is a content portion, the content portion is displayed (step S35).

Then, it is checked whether the above-described processing is completed for all logical units in the selected stream (step S36). If not completed, the processing after step S32 is repeatedly carried out. If completed, the stream display processing terminates.

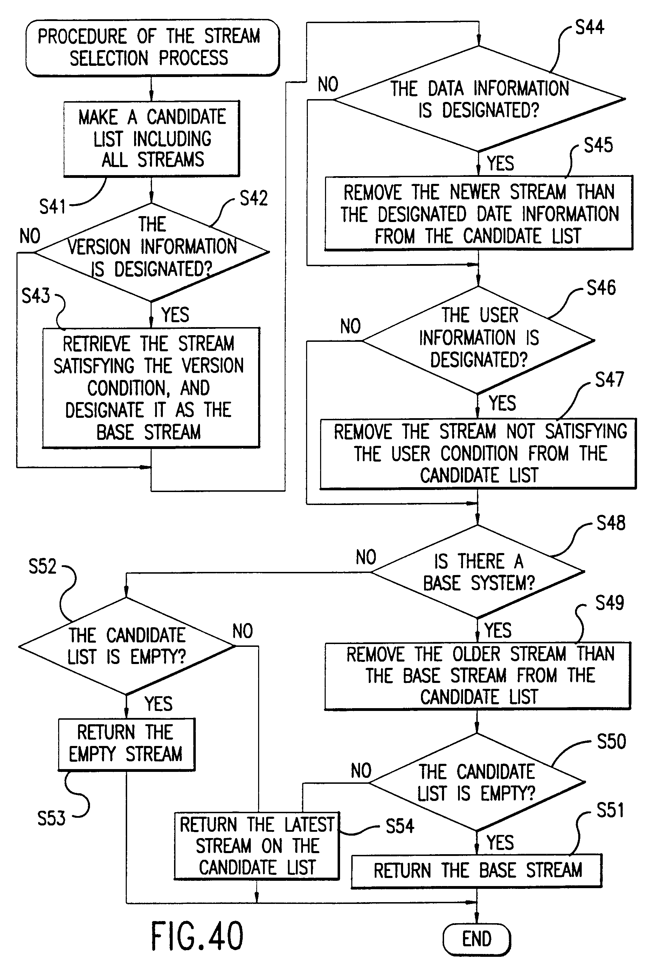

Here, the stream selection processing of step S14 is further explained in detail with reference to Fig. 40.

At the beginning, a candidate list is made of all streams in the selected stream set (step S41). Then it is checked whether the condition inputted by the selection condition designating means 8 includes version information (step S42).

As a result of the checking, if version information is designated, the stream associated with the attribute which satisfies the version condition is retrieved from the streams in the candidate list, and the retrieved stream is designated as a base stream temporarily (step S43).

Next, it is checked whether the condition inputted from the selection condition designating means 8 includes boundary date information (step S44). If the boundary date is designated, the stream associated with the attribute including a newer date than the designated boundary date is removed from the candidate list (step S47). That is, a stream edited after the boundary date which the user designates as the object of the processing, is removed.

Next, it is checked whether the condition inputted by the selection condition designating means 8 includes user information (step S46). If the user information is designated, a stream associated with the attribute which does not include the designated user information is removed from the candidate list (step S47). That is, a stream which is not edited by the user which the user designates as the object of the processing, is removed.

Next, it is checked whether a base stream is designated or not (step S48). If designated, a stream which is older than the base stream is removed from the candidate list (step S49). Then, after confirming that the candidate list is not empty (step S50), the base stream is selected as the stream which satisfies the condition inputted by the selection condition designating means 8 (step S54).

Meanwhile, as a result of the checking in step S48, if the base stream does not remain in the candidate list, it is checked whether the candidate list is empty (step S52). If the candidate list is empty, the empty stream is returned as the selected stream to imply that no stream can be selected (step S53).

As a result of the above-described checking, if the base stream is not designated and the candidate list is not empty (step S52), or if the candidate list is not empty after the stream older than the base stream is removed (step S50), the latest stream in the candidate list is returned as the selected stream (step S54).

Thus, the stream which satisfies the condition inputted from the selection condition designating means 8 is selected in accordance with the stream attribute.

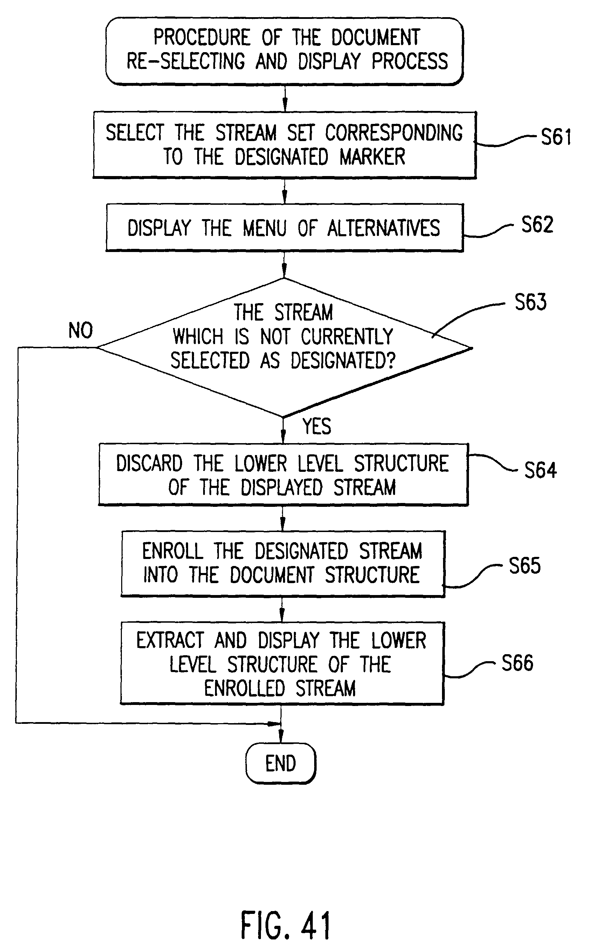

In the following, the processing to extract a document whose stream is replaced and to display the extracted document, in response to the user's selection of alternative markers, such as Ma or Mb, which are displayed on the document editor, is further described in detail with reference to the flowchart shown in Fig. 41.

At the beginning, when the user designates the alternative marker by using the logical unit group designating means 16, the unselected information display means 15 determines which stream set includes the stream corresponding to the designated marker from the document structure stored in the memory 1 (step S61), and displays streams in the determined stream set as the alternative menu K (step S62).

Then, it is checked whether the user selects a stream other than the stream which is currently selected and displayed, from the displayed menu K by using the logical unit group designating means 16 (step S63). If another stream is selected, the logical unit group reselection means 17 discards the lower level structure of the stream which is currently displayed on the document editor (step S64), and replaces the discarded stream with the re-selected stream (step S65).

Then, the document constructing means 12 reconstructs the document including the replaced streams. The document structure display means 13 displays the reconstructed document on the document editor and processing terminates (step S66).

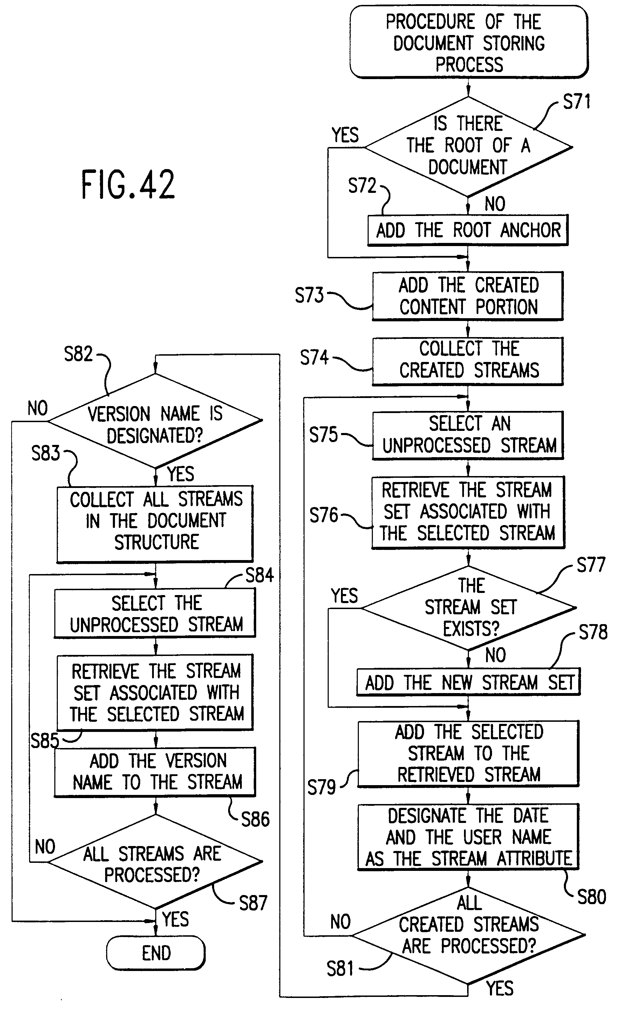

Fig. 42 is the flowchart to explain the processing to store the edited document into the memory 1.

At the beginning, it is checked whether a root anchor list, which is a list of root anchors of the document structures stored in the memory 1, includes a root anchor of the document structure which is edited by using the document editor of the document editing means 5 (step S71). As a result of the checking, if the root anchor list does not include the root anchor of the edited document structure, it means that the edited document is new in the memory 1. Therefore, the reference associating means 7 adds the root anchor of the edited document structure into the root anchor list (step S72).

Next, the reference associating means 7 associates a content portion created by the document editor with an appropriate stream (step S73), collects the created streams (step S74), and selects a stream for which the following processing has not yet been carried out, from the collection of the created streams (step S75).

Next, the reference associating means 7 retrieves a stream set associated with the selected stream from the document structures stored in the memory 1 (step S76). If the stream set exists (step S77), the selected stream is added to the stream set (step S79). Meanwhile, if the stream set does not exist (step S77), a new stream set is added to the document structure (step S78), and the selected stream is added to the new stream set (step S79).

Then, the selection information associating means 4 associates a stream attribute, such as the date or the user, with the stream added to the stream set (step S80).

The above-described series of processing is repeatedly carried out for all created streams (step S81). After that, version information included in the stream attribute is set. That is to say, in processing to store the edited document, it is checked whether version information is designated (step S82). If it is designated, all streams in the document structures stored in the memory 1 are collected (step S83), and a stream to which the following processing has not been applied is selected from the collection (step S84).

Then, the stream set which includes the selected stream is retrieved from the document structure (step S85). The version information is added to the attribute of the selected stream in the retrieved stream set (step S86). After the procedure after step S84 has been applied to all streams, the document storing process terminates (step S87).

When the stream created in the editing process is stored, the created stream is added to the stream set which includes the stream before editing, and the designated attribute is associated with the stream.

The above-described embodiment adopts an algorithm which creates a document by traversing the document structure from the root anchor, and for each encountered anchor, selecting a stream which satisfies a selection condition from the associated stream set. But other algorithms may be adopted to create a document. For example, an algorithm first selecting all streams which satisfy the selection condition from all stream sets included in the document structure, and then constructing a document with the selected streams may be adopted.

Further, in the above-described embodiment, users are prompted to designate an extraction condition every time they invoke the document editor. But processing designated by a condition that was designated at the most recent editing or a default condition, when no particular condition is designated, may be adopted. As the default condition, "%user" should be designated as user information if enabling each user to edit the document consistently under collaborative writing is the most important requirement. If enabling each user to edit the latest document at any time is the most important requirement, no condition should be designated as the default.

Furthermore, in the above-described embodiment, a new version name is added to the document structure only when editing the document. But a new version name may be added when referring to the document. This extension enables retrieving the document structure when the document is referred to.

Further, in the processing to select the stream of the above-described embodiment, it is assumed that the boundary date is after the date of the designated version. But when the boundary date is earlier than the date of the version, the stream selecting process can be carried out by adopting one of the following rules.
(1) Give the designation of the version priority over that of the boundary date.
(2) Prohibit designating a boundary date which is earlier than the date of the designated version. In this case, means to register the date of the designated version is further needed, because the date of the designated version is not registered in the stream attribute of the above-described embodiment.

Furthermore, in the above-described embodiment, when the version is designated, the version information is added to the stream attribute. But instead, a new stream may be created and added. Further, in the above-described embodiment, the version is designated by the user explicitly, but it is also possible to automatically designate the version when, for instance, printing is executed.

Further, in the above-described embodiment, an anchor name, such as "claims", is managed by associating it to the stream which includes the anchor. Therefore, if the anchor name is changed, a new stream is created. But it is also permissible to manage the anchor name independently, or to manage the anchor name as a name of the stream referenced by the anchor.

The above-described embodiment adopts a structural model which represents the document structure by using a unit called "stream" as the logical unit group. But this invention is not limited by this structural model of the document. For instance, this invention can be applied to a document structure represented by a tree structure consisting of nodes and links as described in the conventional art. In the document structure consisting of nodes and links, a set of links started from one node corresponds to the logical unit group in the present invention. In other words, the distinctive feature of this invention is to manage the version of the unit, such as the set of links or the stream, and to provide means for applying appropriate processings, such as copying, storing or adding attributes, to the unit in every editing process.

For instance, the function of the present invention can be provided by extending the invention disclosed in Hei 6-35914 as follows. A node which is not a leaf is extended to hold a list of links to lower level nodes as the content of the node, and to create associated version nodes which hold different lists of links. By this extension of the prior art, the lower node and the list of the links to the lower level nodes are treated as the reference unit and the logical unit group of the present invention, respectively.

Furthermore, this invention can adopt the data structure disclosed in the compounded document processing system explained in the prior art references (Hei. 7-44563 and Hei. 6-131343) as the document structure. In this case, a set of child node pointers included in a node in the data structure of the prior art corresponds to the logical unit group in the present invention.

The compounded document processing system provides means for compounding nodes. In addition, the present invention provides means for compounding a set of the child node pointers when editing. That is, the present invention not only compounds nodes but copies, stores and adds attributes to the set of child node pointers of the node, when the document is edited. More particularly, when the document is updated, a set of the child node pointers is automatically copied, and the date, the user and the name of the version are designated as attributes of the set of the child node pointers. Needless to say, if the user operates these processing manually, the editing operation is extremely complicated. Therefore, a subject of the present invention is, by carrying out this complicated processing automatically and appropriately by computers, to decrease the burden of the operation drastically when a plurality of authors carry out collaborative writing.

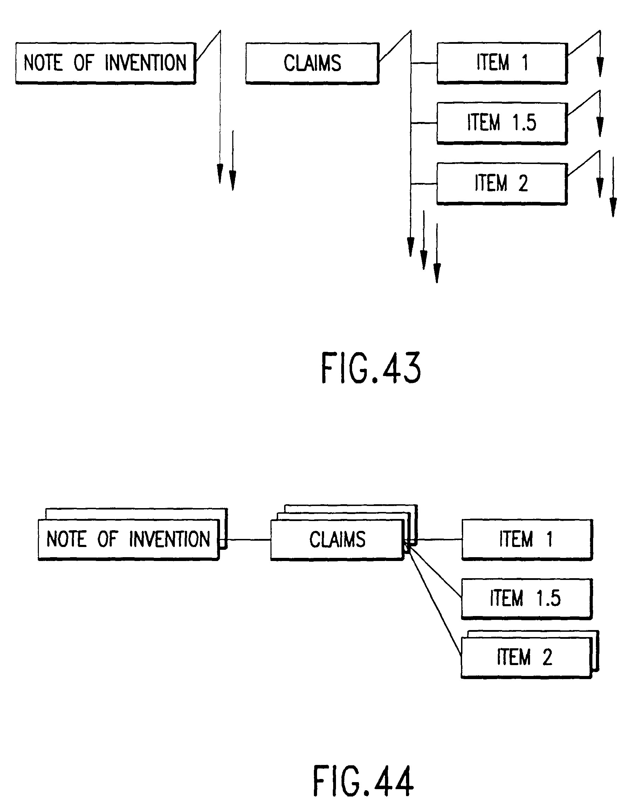

The above-described embodiment shows an example of the document structure displayed with the text in the content portion. But it is also possible to display only the document structure without displaying the contents of the text as shown in Figs. 43 and 44.

In Fig. 43, an anchor and a stream are displayed as a rectangle and an arrow, respectively. The stream is in a stream set displayed as a number of arrows equal to the number of streams to show existence of the alternatives. In Fig. 44, the document structure is displayed by a tree structure consisting of anchors which reference streams. Alternative streams referenced by an anchor are displayed as a number of shadows equal to the number of alternatives at the right shoulder of the rectangular element associated with the anchor.

In the following, an embodiment of a structured data processing apparatus according to the present invention is explained. Comparing with the above-described document processing apparatus, a content unit, a reference unit and a logical unit group are respectively correspond to a node, a link and a set of links which associates with a particular editing process. The following explanation of this embodiment includes an example to generate a structure which has not been before.

At the beginning of the explanation, variations of structured data with which can be dealt in this embodiment.

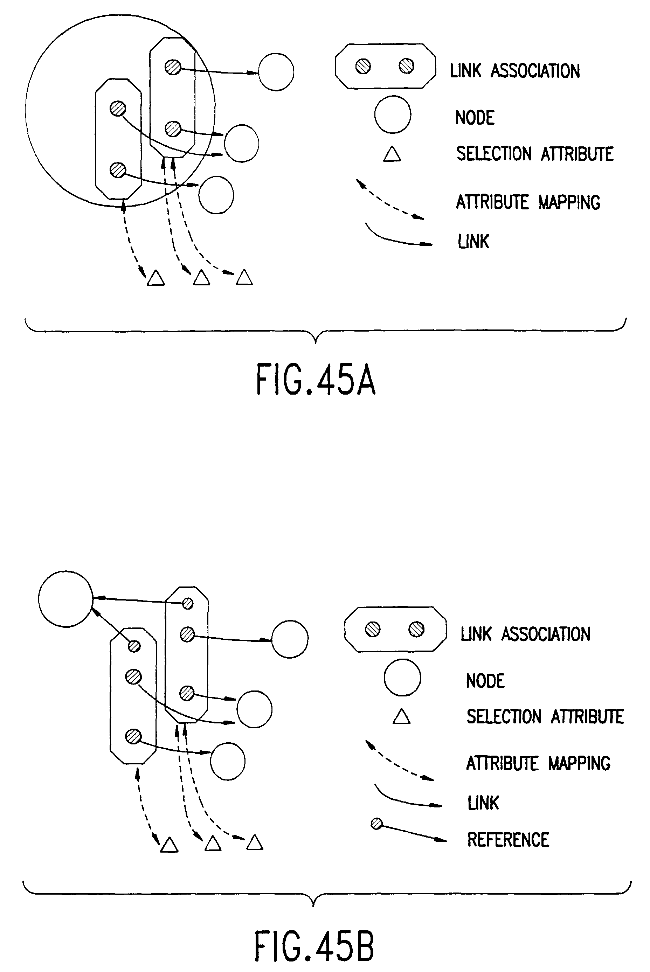

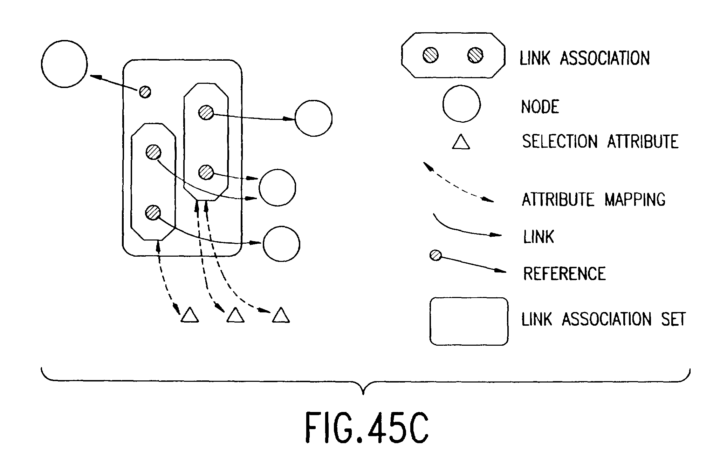

Figs. 45A through 47C shows variations of data storage method of nodes, links, link associations, document contents, attribute mapping and selection attributes. The essential difference of this method from conventional methods is that this method registers plural sets of link associations each of which collects links starting from a particular node, and manages the link associations by using attributes information mapped onto each of them. The necessary condition to organize this invention is managing information to represent above-described data structures as the following variations.

Figs. 45A through 45C show variations of implementations of a link association. The structure shown in Fig. 45A stores plural link associations which start from a node in a description of the node. This structure implements a link association as a list of pointers to the end nodes, since the common start node is obvious from the definition. As described in later, this embodiment adopts this structure to represent a current structure, which is stored to be edited in the current structure management means 21.

The structure shown in Fig. 45B represents a link association as a list of pairs of pointers to a start node and to an end node. The structure shown in Fig. 45C stores a set of link associations which have a common start node as a link association set, and the link association set references the common start node. As described in later, this embodiment adopts the structure shown in Fig. 45C to represent a hyper structure which is stored in the hyper structure management means 20.

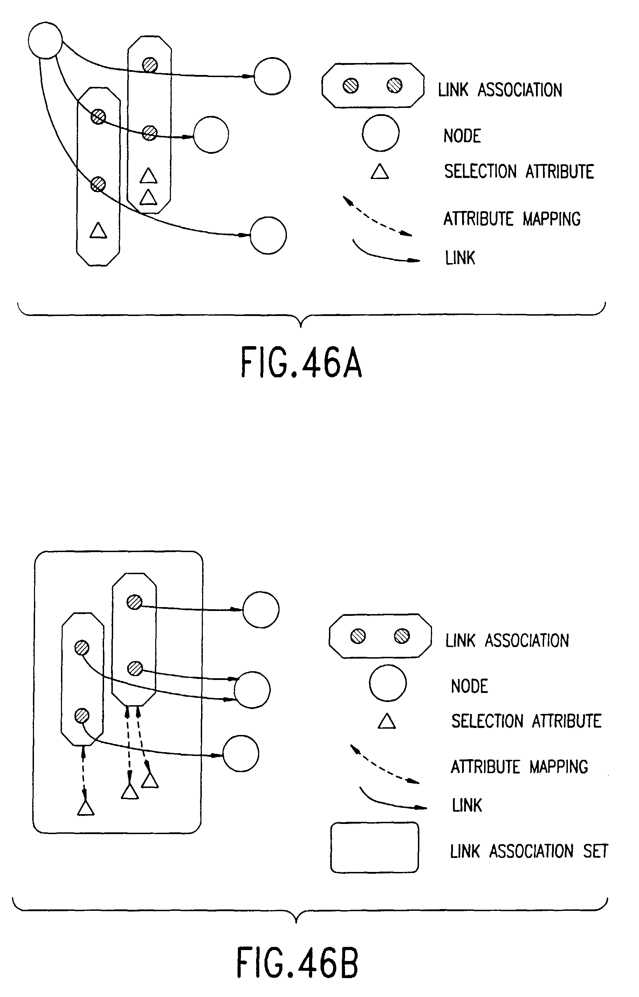

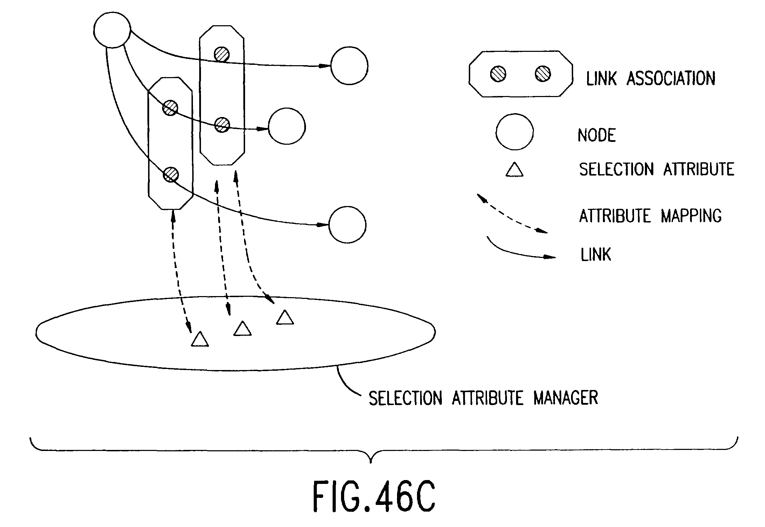

Figs. 46A through 46C show variations of implementation of attribute mapping. In the structure shown in Fig. 46A, a description of a link association includes a selection attribute, which is explained later. In the structure shown in Fig. 46B, a link association set maps to a selection attribute to each link association. In the structure shown in Fig. 46C, a selection attribute manager maps a selection attribute to a link association. This embodiment adopts the structure shown in Fig. 46A.

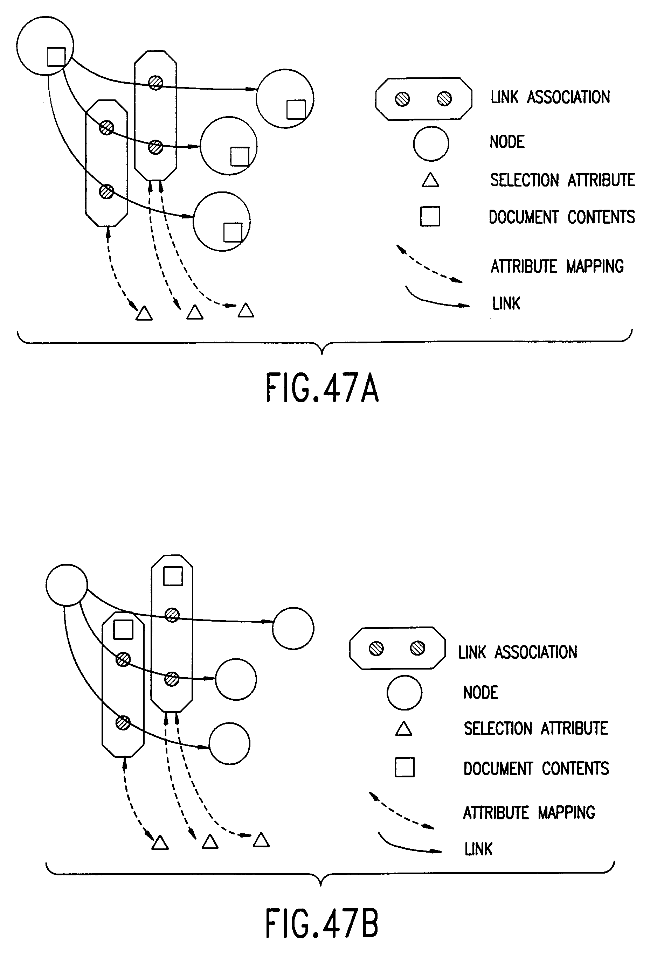

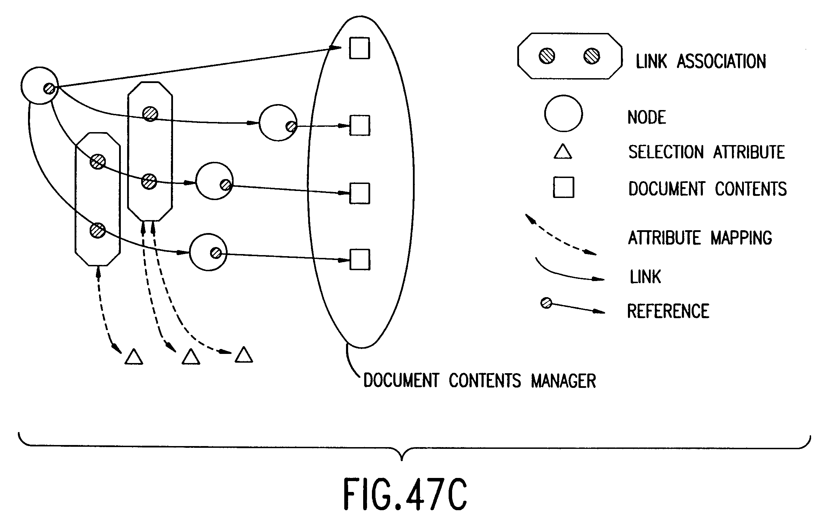

Figs. 47A through 47C show variations of document contents storing methods using nodes. In the structure shown in Fig. 47A, document contents are described in a node. In the structure shown in Fig. 47B, document contents are described in a description of link association. In the structure of Fig. 47C, a node references document contents managed by a document contents manager. This embodiment adopts the structure shown in Fig. 47B.

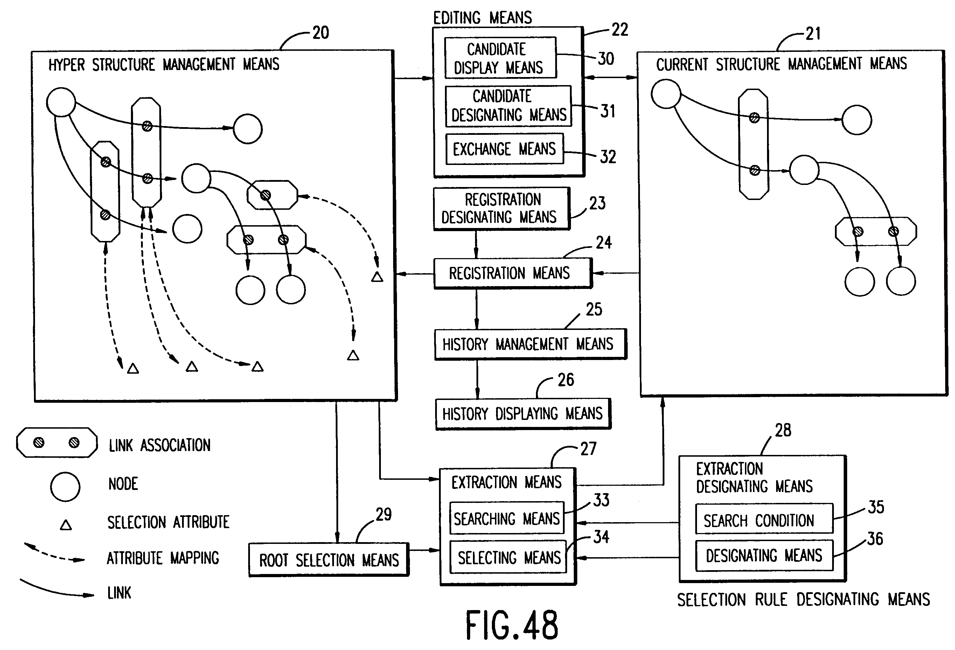

Fig. 48 shows a block diagram of the structured data processing apparatus according to this embodiment. This apparatus processes the above-described structured data.

The structured data processing apparatus provides hyper structure management means 20, current structure management means 21, editing means 22, registration designating means 23, registration means 24, history management means 25, history display means 26, extraction means 27, extraction designating means 28 and root selection means 29.

Hyper structure management means 20 stores and manages structured data formalized as a graph structure. The structured data consists of nodes, links, link associations, selection attributes and attribute mapping.

A node is a minimum unit to construct structured data. In this embodiment, which operates structured document data, a node stores text information as document contents. A document structure, which is operated as a current structure , is a tree structure in which nodes are connected with links.

A link is a unit representing a connecting relationship between two nodes and is defined by a pair of a start node and end node. In this embodiment, a description of 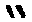 LinkList*"* object, which describes link associations, includes links. The hyper structure management means 20 includes node storing means and link storing means stated in claims.

A link association is an object which represents a set of links which are started from a particular node and relation among links in the set. A link association holds a link list, and assigns a position to each of the links in the set. This embodiment assigns each of the links a position in a sequential order in the set.

A selection attribute corresponds to the selection information in the previous embodiment, and is attribute information to select one from the link associations started from a particular node. This embodiment uses a creation date, an author name and a list of version names as selection attributes.

Attribute mapping is a description which associates a selection attribute with a link association. In this embodiment, 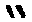 LinkList*"* object, which describes a link association, holds selection attributes.

The current structure management means 21 stores document structure data represented by a tree structure, which is also a particular kind of a graph structure, consisting of nodes, links and link associations in a memory, and manages it. A document structure stored in the current structure management means 21 is operated in the editing process. In this embodiment, a description in 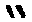 Node*"* object, which describes a node, includes a description of a link association and link.

The editing means 22 carries out an editing process, such as creation, update and deletion of nodes, links, and link associations included in a document structure in accordance with a user*'*s command. The editing means includes candidate display means 30, candidate designating means 31 and exchange means 32. The candidate display means 30 displays link associations started from a particular node on the display screen. In this embodiment, it displays link associations started from the node which the user designates. The candidate designating means 31 selects one from the link associations displayed by the candidate display means 30 in accordance with a user*'*s command. The exchange means 32 replaces the link association which is currently selected, by the link association designated by the user.

The registration designating means 23 receives an instruction from the user, to register the document structure managed by the current structure management means 21 to the hyper structure management means 20. The registration means 24 registers a document structure to the hyper structure management means 20 in accordance with the instruction received by the registration designating means 23. By the registration process, nodes and link associations in the current structure are stored in the hyper structure, and appropriate attribute information is mapped to link associations.

History management means 25 manages registration history of current structures. It stores a registration history every time when the document structure managed by the current structure management means 21 is registered to the hyper structure management means 20. This embodiment records a set of a registration date, an author name and a version name designated at the registration as a session.

History display means 26 displays a list of the information of sessions which is managed by the history management means 25, on the display screen.

The extraction means 27 extracts a document structure from the hyper structure management means 20 in accordance with a user*'*s command, and transfers the extracted document structure to the current structure management means 21. This means includes searching means 33 and selecting means 34. The searching means 33 searches the link associations started from a particular node for all the link associations satisfying the conditions designated by the user. The selecting means 34 selects one link association from the link associations found by the searching means in accordance with the selection rule designated by the user.

The extraction designating means 28 receives a designation of an extraction condition from the user, and includes search condition designating means 35 and selection rule designating means 36. In this embodiment, the selection condition and selection rule can be designated as the extraction condition. The search condition designating means 35 receives selection conditions, which are used for searching link associations, from the user. In this embodiment, a selection condition includes a date, a version name and an author name. Selection rule designating means receives a selection rule from the user. In this embodiment, a selection rule is one of the user priority, date priority and version name priority.

The root selection means 29 selects a node to be the root node of a current structure from the hyper structure stored in the hyper structure management means 20. This embodiment selects link associations one by one from the root node to the lower level to generate a current structure to be stored in the current structure management means 21.

This embodiment implements each of the above-described functional means 20 through 36 as the programs carried out by a processor.

The extraction designating means 28, history display means 26 and editing means 22 display interactive windows to show information to the user and to receive instructions or information from the user.

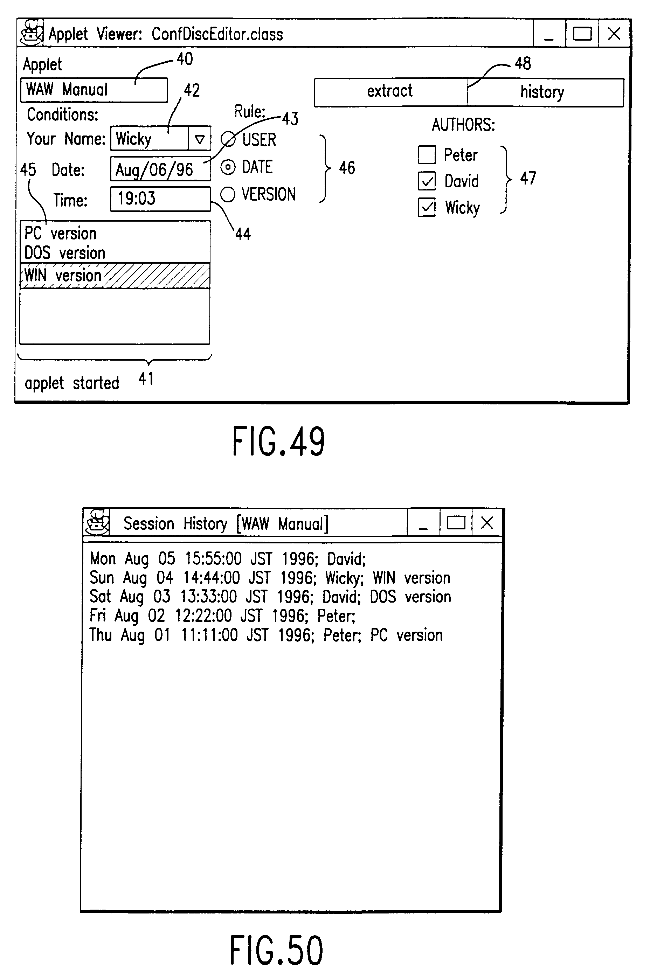

The extraction designating means 28 displays a window shown in Fig. 49. This window provides the following functions.

Root node name input area 40 is an area to input a node name to be the root of a document extracted from the hyper structure management means 20. Search condition input area 41 is an area to input a selection condition. The search condition input area 41 includes user name input area 42, which is an area to input a name of the current user, date input areas 43 and 44, which are areas to input a date and time when the required state of a document data existed, and version name input area 45, which is an area to input a version name of the required document.

Selection rule input area 46 is an area from which the user selects a selection rule. When the user priority (USER) is selected, selecting means 34 selects a link associations which matches the designated user with priority from all link associations which satisfy the selection condition. When the date priority (DATE) is selected, selecting means 34 selects one which has the latest creation date before the designated date with priority from all link associations which satisfy the selection condition. When the version name priority (VERSION) is selected, selecting means 34 selects one which has the designated version name with priority from all link associations which satisfy the selection condition.

Author selection area 47 is an area where the user selects authors other than the user, which is the user condition in the selection conditions.

Operation button area 48 provides 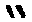 extract*"* button and 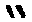 history*"* button. When the 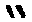 extract*"* button is selected, a process starts extracting a document data with the designated root node as a start point from the hyper structure management means 20 in accordance with the selection condition and selection rule, and activates the history management means 25 at the same time. When the 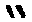 history*"* button is selected, history display means 26 is activated to display the registration history of the document.

Fig. 50 shows an example of the registration history displayed on the screen by the history display means 26. Each element of the list of history, shown in a line, indicates information concerning one registration process, that is, a date, a user name and a version name.

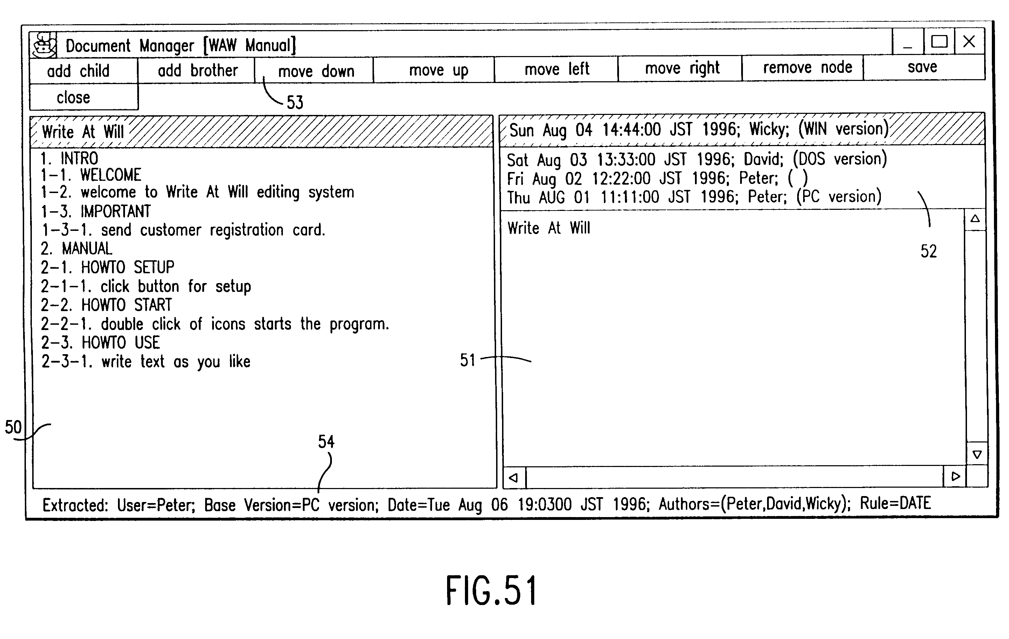

The editing means 22 displays a window shown in Fig. 51. A selection of the 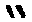 extract*"* button invokes generation and display of this window. This window provides document structure editing area 50, document contents editing area 51, candidate selection area 52, editing buttons 53 and extraction condition display area 54.

Document structure editing area 50 displays a document data structure extracted by the extraction means 27. The user can select a node included in the displayed document structure by using a pointing device.

The document contents editing area 51 displays contents of the node selected on the document structure editing area 50. The user can edit the displayed text contents to update the contents of the selected node.

The candidate selection area 52 displays a candidate list consisting of all link lists started from the selected node, and inverts the currently selected link list. The user can select a link list from the candidate list by using a pointing device, and replace the currently selected link list by the selected one.

The editing buttons 53 provides the following buttons, and the user can edit and store a document by using these buttons. When 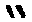 add child*"* button is selected, a child node of the currently selected node is created. When 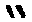 add brother*"* button is selected, a brother node of the currently selected node is created. When 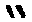 move down*"* button is selected, the currently selected node moves to the latter position in the same level. When 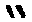 move up*"* button is selected, the currently selected node moves to the earlier position in the same level. When 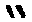 move left*"* button is selected, the currently selected node moves to the directly ascending level. When 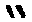 move right*"* button is selected, the currently selected node moves to the directly descending level. When 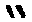 remove node*"* button is selected, the currently selected node is removed. When 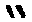 save*"* button is selected, the document stored in the current structure management means 20 is stored as a part of the hyper structure which is managed in the hyper structure management means 20. When 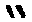 close*"* button is selected, all windows are closed and the editing process ends.

The extraction condition display section 54 displays a selection condition and selection rule, which are designated as a condition to extract a current structure.

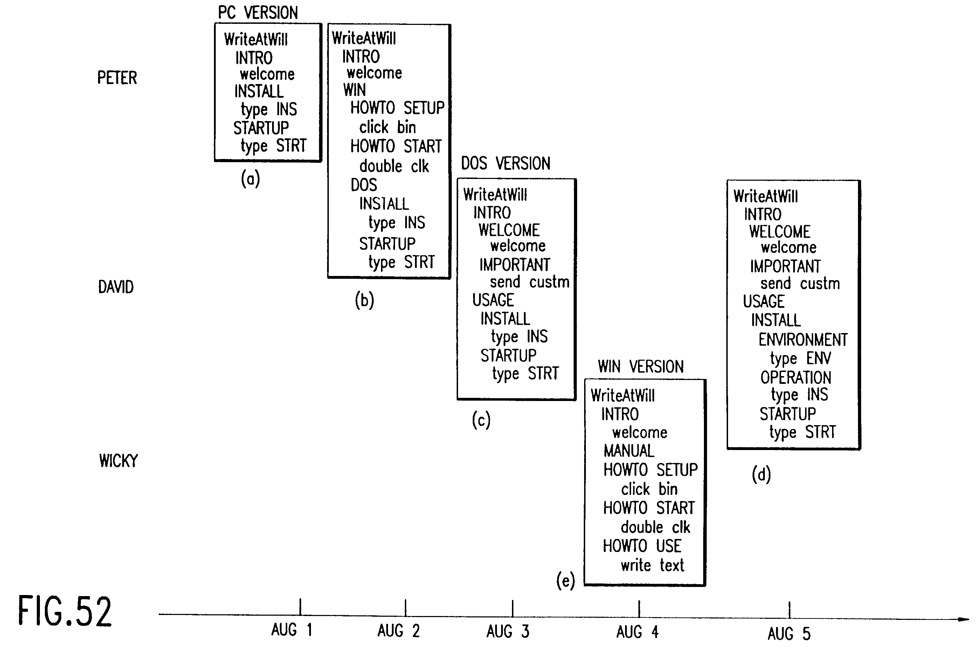

Next, a process of structured data in the embodiment is explained in detail with reference to an example shown in Fig. 52.

Fig. 52 shows a history of document editing activities by three authors, that is Peter, David and Wicky. In the figure, time passage and authors are on the horizontal axis and vertical axis, respectively. Document data structures (a) through (e) are stored (registered) in the hyper structure management means 20 by the author corresponding to the position of the vertical axis, at the time corresponding to the position of the horizontal axis.

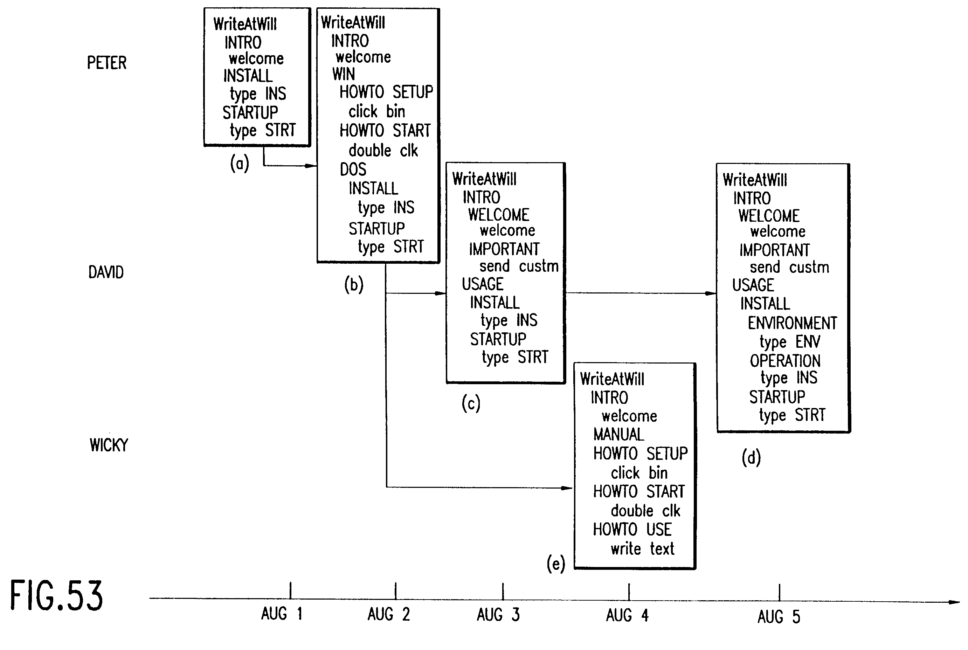

Fig. 53 shows an editing history represented by a conventional derivative tree. In the figure, an arrow is a derivation relationship, which indicates that the document structure of the end point is created from the document structure of the start point. Derivation relationships construct a derivation tree, which is a tree structure whose node is a state of a document at a point of time.

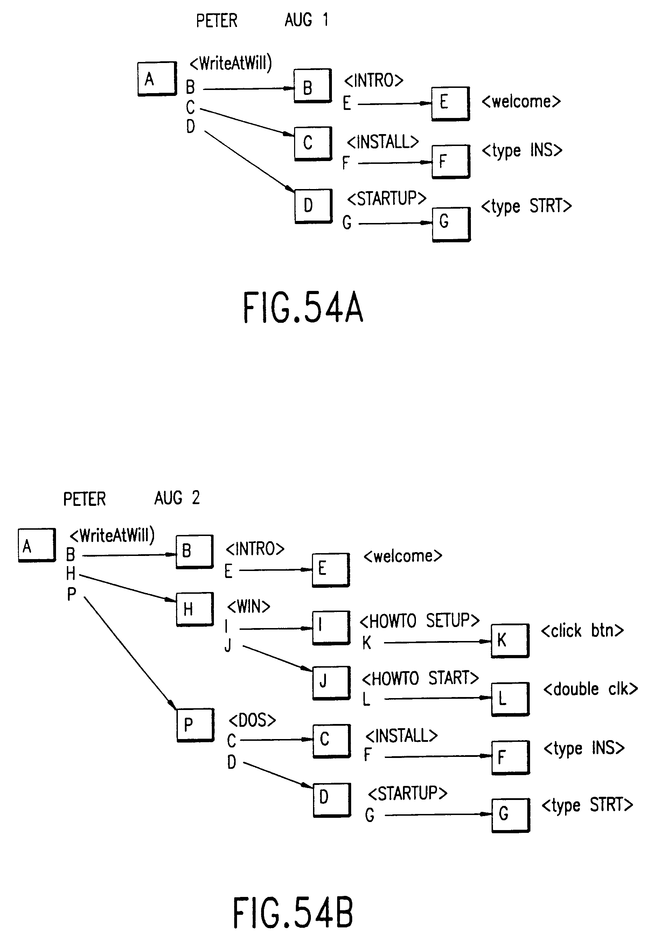

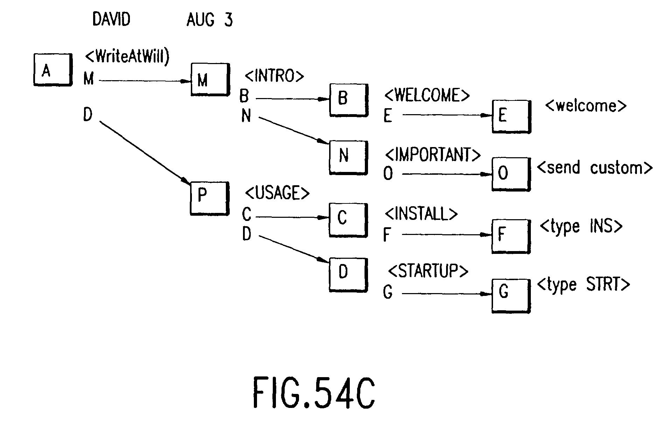

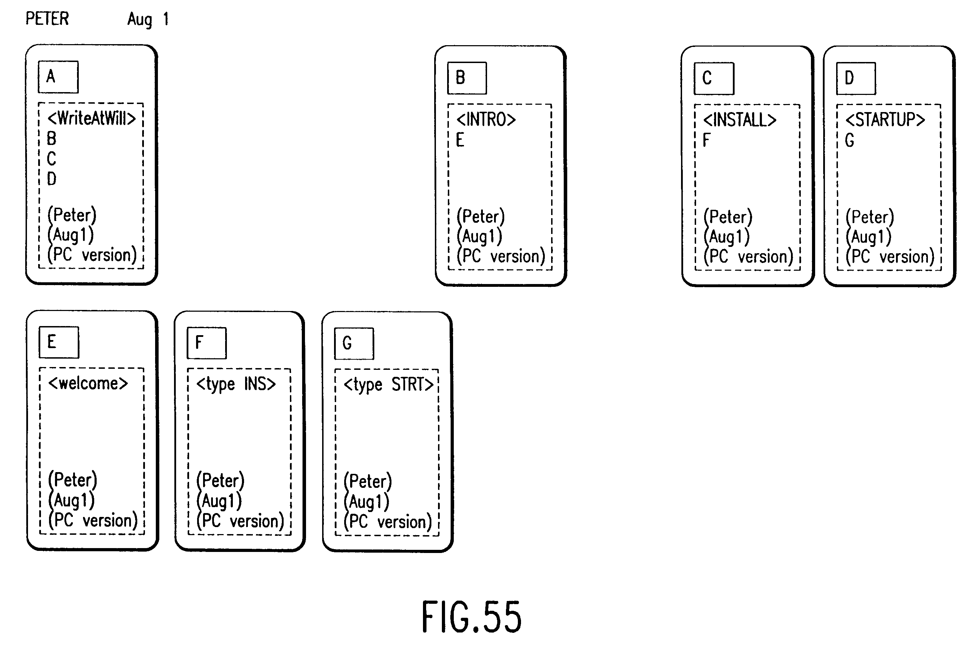

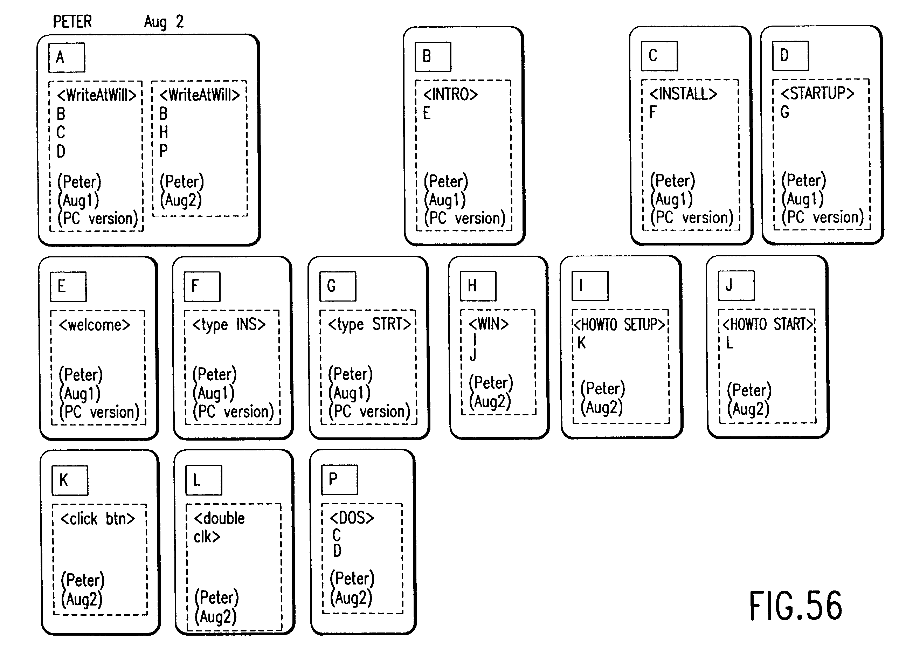

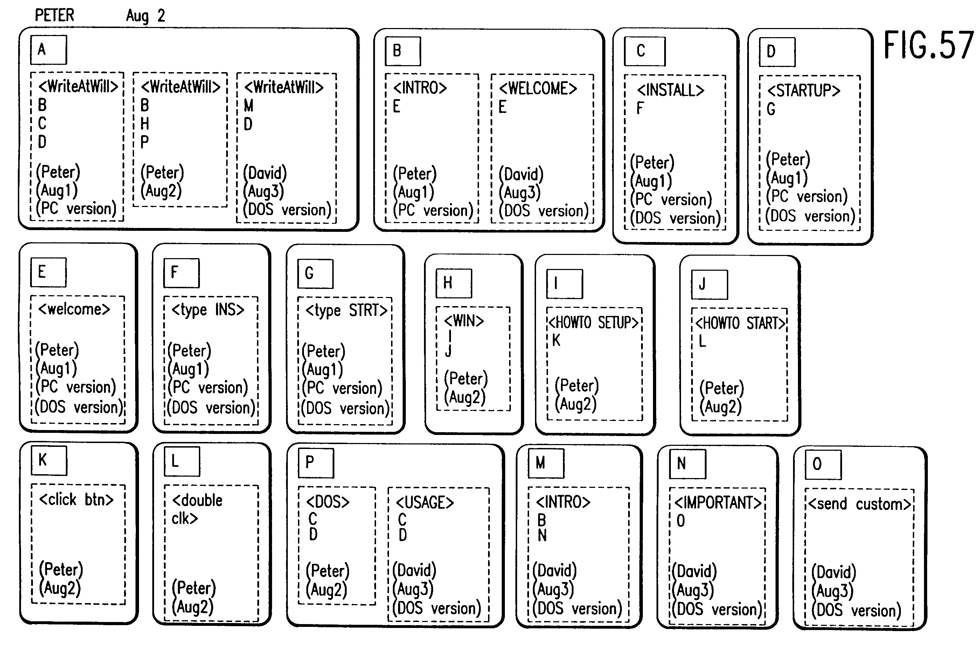

Fig. 52 shows a tree structure of a document structure as an indented text. Figs. 54A, 54B and 54C show data structures respectively corresponding to tree structures of the document structures (a), (b) and (c) in Fig. 52. Figs. 55 through 57 respectively show states of the hyper structure when the document structures (a) , (b) and (c) in Fig. 52 are stored.

In this example, Peter, David and Wicky write a manual of the product 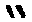 WriteAtWill*"* collaboratively. In the following, the details of their work are explained.

At the beginning, on 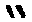 Aug 1*"*, Peter begins to write a manual of 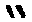 WriteAtWill*"*, and stores the document data (a) in Fig. 52, which is the first state of the document, with the name 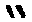 PC version*"*. Next, on 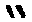 Aug 2*"*, since descriptions for two Operating systems, DOS and WIN, are required, he creates document data (b) in Fig. 52, which is created by dividing the document data (a) into two chapters, DOS and WIN, and stores it without name.

Later, it is determined that two different manuals should be respectively written by the different authors, and David and Wicky are assigned to each of them. On 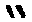 Aug 3*"*, David creates document data (c) shown in Fig. 52 by extracting descriptions for DOS from document data (b) and revising them, and stores it with name 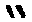 DOS version*"*. Further, on 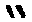 Aug 4*"*, Wicky creates document data (e) by extracting descriptions for WIN from document data (b) and revising them, and stores it with name 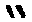 WIN version*"*.

Then, on 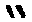 Aug 5*"*, David creates document data (d) by revising document data (c), and stores it without name.

In this case, this embodiment can produce a document which were not in any time of the past. That is, this invention not only recovers an old document version as prior arts, but also extracts a document structure which has not been before.

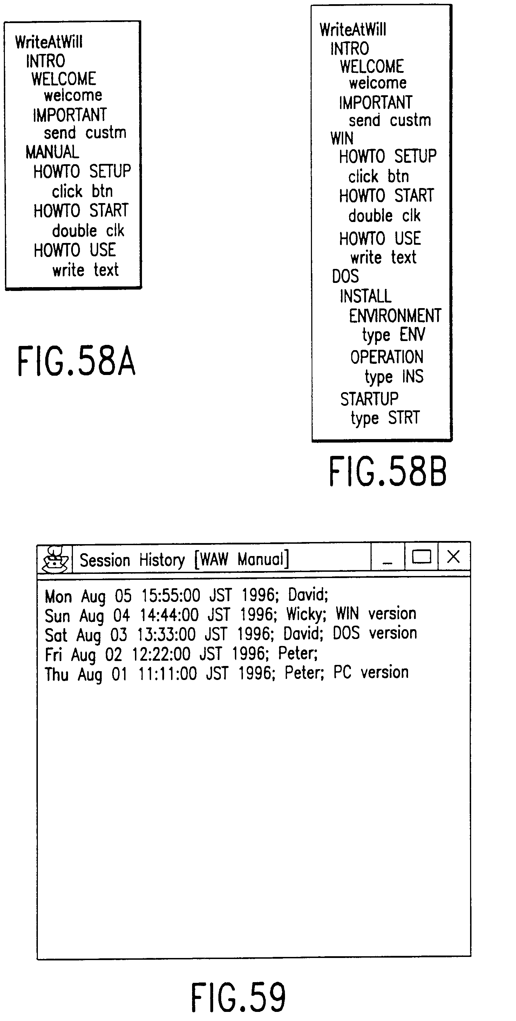

Document shown in Figs. 58A and 58B show document which is not included in the derivation tree shown in Fig. 53.

A structure of the document shown in Fig. 58A is created by replacing the structure following to 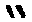 INTRO*"* in the document created by Wicky on 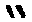 Aug 4*"* with the structure written by David on 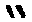 Aug 3*"*. For Wicky, the document shown in Fig. 58A keeps portions written by himself as it was and incorporates the latest information written by the other author.

Further, document shown in Fig. 58B combines the whole structure defined by Peter on 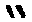 Aug 2*"* with the latest information written by the other authors.

As described above, this invention can easily produce a new document which has not been before and was not planned, by using portions of the old documents.

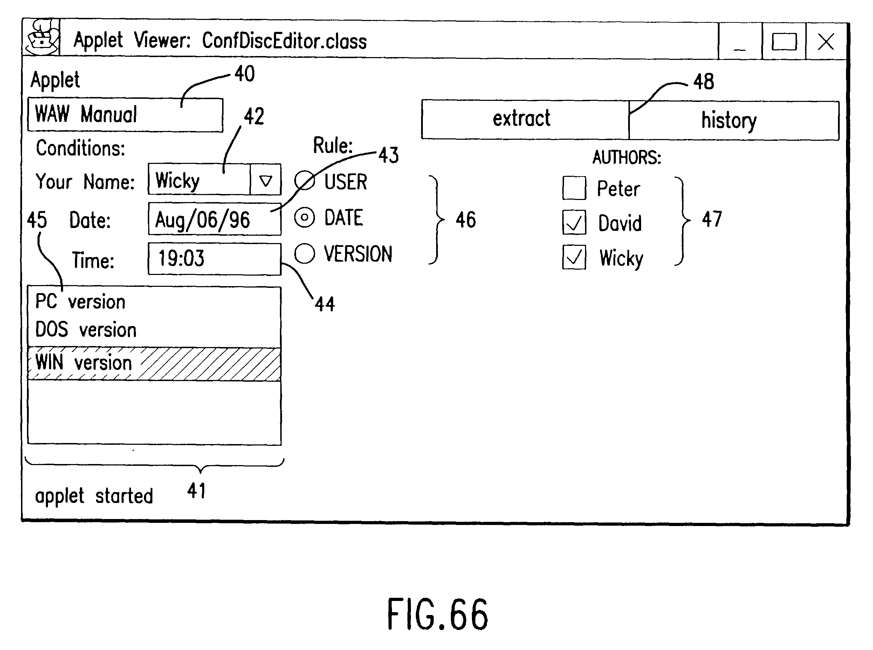

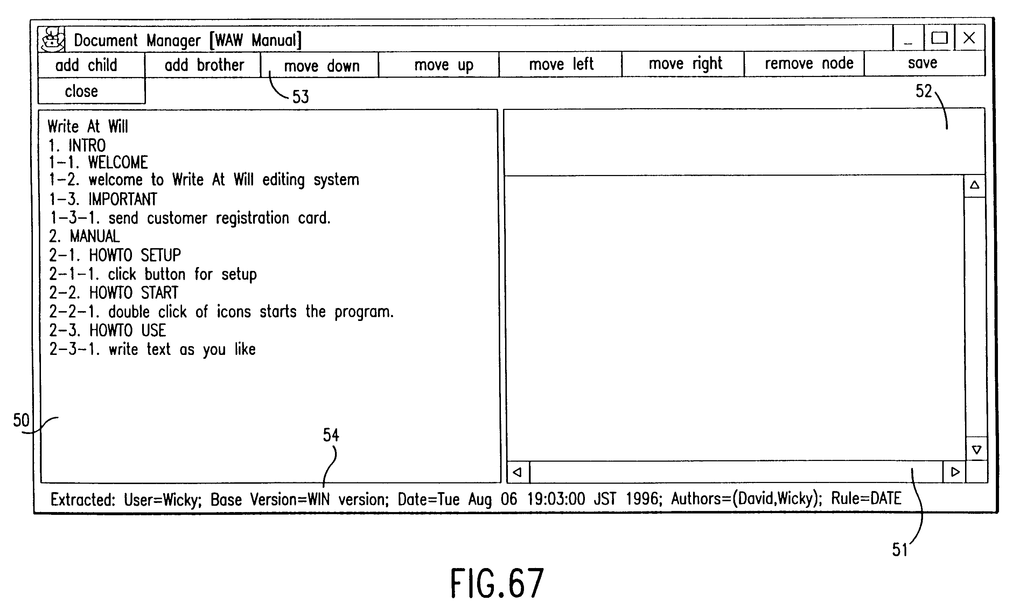

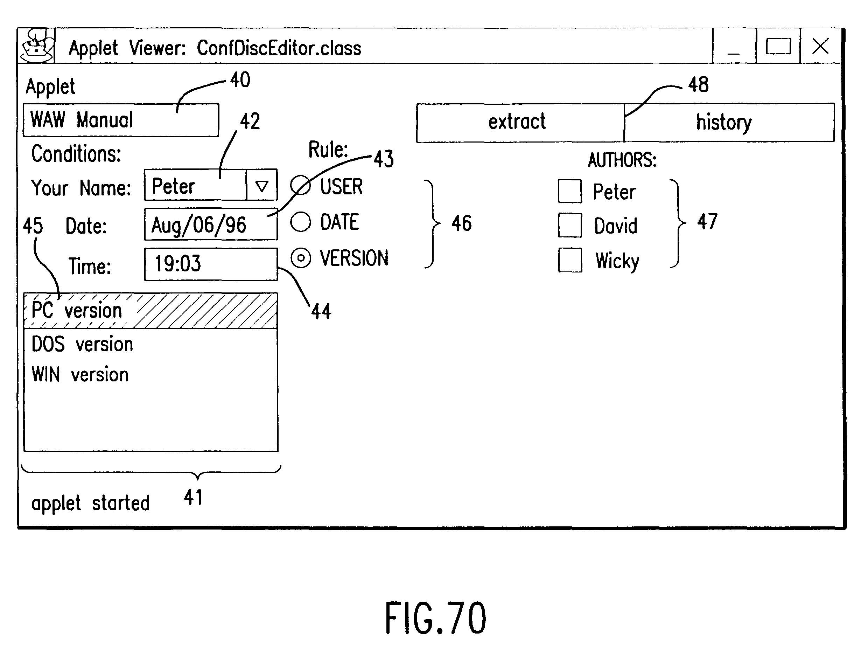

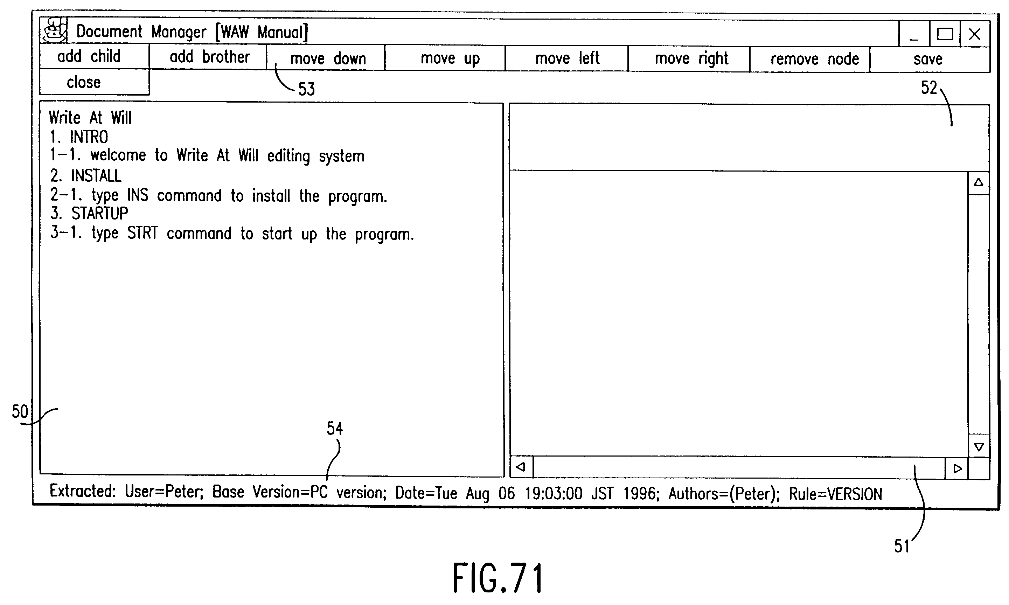

In the following, a document extract processing is explained in detail with reference to Figs. 59 through 74, which shows variations of selection conditions and extraction results when the user edits a document on 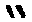 Aug 6*"*.

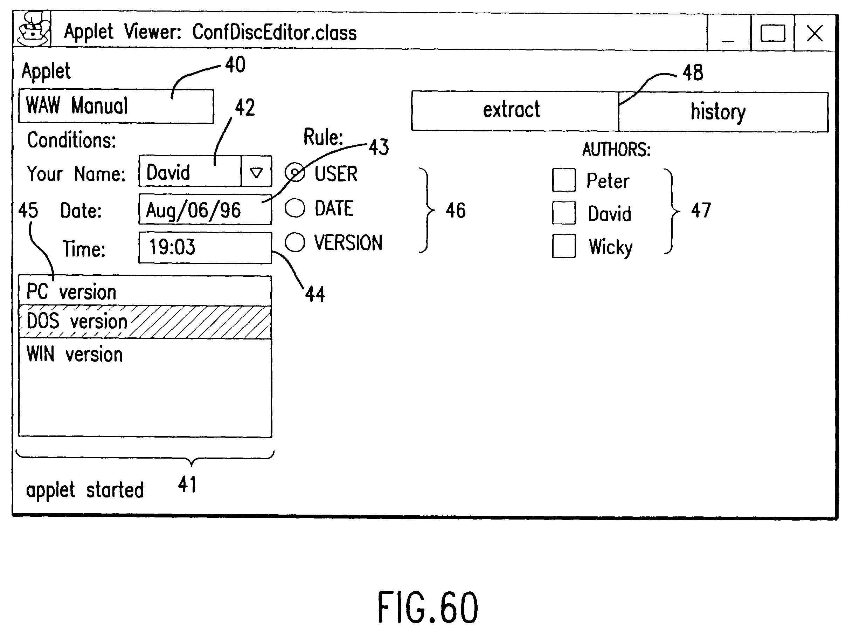

Fig. 59 shows a history of document registrations conducted before 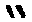 Aug 6*"* displayed by the history display means 26. Fig. 60 shows a window of a selection condition designated by David. On the window shown in Fig. 60, a title of the manual, 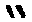 WIN Manual*"*, is inputted as the root node name to the root node name input area 40, user name 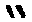 David*"* is inputted to the user name input area 42, date 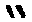 Aug/06/96*"* and time 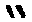 19:03*"*, which indicate a time limitation for searching document contents, are inputted to the date input area 43, and 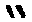 DOS version*"*, which indicates a version from which the search starts, is inputted to the version name input area 45.

Since this example designates nothing for the author selection area 47, which is provided for designating authors other than the user for searching document contents written by the authors, document contents created by the user David are searched.

Since this example selects 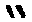 USER*"* in the selection rule input area 46, the document contents created by the user are selected with priority.

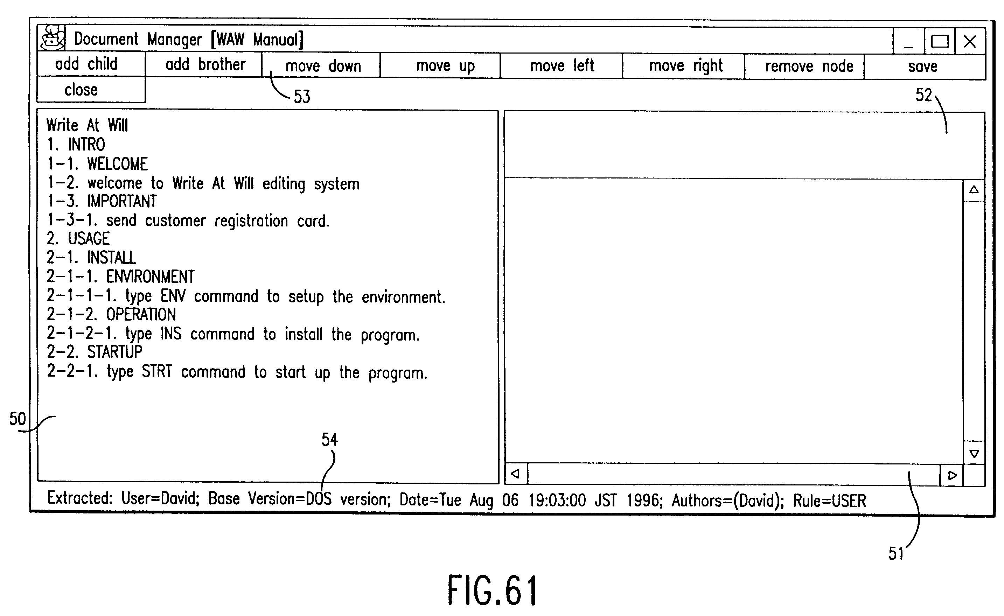

Fig. 61 shows an result of the document extraction from the hyper structure management means 20 under the condition shown in Fig. 60. The document extracted in this example is document (d) shown in Fig. 52.

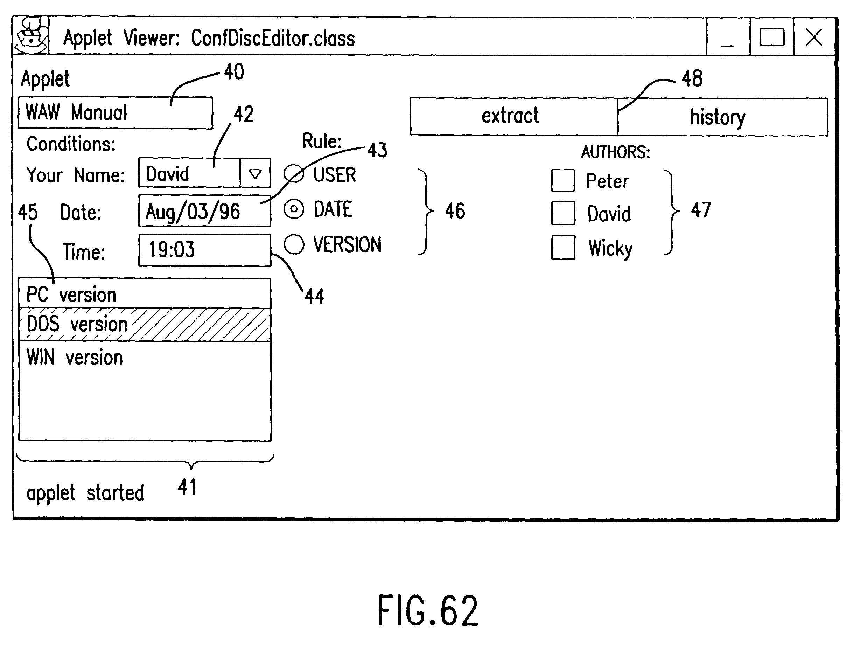

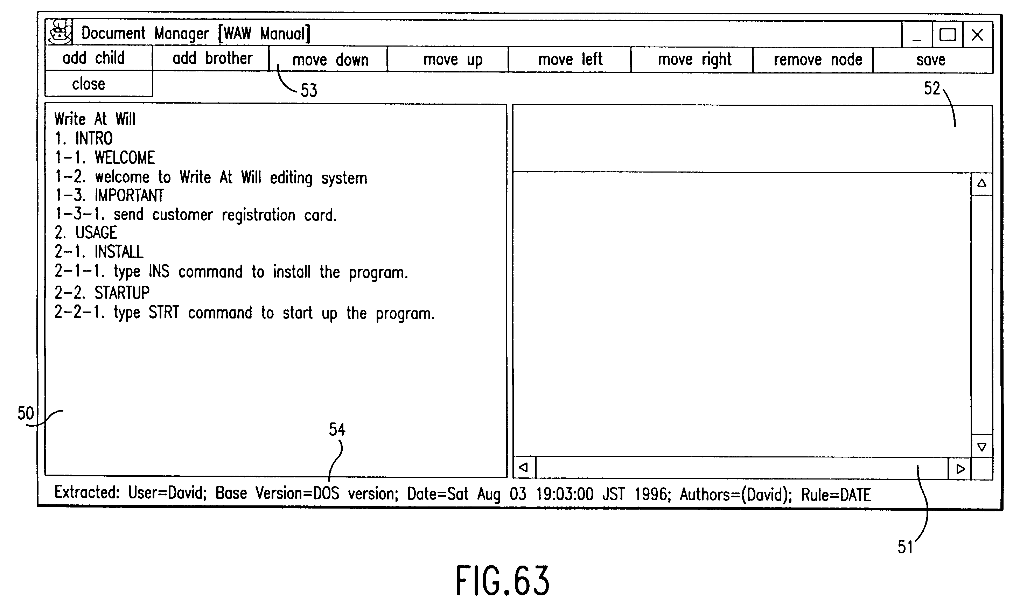

When the condition shown in Fig. 60 is changed to the condition shown in Fig. 62, where the date input area 43 designates 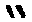 Aug/3/96*"*, a document which consists of the latest contents created before 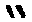 Aug 3*"*, is extracted. As a result, a document structure shown in Fig. 63 is extracted from the hyper structure management means 20 and is displayed in the window. In this case, the extracted document is document (c) shown in Fig. 52.

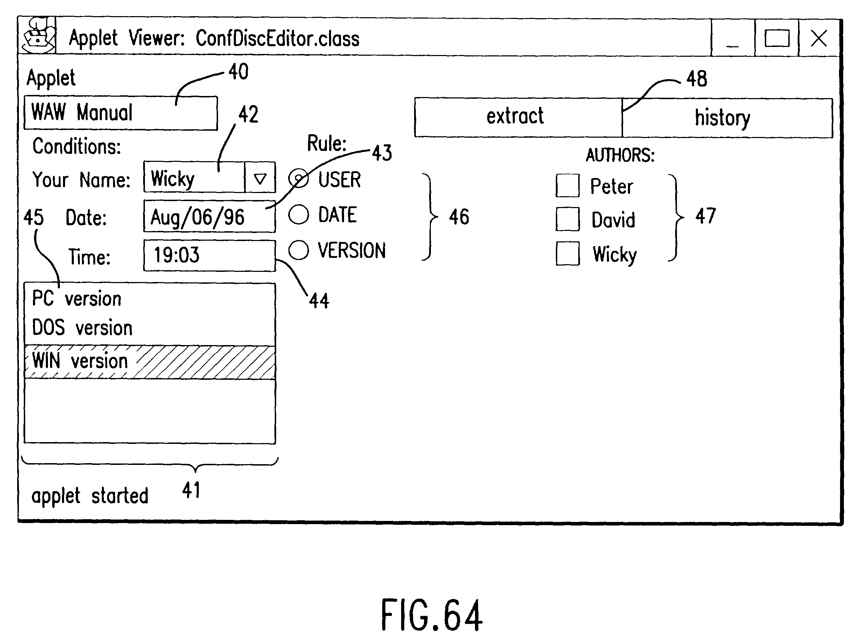

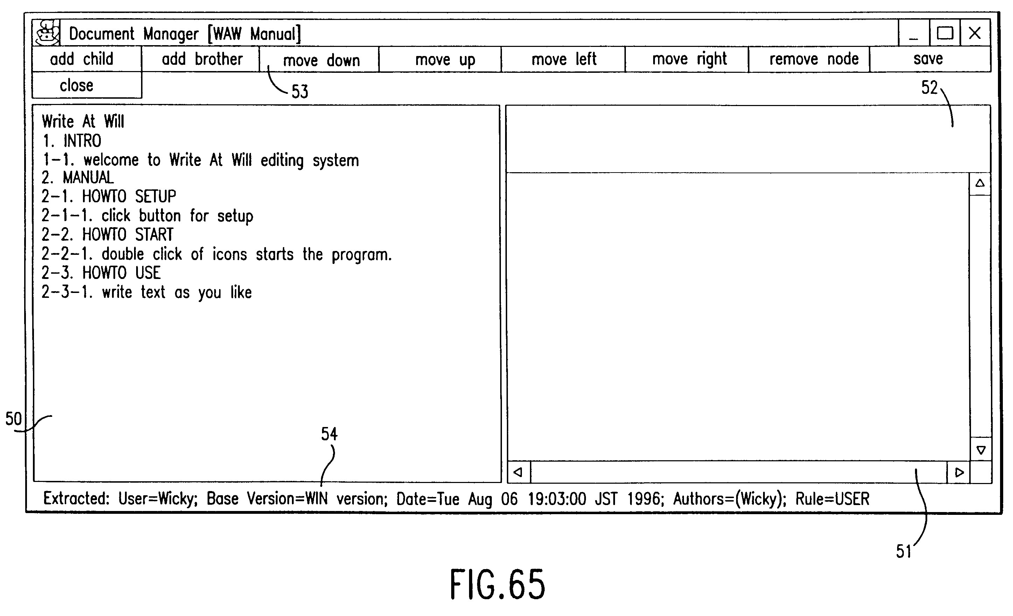

When the condition shown in Fig. 60 is changed to the condition shown in Fig. 64, where the user input area 42 and version name input area 45 respectively designates 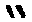 Wicky*"* and 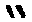 WIN version*"*, a document structure shown in Fig. 65 is extracted from the hyper structure management means 20, and is displayed in the window. In this case, the extracted document data is the document data shown in Fig. 58A, which is not included in the derivation tree shown in Fig. 52 and which conventional methods cannot extract.

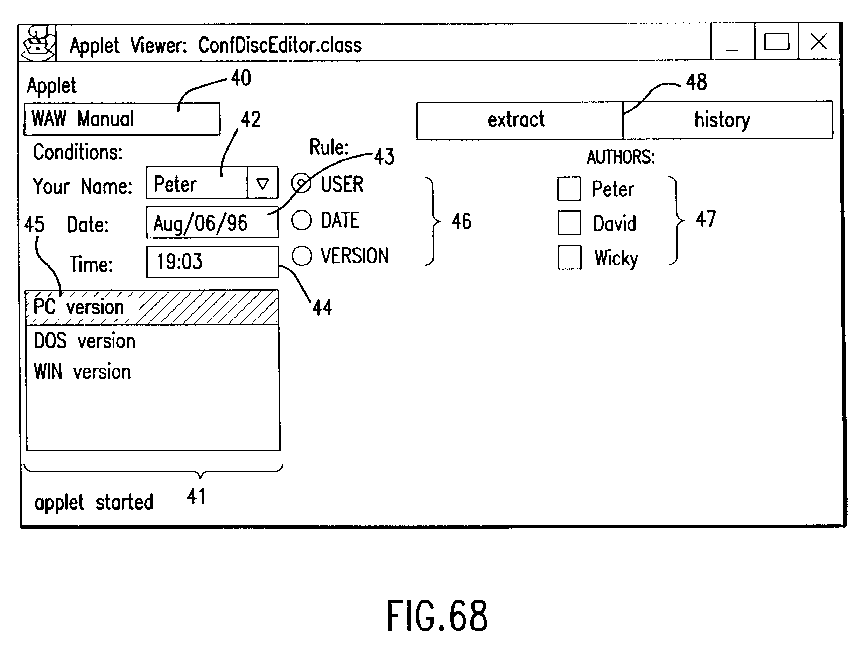

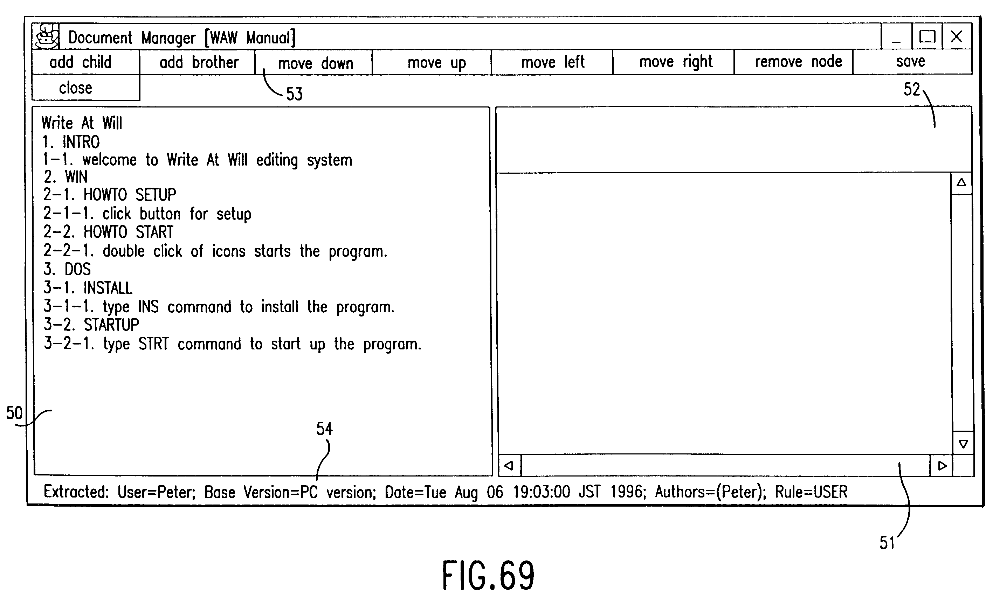

Further, as shown in Fig. 68, when the user name input area 42 designates 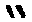 Peter*"* and the version name input area 43 designates 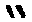 PC version*"*, a document structure shown in Fig. 69 is extracted from the hyper structure management means 20 and is displayed in the window. In this example, the extracted document is document (a) shown in Fig. 52.

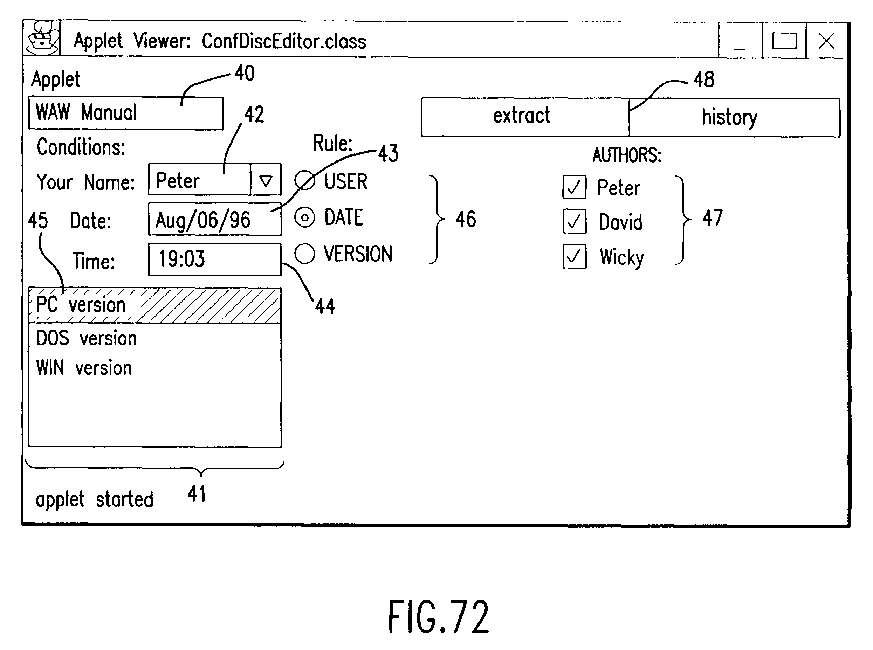

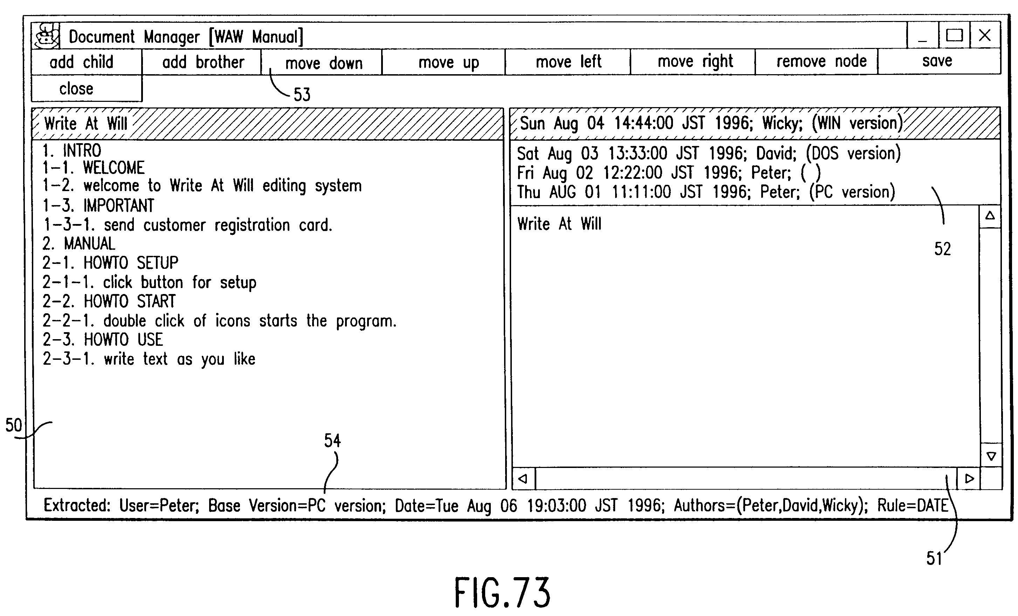

When the condition shown in Fig. 68 is changed to the condition shown in Fig. 72, where the author selection area 47 designates 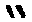 David*"* and 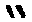 Wicky*"* as the other authors, the document structure shown in Fig. 73 is extracted from the hyper structure management means 20 and is displayed in the window. In this example, the extracted document is the document data shown in Fig. 58A, which is not included in the derivation tree shown in Fig. 52 and which conventional methods cannot extract.

Here, the window shown in Fig. 73 displays candidates of link lists, which are alternatives for the top level node, on the candidate selection area 52, and inverts the current selection. This example indicates that a link list which is created by Wicky and whose version name is 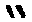 WIN version*"*, is selected from the four alternatives by inverting the selection.

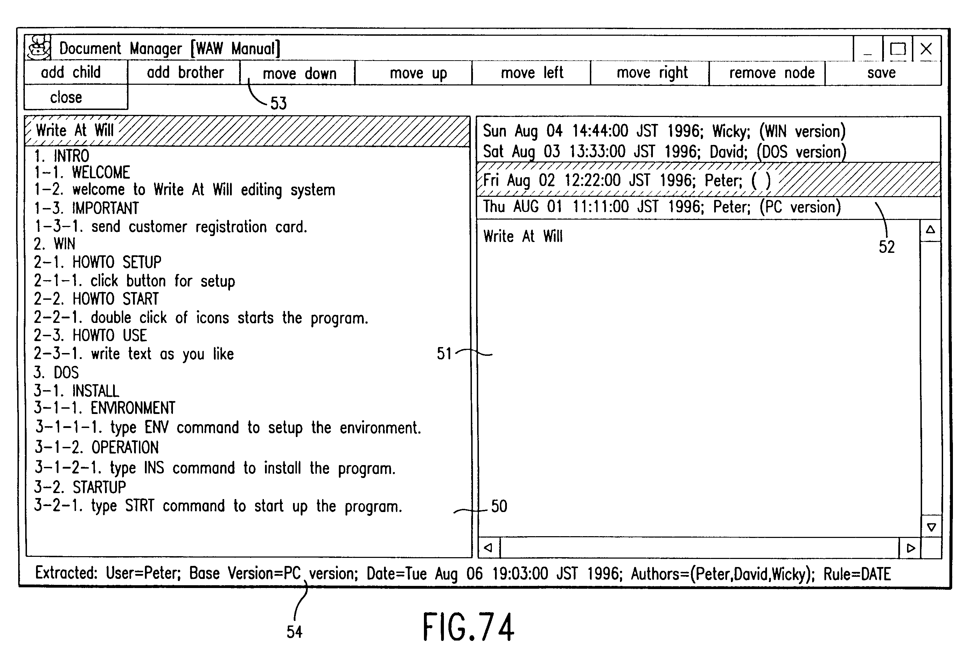

Fig. 74 shows a result of the operation that replaces the currently selected link list with a link list created by Peter, which is displayed as a selection alternative in Fig. 73. As a result, the apparatus extracts the document data shown in Fig. 58B, which is not included in the derivation tree shown in Fig. 52 and which the conventional method cannot extract.

Next, data structures and algorithms used in this embodiment are explained.

This embodiment is implemented on 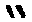 Windows 95*"* (registered trademark) and is written by language 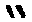 Java*"* (registered trademark). 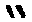 Java*"* is an object-oriented programming language, which describes a class definition including data structure called an object, and a procedure called a method, which the object can receive and execute.

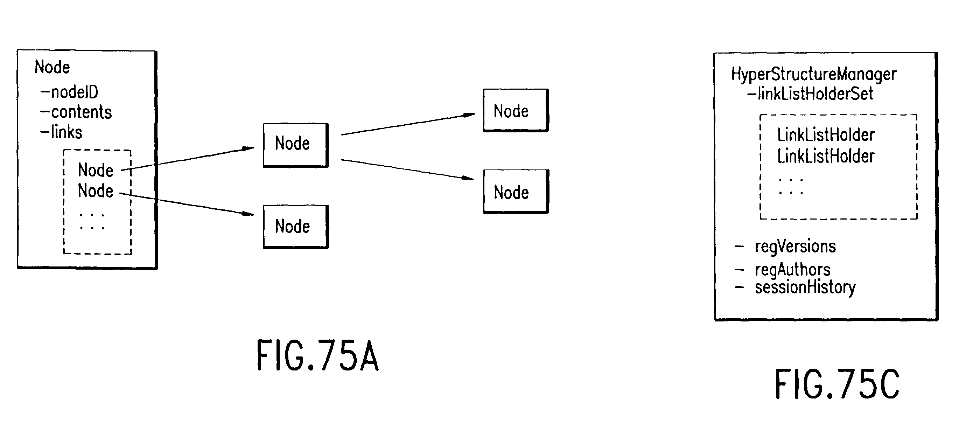

The following program lists shows the essential part of the Java program implementing this embodiment. The data structures and algorithms are explained with reference to these program lists. Data structures are shown in Figs. 75A through 75C.

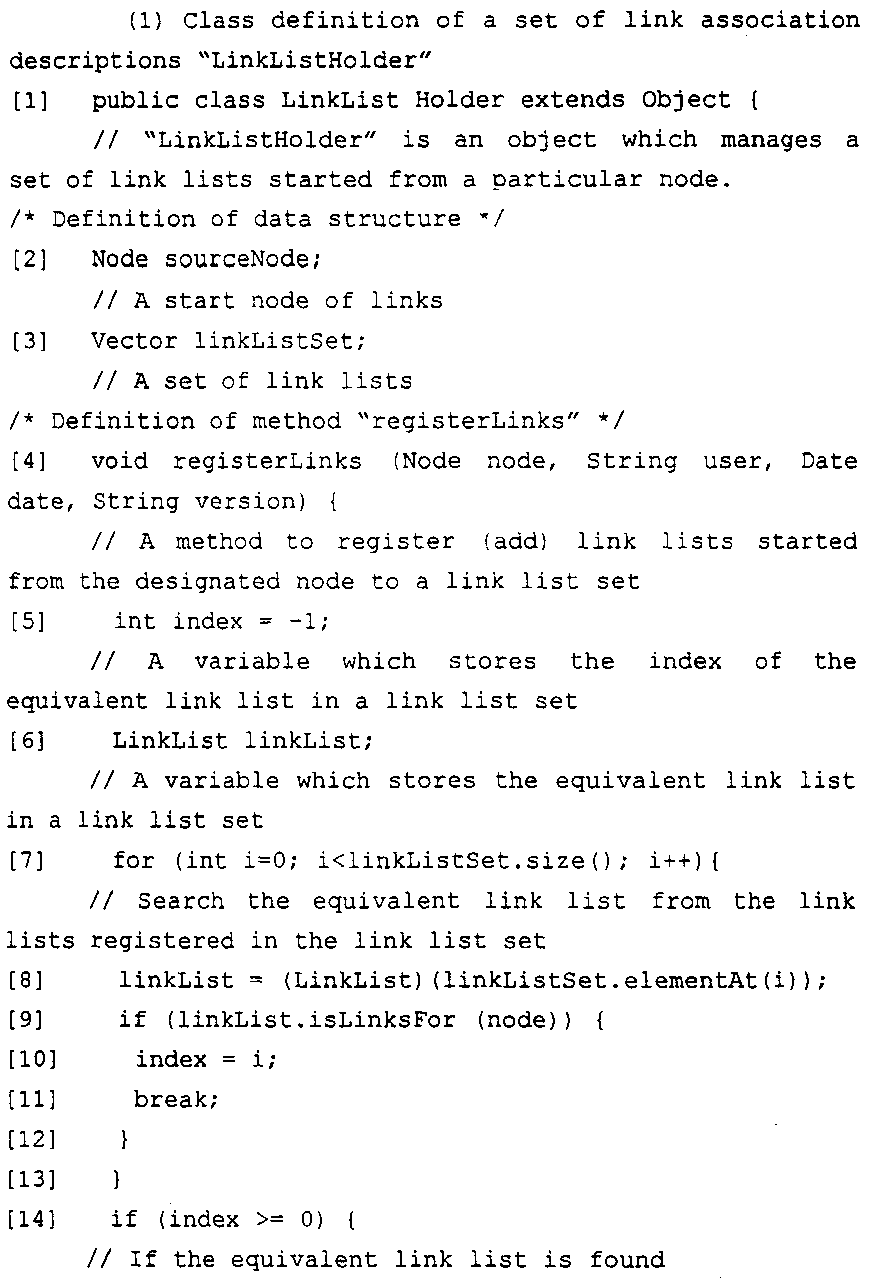

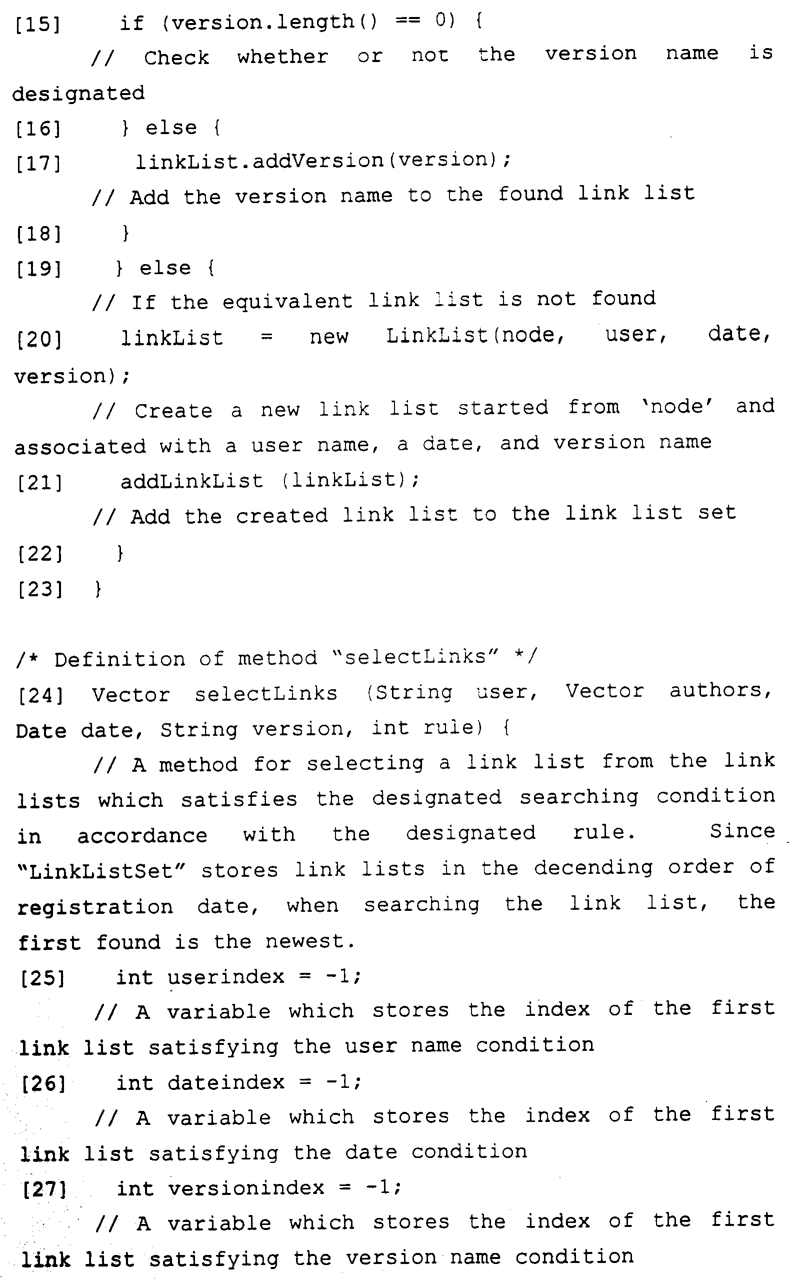

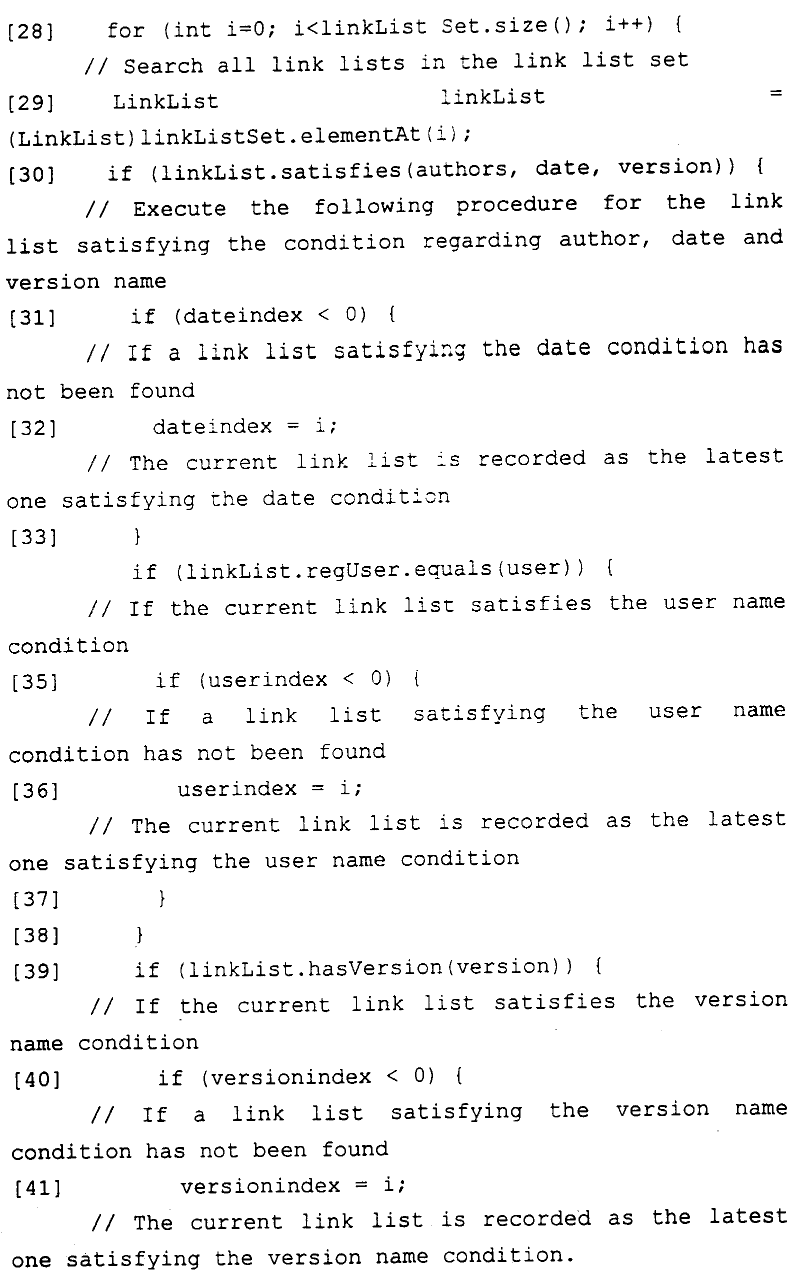

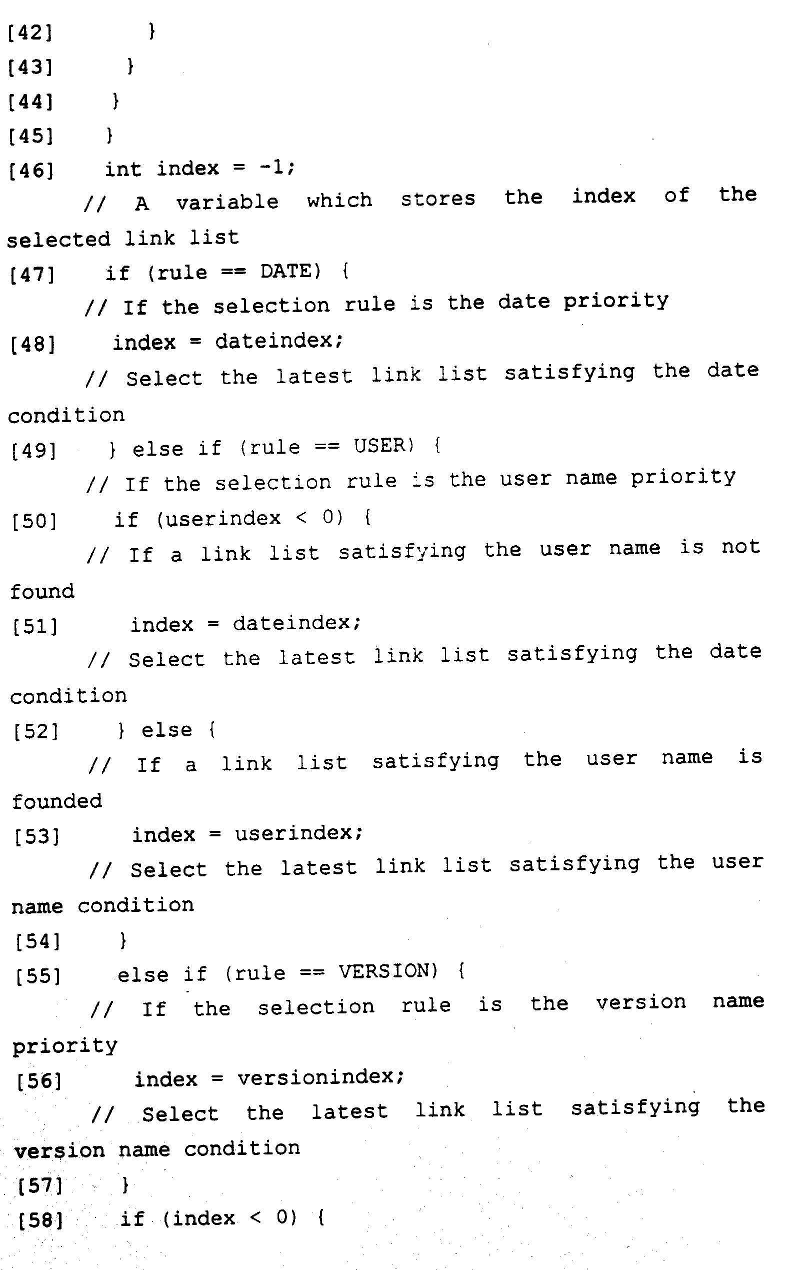

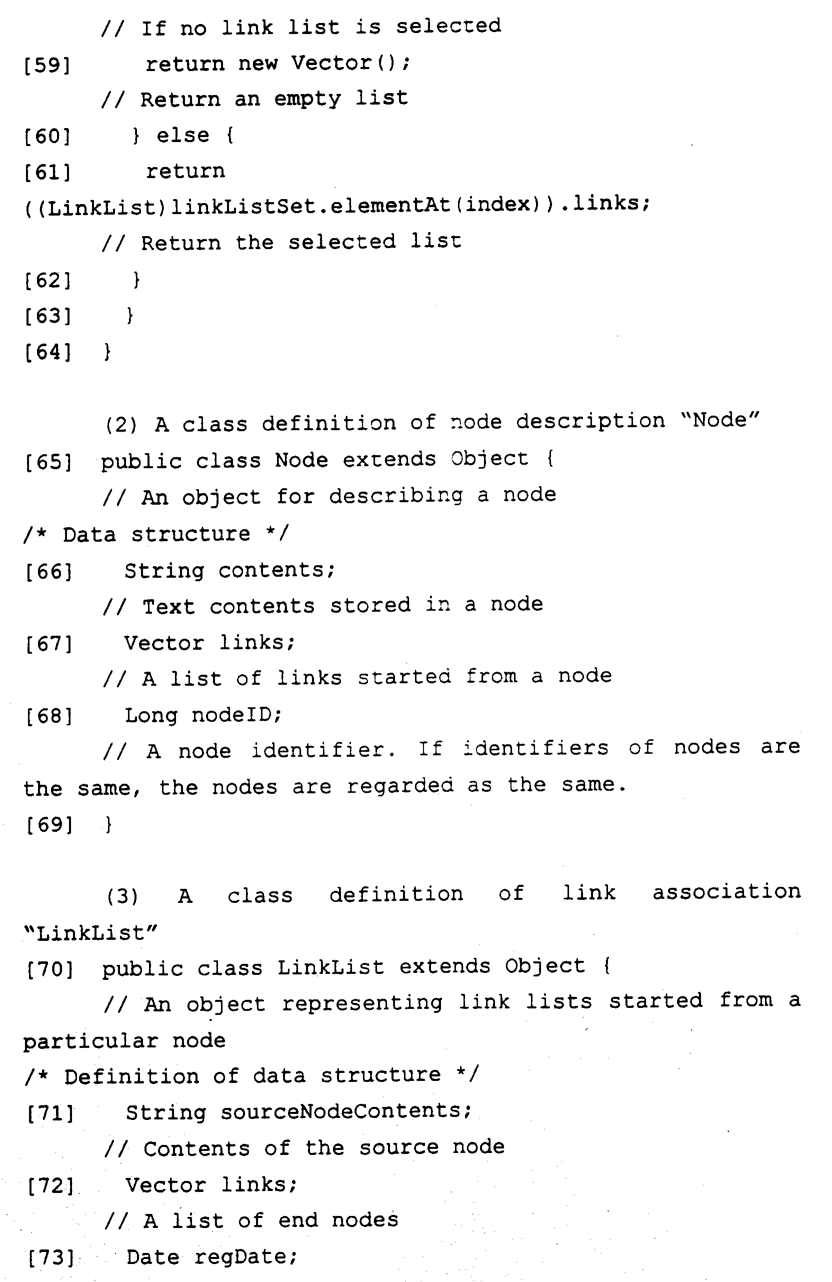

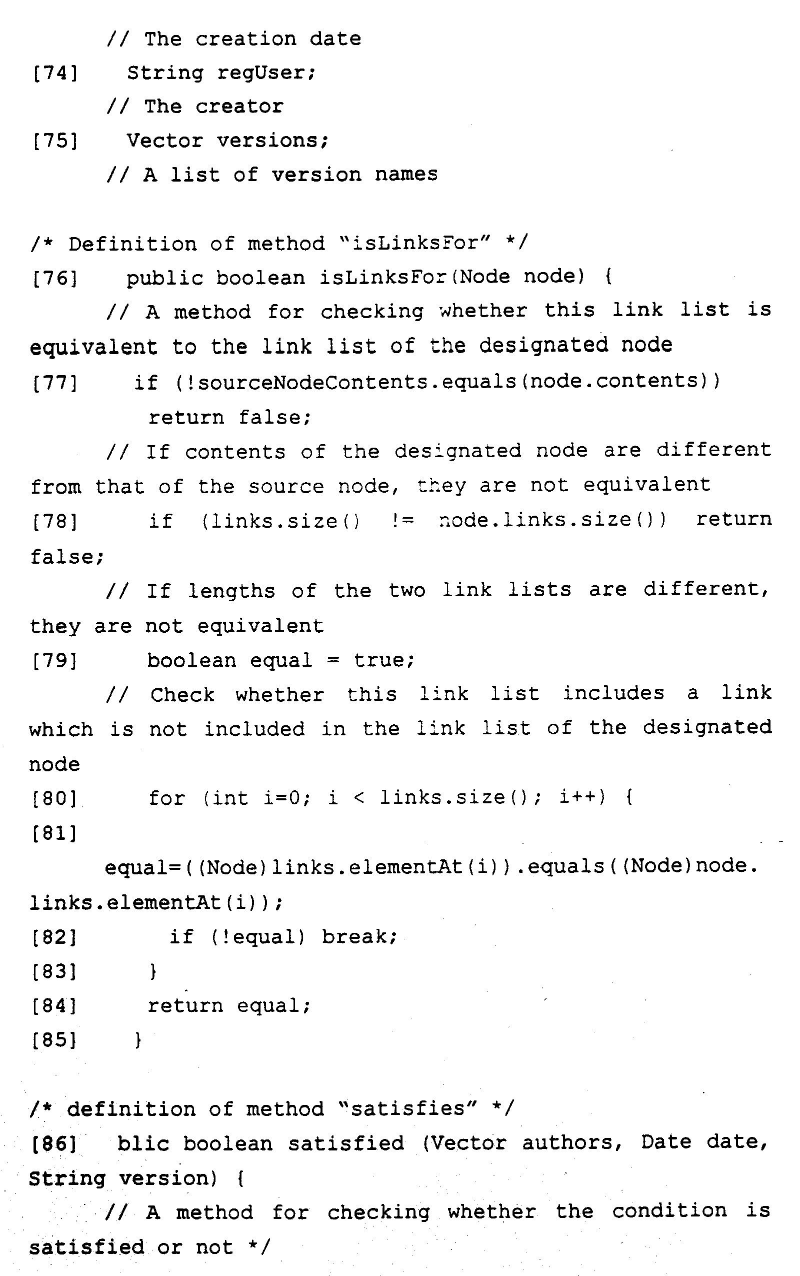

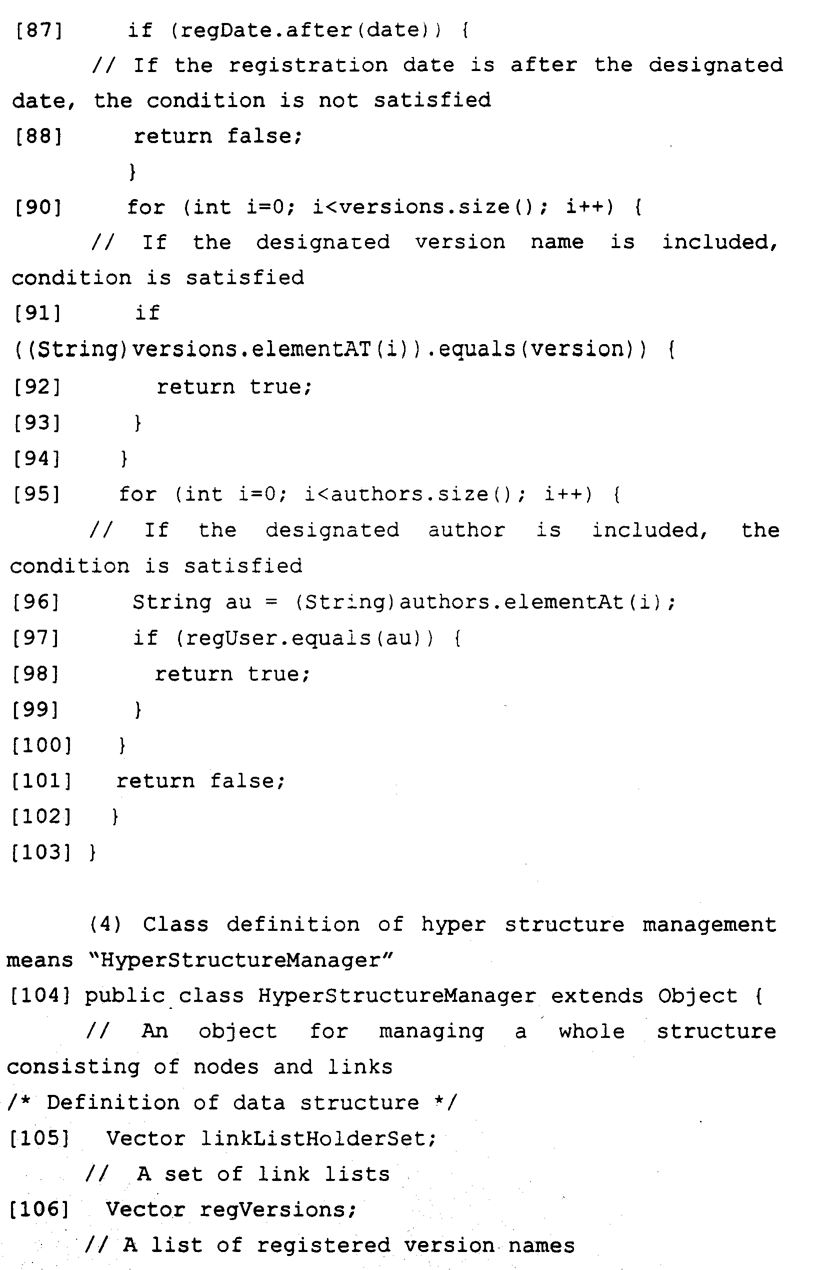

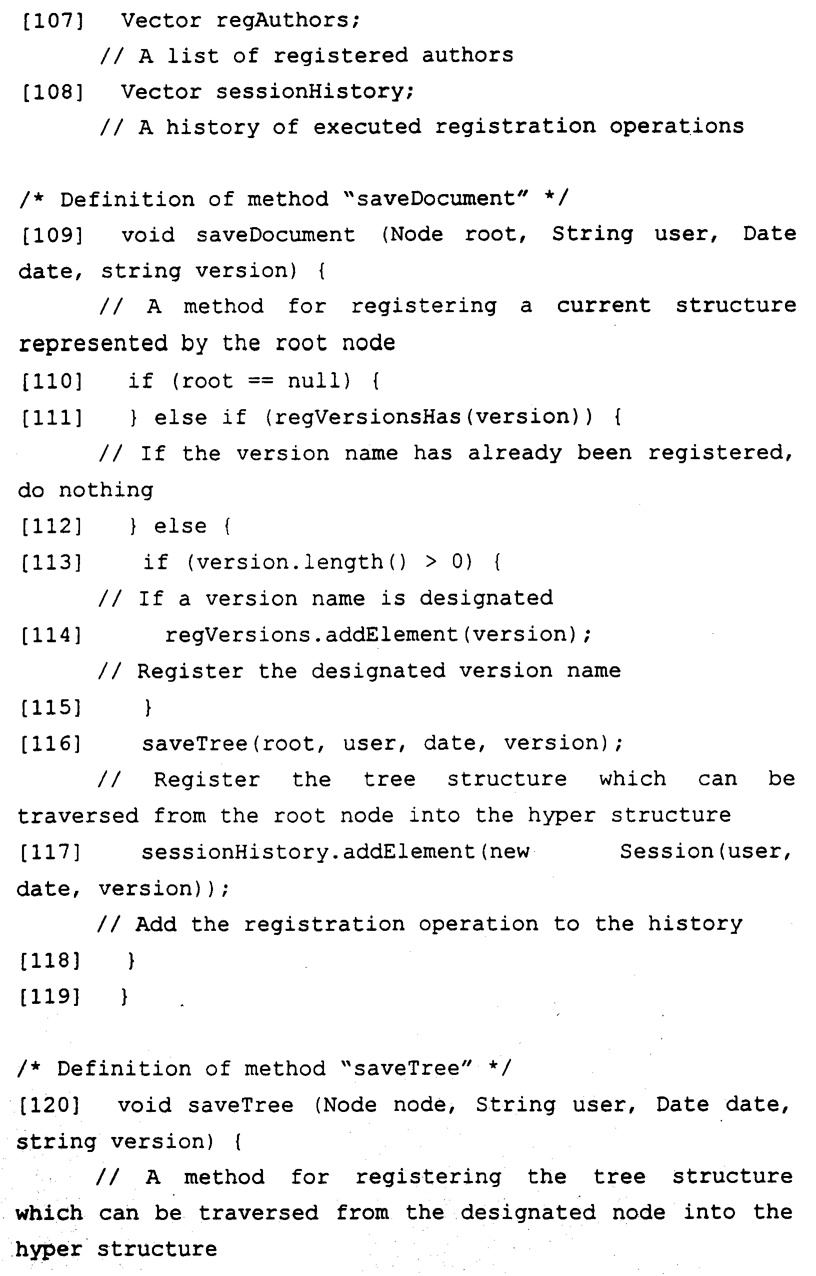

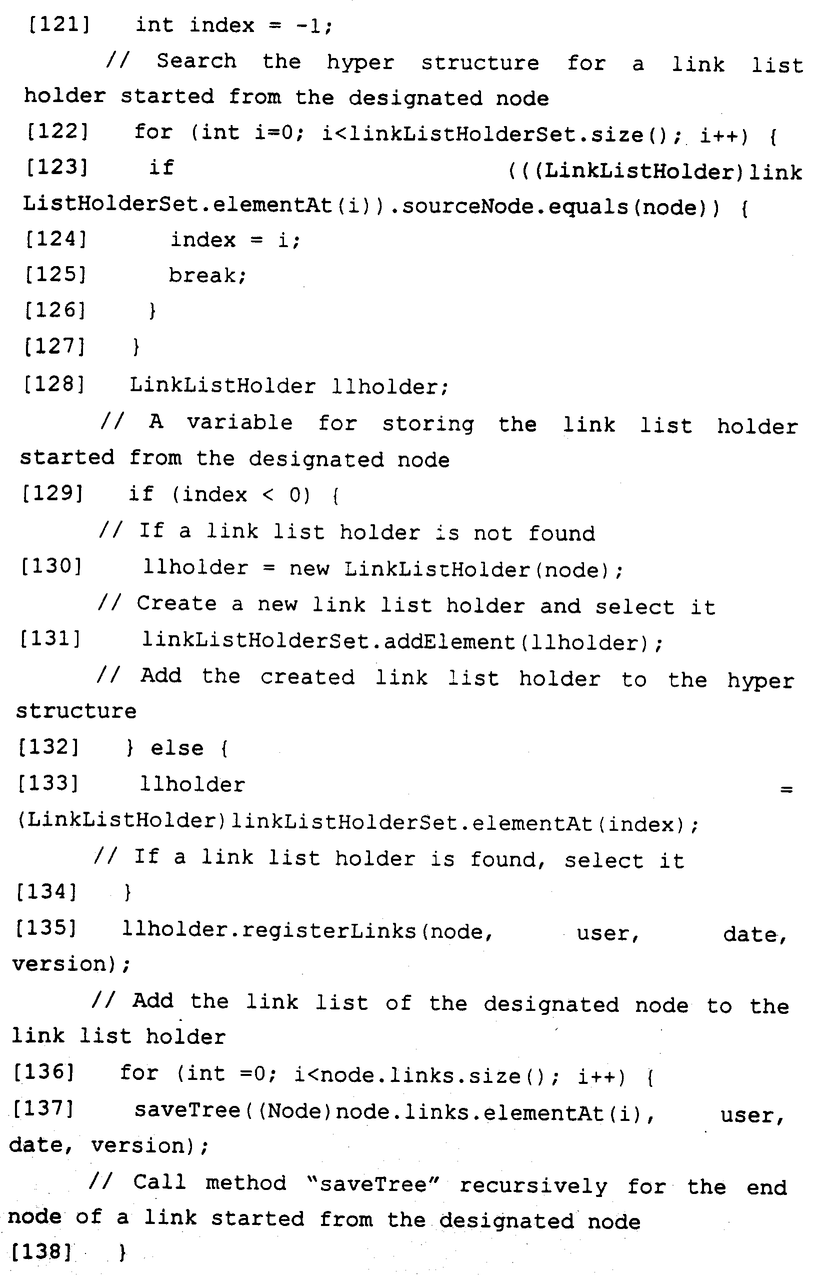

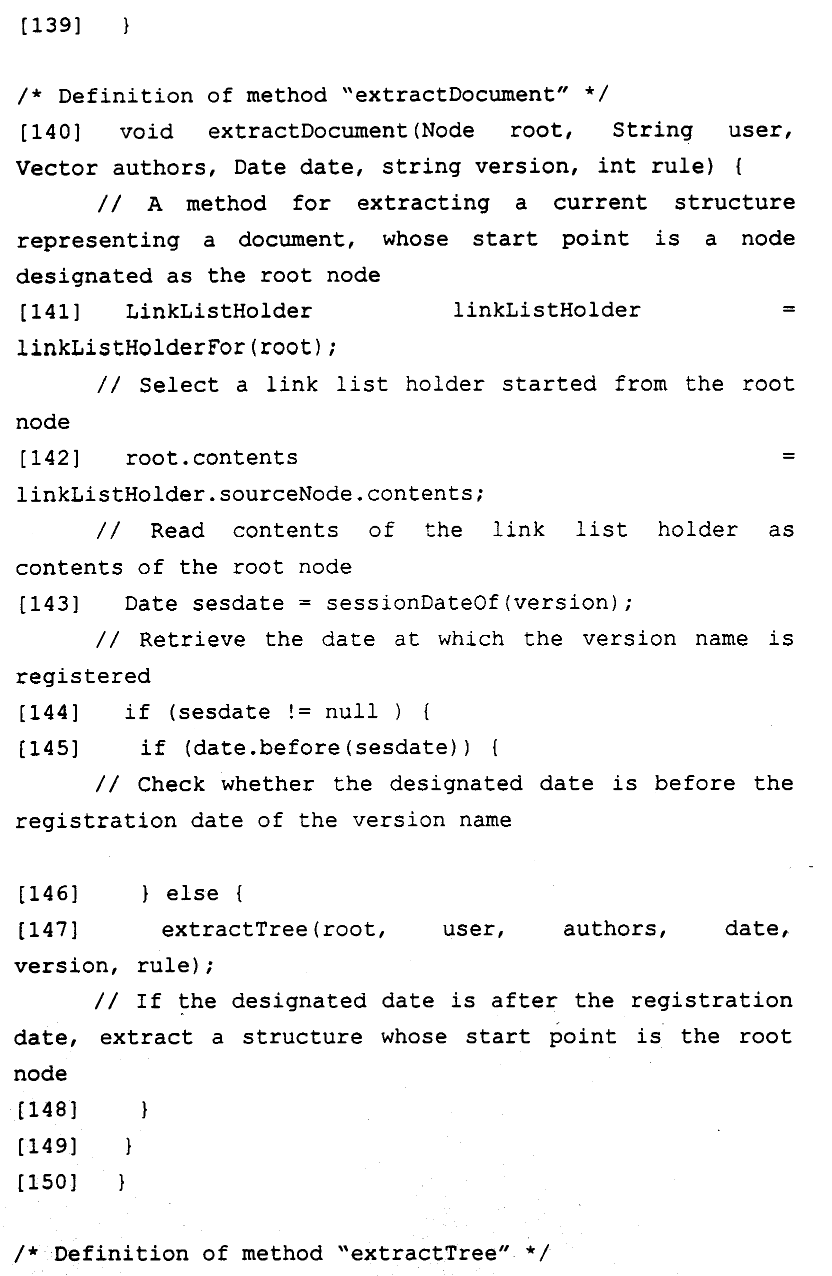

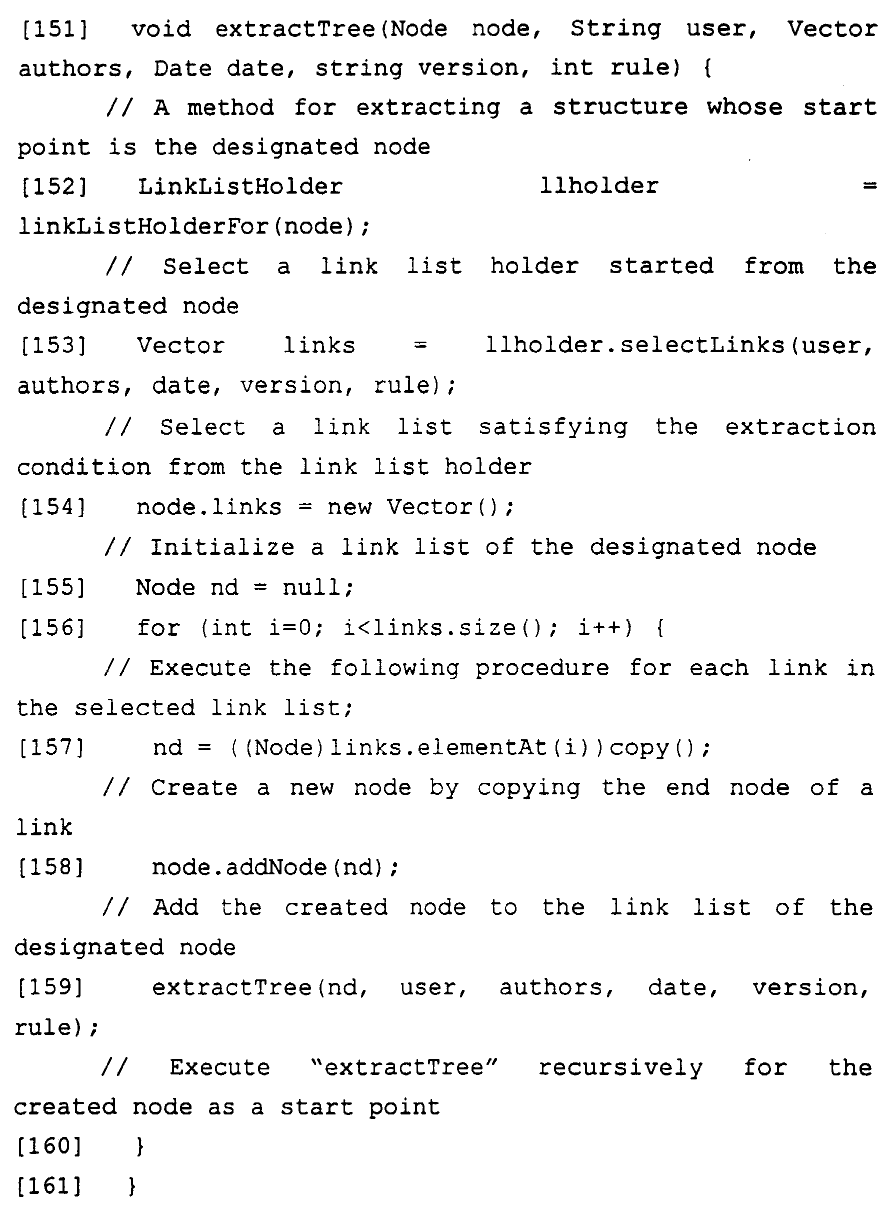

Figs. 75A through 75C shows data structures of main constituents of the embodiment. Fig. 75A shows a current structure, which is a data structure representing a document to be edited in the embodiment and is represented as a tree structure consisting of node descriptions 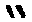 Node*"*s. The definition of an object described in lines 65 through 68 of the above-described program list shows the data structure of 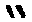 Node*"*, and includes the following description.

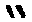 contents*"* includes contents of a document, which are character strings in the embodiment. 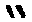 links*"* includes a list of at least one reference to 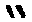 Node*"*, and represents a link association description defining a set of links started from a 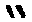 Node*"* and an order of the links in the set. 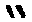 nodeID*"* has a node identifier, which is used for determining whether two nodes are the same or not.

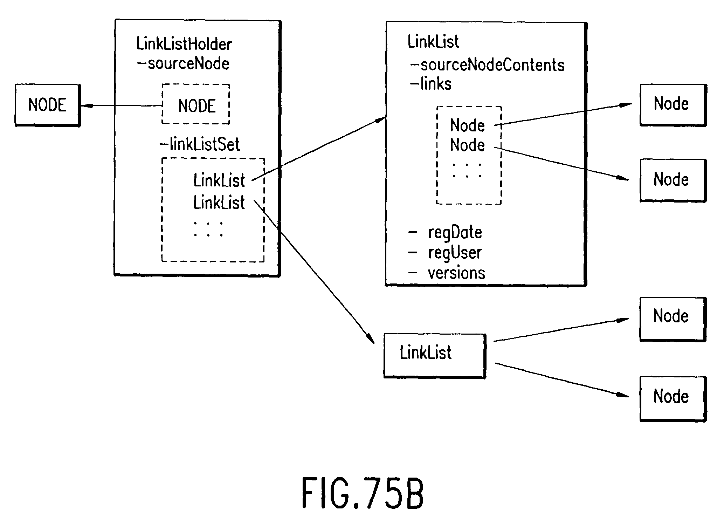

Fig. 75B shows a hyper structure, which is a data structure managed by the hyper structure management means 20, and is represented as a network structure of 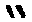 Node*"*s, which is structured by 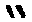 LinkList*"* and 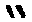 LinkListHolder*"* in the embodiment. While a structure of document data is constructed by using a reference of link from one 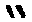 Node*"* to the other 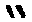 Node*"*, it is constructed from 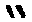 LinkList*"* and a reference from 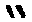 LinkListHolder*"* in the hyper structure. The hyper structure includes the following description.

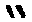 LinkList*"* is a link association which describes a set of links and relation among the links in the set. 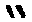 LinkList*"* also manages selection attributes associated with the link association descriptions. Lines 70 through 75 in the above-described program list shows the object definition of 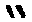 LinkList*"*.

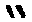 sourceNodeContents*"* stores document contents of the node which is the common start node of the links. 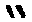 links*"* stores a list of references to the 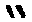 Node*"*s which are end nodes of the links. 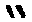 regDate*"* stores the creation date, which is treated as a selection attribute. 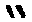 regUser*"* stores an author name, which is treated as a selection attribute. 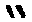 versions*"* stores a list of the version names, which is treated as a selection attribute.

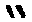 LinkListHolder*"* stores a set of 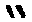 LinkList*"*s started from a particular 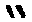 Node*"*, and lines 1 through 3 in the above-described program list shows the object definition thereof. 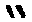 sourceNode*"* references 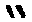 Node*"* representing the start node. 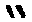 linkListSet*"* stores a set of 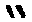 LinkList*"*s started from the common start node.

Fig. 75C shows a data structure managed by the hyper structure management means 20. In this embodiment, the hyper structure management means 20 is implemented as an object called 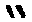 HyperStructureManager*"*. The 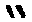 HyperStructureManager*"* manages the following information, and lines 65 through 68 in the above-described program list is the object definition thereof.

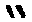 LinkListHolderSet*"* stores a set of 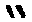 LinkListHolder*"*s. 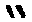 regVersions*"* stores a list of all version names which are registered at the time of registration of a current structure. 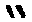 regAuhors*"* stores a list of authors who can edit this structure. 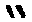 sessionHistory*"* stores history information of document registration operations applied for this structure.

Next, algorithms of this embodiment are explained with reference to the above-described program list.

Methods for 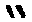 HyperStructureManager*"* includes 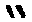 extractDocument*"* described in lines 140 through 150 of the program list, 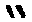 extractTree*"* described in lines 151 through 161, 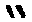 saveDocument*"* in lines 109 through 119, and 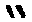 saveTree*"* in lines 120 through 138.

The 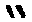 extractDocument*"* extracts a current structure started from the designated node, which is managed in the current structure management means 21, from the hyper structure, which is managed in the hyper structure management means 20. With the root node, the extraction process starts recursive execution of method 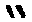 extractTree*"*, which extracts the structure descending to the designated node.

The 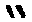 extractTree*"* extracts a data structure started from the designated node. It selects a link list satisfying the extraction condition from the link list holder started from the designated node, creates a node having contents of the selected link list, and executes the 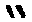 extractTree*"* recursively for the node referenced by the designated node.

The 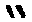 saveDocument*"* registers the current structure descending to the root node onto the hyper structure. To register the whole structure, this methods calls method 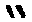 saveTree*"*, which registers nodes descending to a designated node, with the root node.

The 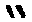 saveTree*"* registers the lower structure of the designated node to the hyper structure. This method adds a new link list if the link list holder started from the designated node does not have a link list corresponding to that stored in the node, and executes 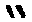 saveTree*"* recursively for the descending node of the designated node.

Methods for 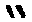 LinkListHolder*"* includes 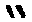 registerLinks*"* described in lines 4 through 23 of the program list, and 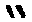 selectLinks*"* described in lines 24 through 64.

The 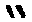 registerLinks*"* adds a link list stored in a node in the designated current structure to a link list set. At first, it checks whether a link list which corresponds to the link list to be added has already been registered in the link list set. If it has not been registered, the new link list is added. If it has been already registered and a version name is designated, the designated version name is associated with the link list.

The 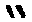 selectLinks*"* retrieves all link lists satisfying a selection condition from the stored link lists, and selects one from the retrieved link lists in accordance with a selection rule.

Methods for 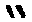 LinkList*"* includes 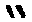 isLinkFor*"* described in lines 76 through 85 of the program list and 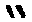 satisfies*"* described in lines 86 through 103.

The 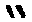 isLinksFor*"* determines whether a link list is equivalent to the link list included in the node in the current structure, and returns 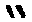 true*"* if two link lists are equivalent. Here, two link lists are equivalent if the node and link list have the same contents, the node includes the same set of links as the link list, and orders of the links are the same.

The 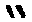 satisfies*"* determines whether a link list satisfies the selection condition, and returns 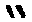 true*"* if a link list is created on or before the designated date, and is associated with the designated version name or is created by the designated author.

The extraction means 27 extracts a document structure from the hyper structure management means 20, by using the above-described algorithm according to the selection condition and selection rule designated by the extraction designation means 28, and stores the extracted document structure as an object to be edited by editing means 22 in the current management means 21.

Registration means 24 registers the edited document structure to the hyper structure management means 20. And when the registration is carried out, history management means 25 registers a history information of the registration.

Next, another embodiment which applies the structured data processing apparatus of the present invention to the editing of drawings, is explained. Since the configuration data structures and algorithms of this embodiment are essentially the same as those of the above-described structured data processing apparatus, redundant description is avoided and only different points are explained.

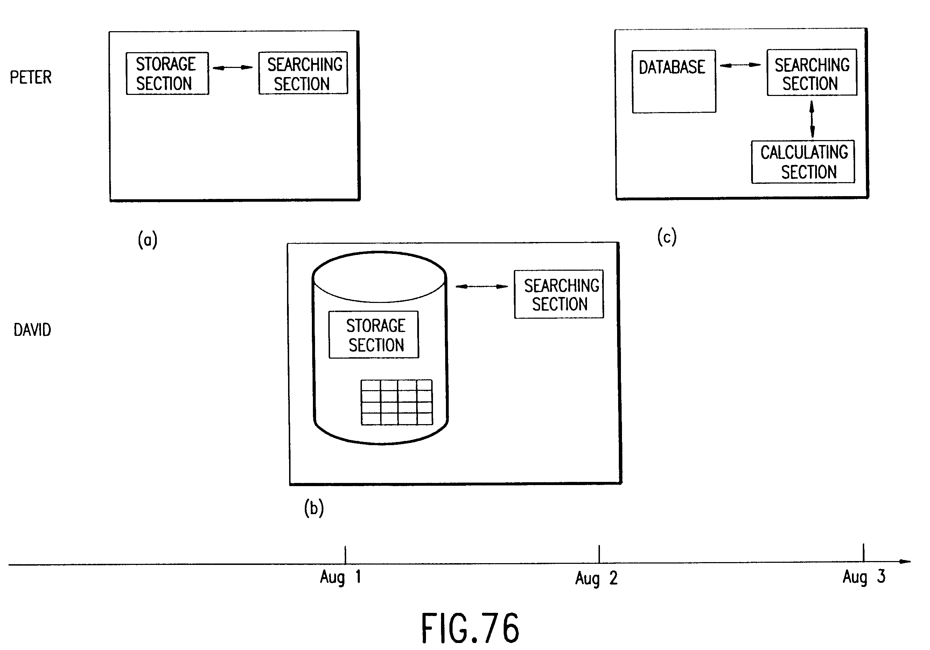

Fig. 76 shows an example of the editing process of drawings. In this figure, dates are on the horizontal axis, and author names are on the vertical axis. Each drawing indicated by (a), (b) or (c) is stored as a result of editing by the author corresponding to the position of the vertical axis, at the time corresponding to the position of the horizontal axis.

In this example, Peter creates and stores drawing (a) on 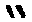 Aug 1*"*. Then, David replaces string 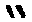 storage section*"*, which is included in drawing (a), with a graphical symbol of database as shown in drawing (b), and stores it on 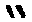 Aug 2*"*. Further, Peter adds string 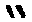 calculating section*"*, which is a new drawing element, to drawing (a) to create drawing (c), and stores it on 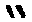 Aug 3*"*.

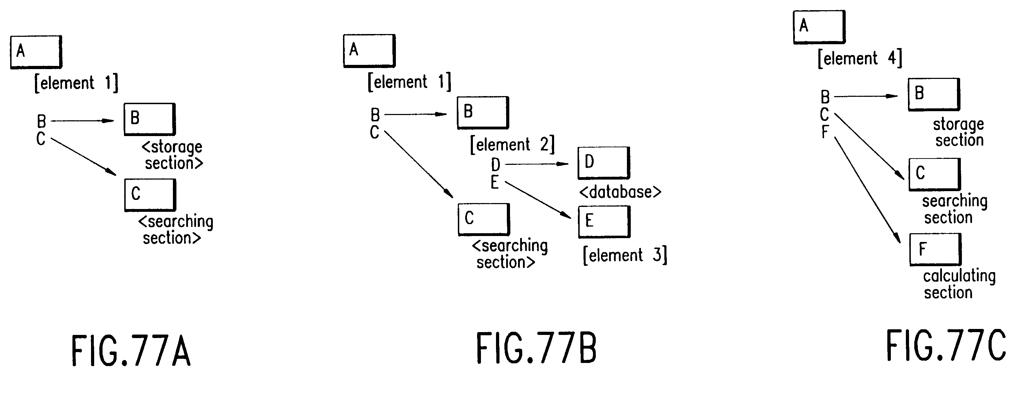

Figs. 77A through 77F show data structures of the drawings (a), (b) and (c) in Fig. 76. The differences of these data structures from that of the above-described embodiment are two points. First, document contents include drawing elements instead of text. Second, a link association defines two-dimensional positions instead of positions in a sequential order, which indicate a reference position in the drawing.

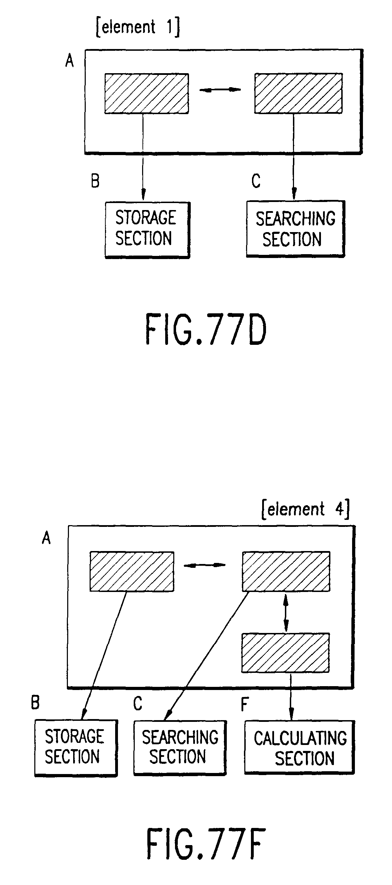

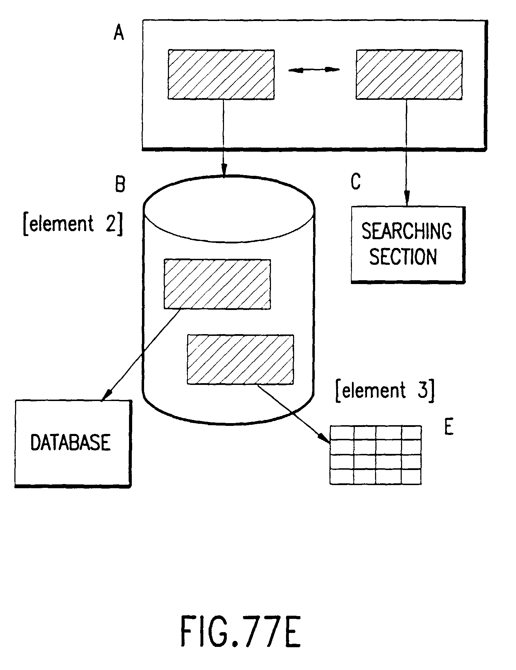

Figs. 77A, 77B and 77C show logical data structures of drawings (a), (b) and (c) in Fig. 76. Further, Figs. 77D, 77E and 77F show the same data structures in a form that indicates relationships of drawing elements, which include document contents and link associations.

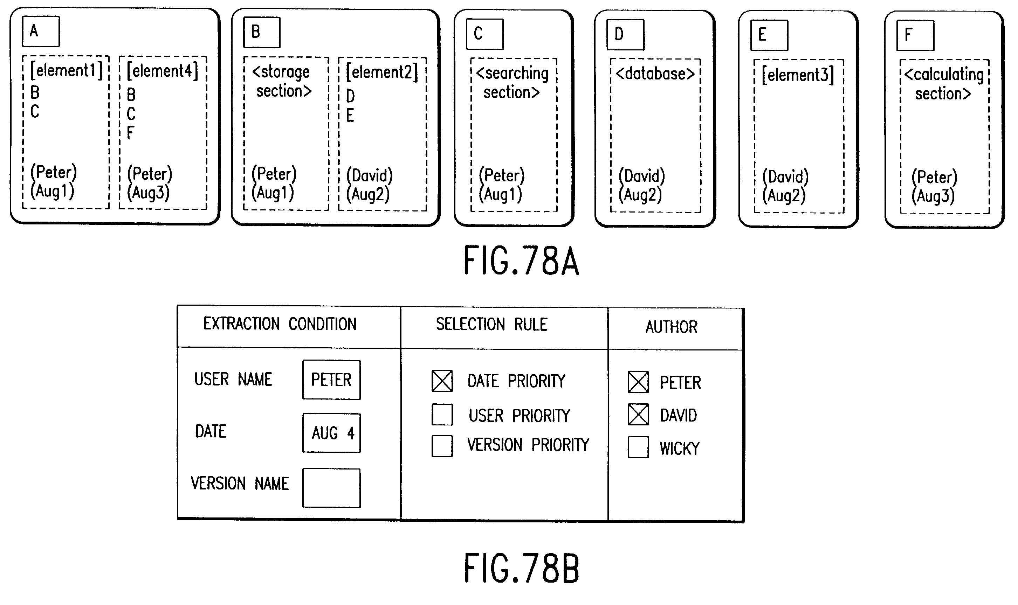

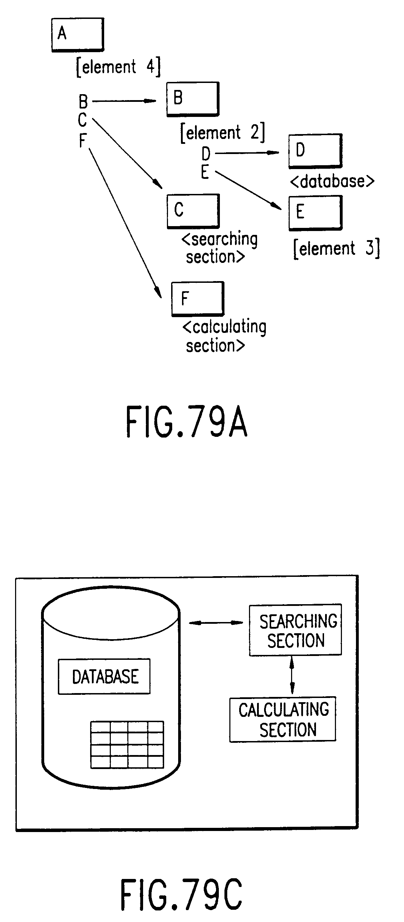

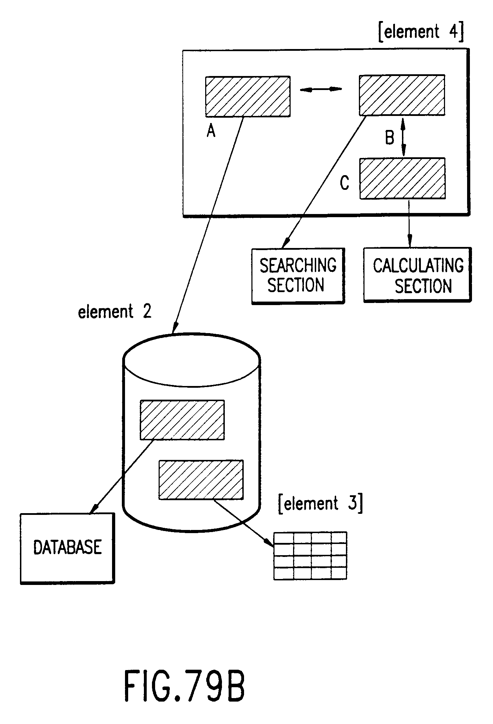

Fig. 78A shows a data structure of a hyper structure stored in the hyper structure management means 20. Fig. 78B shows a selection condition. According to the designation of the selection condition, a drawing shown in Figs. 79A, 79B and 79C is extracted as a current structure and managed in the current structure management means 21. Figs. 79A, 79B and 79C show data structures of a particular drawing in different forms. The data structure shown in Figs. 79A, 79B and 79C includes the latest states edited by Peter and David, that is, has not been before.

Next, another embodiment, which the structured data processing apparatus of the present invention is applied to the search of hypertext, is explained. The difference of this embodiment from the above-described embodiment is that the apparatus processes a tree structure generated as a history of search instead of a result of editing. But the data structures and algorithms are common in essence.

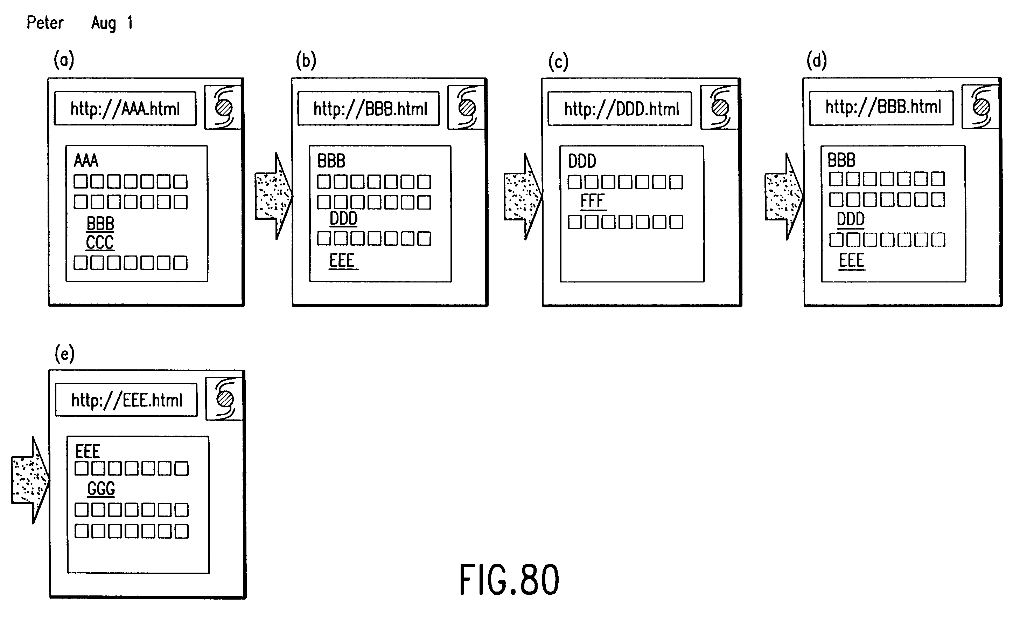

Fig. 80 shows an example of network search that Peter carries out for a investigation on 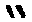 Aug 1*"*.

At the beginning, Peter opens a page of address 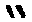 http://AAA.html*"*. When he selects an anchor 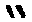 BBB*"* in the opened page to jump into page 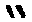 BBB*"*, a page of address 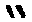 http://BBB.html*"* is opened. Further, when he selects an anchor 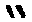 DDD*"* in the opened page to jump into page 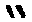 DDD*"*, a page of address 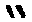 http://DDD.html*"* is opened. Then, when he instructs to go to the previous page in the page 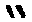 DDD*"*, a page of address 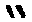 http://BBB.html*"* is opened. Further, when he selects an anchor 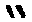 EEE*"* in the page 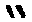 BBB*"* to jump into page 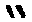 EEE*"*, a page of address 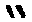 http://EEE.html*"* is opened.

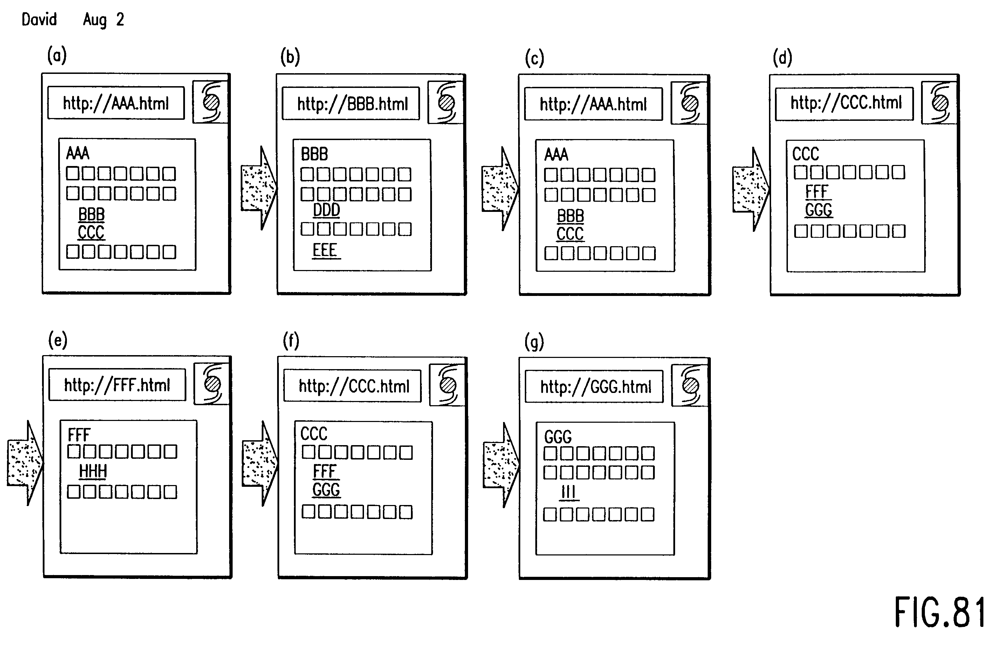

Fig. 81 shows an example of network search that David carries out for the same investigation as the Peter's on 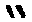 Aug 2*"*.

At the beginning, David opens a page of address 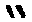 http://AAA.html*"*. When he selects an anchor 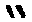 BBB*"* in the opened page to jump into page 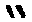 BBB*"*, a page of address 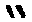 http:/BBB.html*"* is opened. When he instructs to go to the previous page in the opened page, a page of address 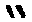 http://AAA.html*"* is opened. Then, when he selects an anchor 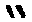 CCC*"* in the page 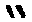 AAA*"* to jump into page 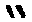 CCC*"*, a page of address 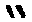 http://CCC.html*"* is opened. Further, when he selects an anchor 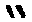 FFF*"* in the page 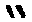 CCC*"* to jump into page 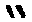 FFF*"*, a page of address 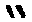 http://FFF.html is opened. And further when he instructs to go to the previous page, a page of address 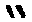 http://CCC.html*"* is opened. When he selects an anchor 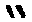 GGG*"* in the page 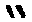 CCC*"* to jump into page 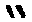 GGG*"*, a page of address 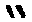 http://GGG.html*"* is opened.

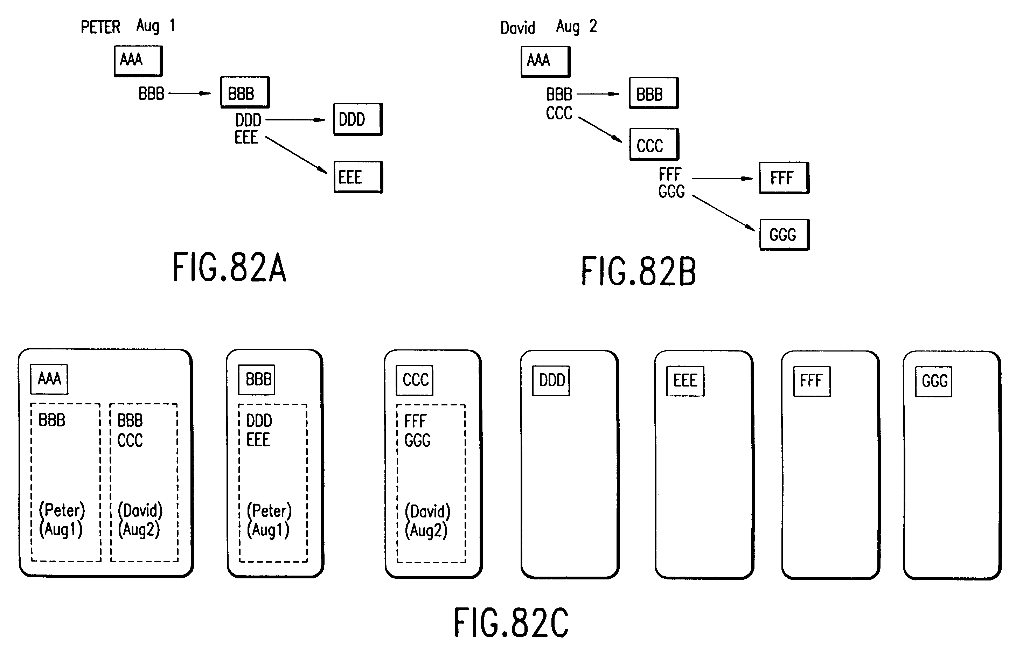

Figs. 82A and 82B respectively show tree structures of search histories carried out by Peter and David. Each of these tree structures represents a searched data space, which is generated by selecting a node with which the search starts as the root and connecting the links and nodes which are visited during the search. This embodiments adopts a conventional algorithm described in Laid-Open Hei 6-259312 as an algorithm to obtain a tree structure from a search history of hypertexts.

Fig. 82C shows a result that the current structure of the search history is registered to the hyper structure.

This embodiment obtains the hyper structure by combining plural partial structures of distributed network structure, such as WWW. The hyper structure can be stored in a local file of a client which executes search programs, or stored in distributed numberless servers which maintain the network.

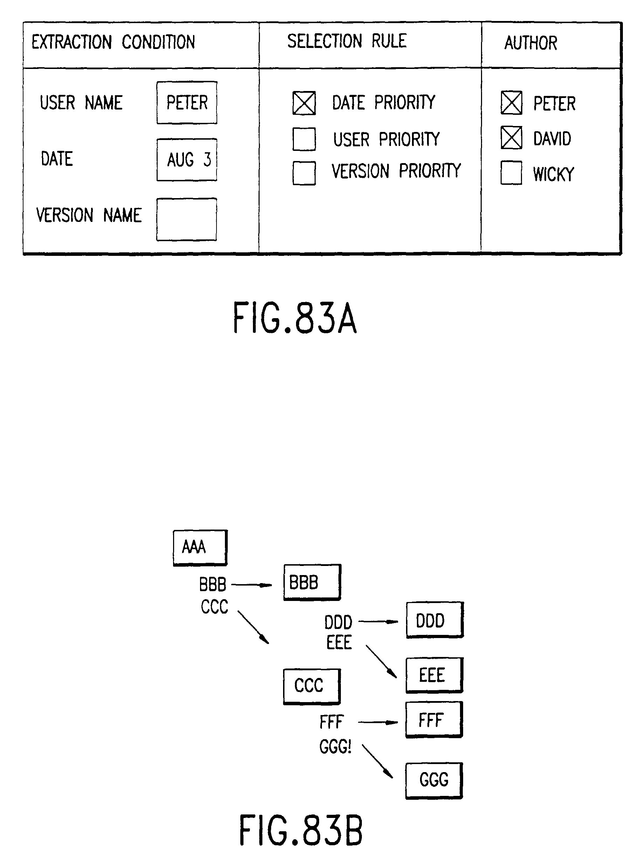

Fig. 83A shows a selection condition designated to extract a current structure from hyper structure management means 20. Fig. 83B shows a extracted current structure.

The extracted current structure represents a whole search space obtained by merging the investigations carried out by Peter and David, and has not been before.

This invention can be applied to various applications which need to manage both versions of parts and versions of the whole structure, and to combine them flexibly.

Further, this invention can incorporate new information which is written from plural viewpoints, into a data structure without restriction, and can create a document which is suit for a new situation by using parts of information structures created in the past. For example, when this invention is applied to the opinion exchanges in the distributed circumstances by using an electronic mail or electronic black board, a discussion in the past can be recovered and a new structure of information is constructed from parts of discussions in the past.

When this invention is applied to the system which manages so many documents as the authors cannot know each other, the system can provide a document database which does not cause problems even if the authors change the document directly by adding comments or correcting them, and further has a function to synthesize a new document.

Further, when this invention is applied to the management system of a structure representing a flow of electronic mails or a structure of organization, the system can provide a function which recovers a work flow in the past, and further uses recovered work flows to analyze and plan a job.

Further, when this invention is applied to the system for single user, as well as plural users, the system can provide a function which extracts appropriate parts from documents created in the past and reconstructs a required document from them to accomplish an unpredictable objectives at the beginning.

As described above, for dealing with a data structure represented as a graph structure consisting of nodes and links, the structured data processing apparatus according to this invention makes the link association storing means hold link sets each of which includes links associated with a particular editing process and are started from a particular node, and specify positions of each links in the set. Therefore, even if the user edits the structured data representing a graph structure, such as a document, at will without restriction on editing, an old data structure can be recovered and a new data structure which suits a new situation can be created.

Further, this invention can create a structured data which suits a new situation which is not unpredictable at the beginning, on the basis of the data created in the past.

In particular, in the document processing apparatus regarding the present invention, the document structure consists of the hierarchical structure of logical unit groups including a logical unit. When the editing process is carried out, a new logical unit group is created and stored in the same set as the logical unit group before editing. As a result, even if the whole structure of the document is changed by editing, the document structure before editing can be recovered. Therefore, even if an author edits the document at will without restriction on editing, the old document can be recovered without difficulties, and collaborative writing is realized without difficulties.

Further, in this invention, each of the logical unit groups is associated with selection information. As a result, the user can recover the appropriate old version of the document, carry out the editing process, or refer to any version of the document easily by simple operations, such as the designation of a selection condition including the selection information.

The invention has been described in detail with particular reference to preferred embodiments thereof, but it will be understood that variations and modifications can be effected with the spirit and scope of the invention.

## Claims

1. A data processing system for processing structured data represented as a graph structure composed of at least one node and one link, comprising:
node storing means 20 for storing information of the nodes of the structured data;
link storing means 20 for storing link information representing a relation of adjacency between two nodes of the structured data;
link association storing means 21 for storing at least one link set, which is a set of every link which is started from a particular node and is related to a particular editing process, and information of positioning relation among every link in each of the link sets;
current structure constructing means 20 for constructing current structured data to be processed by selecting one link set from a set of link sets each of which has a link whose starting node is a particular node;
editing means 22 for editing the link included in the current structured data constructed by the current structure constructing means 20; and
registration means 24 for creating a link set including the link edited by the editing means 22, and for registering the created link set into the link association storing means 21.

2. The data processing system of claim 1, wherein
the editing means 22 inserts a new node to the current structured data; and
the registration means 24 further registers information of the inserted new node to the node storing means 20.

3. The data processing system of claim 1, which further comprises:
selection information associating means 4 for associating selection information regarding the editing process with the link set created by the registration means 24.

4. The data processing system of claim 3, wherein
the selection information associating means 4 associates version information as the selection information with the link set created by the registration means 24 and a link set included in the current structured data.

5. The data processing system of claim 3, which further comprises:
condition input means 35 for inputting a selection condition including the selection information associated with the link set;
link set extracting means 27 for extracting at least one link set associated with the selection information which satisfies the selection condition inputted by the condition input means 35; and
the current structure constructing means constructing the structured data to be processed in accordance with the link sets extracted by the link set extracting means 27.

6. The data processing system of claim 5, wherein
when the link set extracting means 27 extracts a plurality of link sets, each of which includes a link whose starting node is a particular node, the link set extracting means 27 further selects one link set from the extracted plurality of link sets each of which has the link whose starting node is the particular node, in accordance with a defined selection rule; and
the current structure constructing means 20 constructs the current structured data in accordance with the selected link set.

7. The data processing system of claim 6, wherein the link set extraction means 27 selects the link set associated with specific user information as the selection information in accordance with the defined selection rule.

8. The data processing system of claim 6, wherein the link set extraction means 27 selects the link set associated with a latest update date information as the selection information in accordance with the defined selection rule.

9. The data processing system of claim 6, wherein the link set extraction means 27 selects the link set associated with specific version information as the selection information in accordance with the defined selection rule.

10. The data processing system of claim 5, which further comprises:
link set display means 30 for displaying information to identify each of the link sets stored in the link association storing means;
selection receiving means 31 for receiving a selection command to specify one of the link sets displayed by the link set display means;
reconstructing means 32 for instructing the current structure constructing means 20 to reconstruct the current structured data in accordance with the link set specified by the selection command.

11. The structured data processing system of claim 3, which further comprises:
history storing means 25 for storing a history, which is a list of selection information stored at every time that said selection information associating means 4 associates the selection information with the link set; and
history display means 26 for displaying the history stored by the history storing means.
